(19) Europäisches Patentamt
European Patent Office
Office européen des brevets

(11) EP 4 369 823 A1

(12) # EUROPEAN PATENT APPLICATION
published in accordance with Art. 153(4) EPC

(43) Date of publication:
**15.05.2024 Bulletin 2024/20**

(21) Application number: **22851822.1**

(22) Date of filing: **08.07.2022**

(51) International Patent Classification (IPC):
***H04W 72/04*** *(2023.01)*

(52) Cooperative Patent Classification (CPC):
**H04L 5/00; H04W 72/04; H04W 72/0446; H04W 72/0453; H04W 72/12; H04W 72/121; H04W 72/512**

(86) International application number:
**PCT/CN2022/104676**

(87) International publication number:
**WO 2023/011108 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021 CN 202110896815**

(71) Applicant: **Huawei Technologies Co., Ltd.**
**Longgang**
**Shenzhen, Guangdong 518129 (CN)**

(72) Inventors:
- **GONG, Mingxin**
  **Shenzhen, Guangdong 518129 (CN)**
- **LI, Bo**
  **Shenzhen, Guangdong 518129 (CN)**
- **QU, Bingyu**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **COMMUNICATION METHOD AND COMMUNICATION APPARATUS**

(57) This application provides a communication method and a communication apparatus. The method includes: predefining at least two reference signal sets, where minimum cyclic shift intervals respectively corresponding to the at least two reference signal sets are different from each other, the at least two reference signal sets occupy a same time-frequency resource, and code division orthogonality is performed between different reference signals in a same reference signal set. When a reference signal is allocated to a first terminal, a minimum cyclic shift interval corresponding to a delay spread amount requirement of the first terminal may be determined based on the delay spread amount requirement of the first terminal, and one or more reference signals may be selected from a reference signal set corresponding to the minimum cyclic shift interval and configured for the first terminal, so that the reference signal is flexibly and efficiently configured for the first terminal based on the delay spread amount requirement of the first terminal.

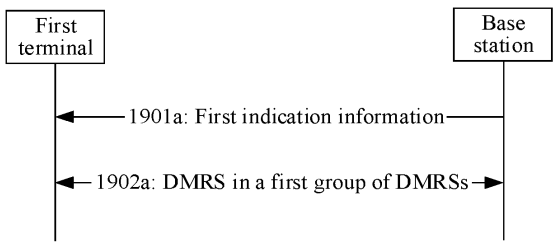


FIG. 19(a)

EP 4 369 823 A1

## Description

## CROSS-REFERENCE TO RELATED APPLICATIONS

This application claims priority to Chinese Patent Application No. 202110896815.2, filed with the China National Intellectual Property Administration on August 5, 2021 and entitled "COMMUNICATION METHOD AND COMMUNICATION APPARATUS", which is incorporated herein by reference in its entirety.

## TECHNICAL FIELD

This application relates to the field of wireless communication technologies, and in particular, to a communication method and a communication apparatus.

## BACKGROUND

A demodulation reference signal (demodulation reference signal, DMRS) is a reference signal used for uplink or downlink channel estimation to demodulate data. In a conventional communication system, to increase spectral efficiency, a plurality of layers of data may be transmitted on a same time-frequency resource. DMRSs and the data are sent together, and each layer of data corresponds to one DMRS. To better perform channel estimation and data demodulation, a plurality of DMRSs corresponding to the plurality of layers of data are orthogonal.

In a conventional new radio (new radio, NR) system, downlink single user-multiple input and multiple output (single user-multiple input and multiple output, SU-MIMO) supports a maximum of eight layers, and uplink SU-MIMO supports a maximum of four layers. A radio access network device needs to allocate a DMRS group based on a quantity of transport layers of a user. Both uplink and downlink multi user-multiple input and multiple output (multi user-multiple input and multiple output, MU-MIMO) support a maximum of twelve transport layers, where a maximum of four layers is supported for each user. Before data transmission, the radio access network device needs to allocate a corresponding DMRS to the user based on a quantity of transport layers, a channel condition, and the like that are of the user, and each layer corresponds to one DMRS.

Currently, when the corresponding DMRS is allocated to the user, a delay spread amount of the user is limited by an allowable delay spread amount of the DMRS. In a conventional technology, a delay spread amount requirement of the user cannot be considered when the DMRS is allocated to the user, and consequently, a problem of insufficient flexibility and low efficiency of DMRS allocation is caused.

## SUMMARY

This application provides a communication method and a communication apparatus, to allocate a corresponding reference signal to a terminal based on a delay spread amount requirement of the terminal, to implement flexible and efficient allocation of the reference signal.

According to a first aspect, an embodiment of this application provides a communication method. The method may be performed by a radio access network device or a module (for example, a chip) used in the radio access network device. The method includes: sending first indication information to a first terminal, where the first indication information indicates a first group of reference signals, the first group of reference signals include at least one reference signal, the reference signal in the first group of reference signals belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource; and sending the at least one reference signal in the first group of reference signals to the first terminal, or receiving the at least one reference signal in the first group of reference signals from the first terminal.

According to the foregoing solution, the at least two reference signal sets are predefined, where the minimum cyclic shift intervals respectively corresponding to the at least two reference signal sets are different from each other, and the at least two reference signal sets occupy the same time-frequency resource. Therefore, code division orthogonal multiplexing is performed between different reference signals in a same reference signal set. When a reference signal is allocated to the first terminal, a minimum cyclic shift interval corresponding to a delay spread amount requirement of the first terminal may be determined based on the delay spread amount requirement of the first terminal, and one or more reference signals may be selected from a reference signal set corresponding to the minimum cyclic shift interval and configured for the first terminal, so that the reference signal is flexibly and efficiently configured for the first terminal based on the delay spread amount requirement of the first terminal.

In a possible implementation method, the first indication information further indicates a first minimum cyclic shift interval, and the first minimum cyclic shift interval corresponds to the first reference signal set.

According to the foregoing solution, the first terminal may determine the first minimum cyclic shift interval based on the first indication information, determine the first reference signal set based on the first minimum cyclic shift interval, and accurately learn of, based on the first reference signal set and the first indication information, reference signals that are in the first reference signal set and that include a reference signal indicated by the first indication information. This helps the first terminal accurately determine the reference signal indicated by the first indication information, thereby improving communication efficiency and accuracy. In addition, the first indication information not only indicates the first group of reference signals, but also indicates the first minimum cyclic shift interval. In comparison with respectively indicating the first group of reference signals and the first minimum cyclic shift interval by using two different pieces of indication information, this solution can reduce signaling overheads.

In a possible implementation method, second indication information is sent to the first terminal, where the second indication information indicates a first minimum cyclic shift interval, and the first minimum cyclic shift interval corresponds to the first reference signal set.

According to the foregoing solution, the first terminal may determine the first minimum cyclic shift interval based on the second indication information, determine the first reference signal set based on the first minimum cyclic shift interval, and accurately learn of, based on the first reference signal set and the first indication information, reference signals that are in the first reference signal set and that include a reference signal indicated by the first indication information. This helps the first terminal accurately determine the reference signal indicated by the first indication information, thereby improving communication efficiency and accuracy. In addition, in this solution, the first group of reference signals and the first minimum cyclic shift interval are respectively indicated by using two different pieces of indication information. Therefore, a sending frequency of the second indication information may be flexibly adjusted, to reduce signaling overheads. For example, the second indication information is sent once in a piece of specified duration, and a plurality of pieces of first indication information may be sent in the specified duration. Therefore, in the duration, reference signals indicated to the first terminal by using different first indication information come from a same reference signal set, and the reference signal set is determined based on the second indication information. Because a sending frequency of the second indication information is reduced, signaling overheads are reduced.

In a possible implementation method, each reference signal in the at least two reference signal sets corresponds to one cyclic shift value, the first group of reference signals include at least two reference signals, the at least two reference signals belong to the first reference signal set, and cyclic shift values corresponding to the at least two reference signals are adjacent.

According to the foregoing solution, if cyclic shift values corresponding to the at least two reference signals indicated by the first indication information are adjacent, cyclic shift orthogonal space corresponding to the two reference signals is consecutive, that is, cyclic shift orthogonal space that has been allocated to the first terminal is consecutive. Therefore, remaining cyclic shift orthogonal space is also consecutive, so that the remaining cyclic shift orthogonal space can be flexibly allocated to another terminal. The another terminal and the first terminal may have a same delay spread amount requirement, or may have different delay spread amount requirements. According to the method, code division multiplexing may be performed on reference signals between terminals having different delay spread amount requirements. Therefore, flexible and efficient allocation of the reference signals can be implemented, and a code division multiplexing capability can be fully utilized.

In a possible implementation method, that cyclic shift values respectively corresponding to the at least two reference signals are adjacent includes: Indexes of the cyclic shift values respectively corresponding to the at least two reference signals are consecutive, where the index of the cyclic shift value is for identifying the cyclic shift value.

According to the foregoing solution, the cyclic shift value is uniquely identified by using the index of the cyclic shift value, and indexes of adj acent cyclic shift values that correspond to the cyclic shift values are consecutive. With reference to the method, during specific implementation, the foregoing first indication information may indicate at least two consecutive indexes of cyclic shift values, to indicate, to the terminal, at least two reference signals corresponding to consecutive cyclic shift orthogonal space. The method is simple and easy to implement.

In a possible implementation method, third indication information is sent to the first terminal, where the third indication information indicates a cyclic shift segment size of the first group of reference signals.

According to the foregoing solution, a cyclic shift segment size indicates a size of cyclic shift space or orthogonal code division space occupied by a reference signal, and the third indication information indicates the cyclic shift segment size corresponding to the first group of reference signals allocated to the first terminal. Therefore, the third indication information indicates a size of cyclic shift space or orthogonal code division space occupied by the first group of reference signals allocated to the first terminal, so that the first terminal can accurately learn of an occupation status of the first terminal on the cyclic shift space or the orthogonal code division space. This helps the first terminal accurately learn of a resource usage of the first terminal.

In a possible implementation method, fourth indication information is sent to a second terminal, where the fourth indication information indicates a second group of reference signals, the second group of reference signals include at least one reference signal, the reference signal in the second group of reference signals belongs to a second reference

signal set, the second reference signal set is one of the at least two reference signal sets, and the second reference signal set is different from the first reference signal set.

According to the foregoing solution, when a reference signal is allocated to a terminal (for example, the first terminal or the second terminal), a minimum cyclic shift interval corresponding to a delay spread amount requirement of the terminal may be determined based on the delay spread amount requirement of the terminal, and one or more reference signals may be selected from a reference signal set corresponding to the minimum cyclic shift interval and configured for the terminal, so that the reference signal is flexibly and efficiently configured for the terminal based on the delay spread amount requirement of the terminal. In addition, when a plurality of terminals perform code division orthogonal multiplexing on reference signals, reference signals in different reference signal sets may be configured for different terminals, so that code division orthogonal multiplexing is performed on the reference signals between the plurality of terminals, thereby reducing time-frequency resource overheads. In addition, because minimum cyclic shift intervals corresponding to different reference signal sets are different from each other, code division orthogonal multiplexing may be performed on the reference signals between the terminals having different delay spread amount requirements, that is, code division multiplexing is performed between a terminal having a low delay spread amount requirement and a terminal having a high delay spread amount requirement, thereby fully improving a code division orthogonal multiplexing capability.

In a possible implementation method, third indication information is sent to the first terminal, where the third indication information indicates a cyclic shift segment size of the first group of reference signals, and fifth indication information is sent to the second terminal, where the fifth indication information indicates a cyclic shift segment size of the second group of reference signals, where the cyclic shift segment size of the first group of reference signals is different from the cyclic shift segment size of the second group of reference signals.

According to the foregoing solution, a cyclic shift segment size indicates a size of cyclic shift space or orthogonal code division space occupied by a reference signal, and the third indication information indicates the cyclic shift segment size corresponding to the first group of reference signals allocated to the first terminal. Therefore, the third indication information indicates a size of cyclic shift space or orthogonal code division space occupied by the first group of reference signals allocated to the first terminal, so that the first terminal can accurately learn of an occupation status of the first terminal on the cyclic shift space or the orthogonal code division space. This helps the first terminal accurately learn of a resource usage of the first terminal. Similarly, the second terminal may also learn of a resource usage of the second terminal. In addition, because the cyclic shift segment size of the first group of reference signals allocated to the first terminal is different from the cyclic shift segment size of the second group of reference signals allocated to the second terminal, cyclic shift space or orthogonal code division space of different sizes may be flexibly allocated to the terminals having different delay spread amount requirements.

In a possible implementation method, N reference signals allocated to at least two terminals are in a one-to-one correspondence with N cyclic shift values, the at least two terminals include the first terminal and the second terminal, the N reference signals include the first group of reference signals and the second group of reference signals, the N cyclic shift values are different from each other, the N cyclic shift values correspond to N cyclic shift intervals, any one of the N cyclic shift intervals indicates an interval that is between two cyclic shift values whose values are adjacent and that is in the N cyclic shift intervals, at least two of the N cyclic shift intervals have different values, and N is an integer greater than 1.

According to the foregoing solution, because the at least two of the N cyclic shift intervals corresponding to the N reference signals allocated to different terminals have different values, it indicates that the cyclic shift space or the orthogonal code division space is not allocated to each terminal in a completely uniform manner, that is, the cyclic shift space or the orthogonal code division space is allocated to the terminals having different delay spread amount requirements. Therefore, in the method, the cyclic shift space or the orthogonal code division space of different sizes may be flexibly allocated to the terminals having different delay spread amount requirements.

According to a second aspect, an embodiment of this application provides a communication method. The method may be performed by a terminal or a module (for example, a chip) used in the terminal. The method includes: receiving first indication information from a radio access network device, where the first indication information indicates a first group of reference signals, the first group of reference signals include at least one reference signal, the reference signal in the first group of reference signals belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource; and obtaining the at least one reference signal in the first group of reference signals based on the first indication information.

According to the foregoing solution, the at least two reference signal sets are predefined, where the minimum cyclic shift intervals respectively corresponding to the at least two reference signal sets are different from each other, and the at least two reference signal sets occupy the same time-frequency resource. Therefore, code division multiplexing is performed between different reference signals in a same reference signal set. When a reference signal is allocated

to the terminal, a minimum cyclic shift interval corresponding to a delay spread amount requirement of the terminal may be determined based on the delay spread amount requirement of the terminal, and one or more reference signals may be selected from a reference signal set corresponding to the minimum cyclic shift interval and configured for the terminal, so that the reference signal is flexibly and efficiently configured for the terminal based on the delay spread amount requirement of the terminal.

In a possible implementation method, the first indication information further indicates a first minimum cyclic shift interval, and the first minimum cyclic shift interval corresponds to the first reference signal set.

According to the foregoing solution, the terminal may determine the first minimum cyclic shift interval based on the first indication information, determine the first reference signal set based on the first minimum cyclic shift interval, and accurately learn of, based on the first reference signal set and the first indication information, reference signals that are in the first reference signal set and that include a reference signal indicated by the first indication information. This helps the terminal accurately determine the reference signal indicated by the first indication information, thereby improving communication efficiency and accuracy. In addition, the first indication information not only indicates the first group of reference signals, but also indicates the first minimum cyclic shift interval. In comparison with respectively indicating the first group of reference signals and the first minimum cyclic shift interval by using two different pieces of indication information, this solution can reduce signaling overheads.

In a possible implementation method, second indication information is received from the radio access network device, where the second indication information indicates a first minimum cyclic shift interval, and the first minimum cyclic shift interval corresponds to the first reference signal set.

According to the foregoing solution, the terminal may determine the first minimum cyclic shift interval based on the second indication information, determine the first reference signal set based on the first minimum cyclic shift interval, and accurately learn of, based on the first reference signal set and the first indication information, reference signals that are in the first reference signal set and that include a reference signal indicated by the first indication information. This helps the terminal accurately determine the reference signal indicated by the first indication information, thereby improving communication efficiency and accuracy. In addition, in this solution, the first group of reference signals and the first minimum cyclic shift interval are respectively indicated by using two different pieces of indication information. Therefore, a sending frequency of the second indication information may be flexibly adjusted, to reduce signaling overheads. For example, the second indication information is sent once in a piece of specified duration, and a plurality of pieces of first indication information may be sent in the specified duration. Therefore, in the duration, reference signals indicated to the terminal by using different first indication information come from a same reference signal set, and the reference signal set is determined based on the second indication information. Because a sending frequency of the second indication information is reduced, signaling overheads are reduced.

In a possible implementation method, each reference signal in the at least two reference signal sets corresponds to one cyclic shift value, the first group of reference signals include at least two reference signals, the at least two reference signals belong to the first reference signal set, and cyclic shift values corresponding to the at least two reference signals are adjacent.

According to the foregoing solution, if cyclic shift values corresponding to the at least two reference signals indicated by the first indication information are adjacent, cyclic shift orthogonal space corresponding to the two reference signals is consecutive, that is, cyclic shift orthogonal space that has been allocated to the terminal is consecutive. Therefore, remaining cyclic shift orthogonal space is also consecutive, so that the remaining cyclic shift orthogonal space can be flexibly allocated to another terminal. The another terminal and the terminal may have a same delay spread amount requirement, or may have different delay spread amount requirements. According to the method, code division multiplexing may be performed on reference signals between terminals having different delay spread amount requirements. Therefore, flexible and efficient allocation of the reference signals can be implemented, and a code division multiplexing capability can be fully utilized.

In a possible implementation method, that cyclic shift values respectively corresponding to the at least two reference signals are adjacent includes: Indexes of the cyclic shift values respectively corresponding to the at least two reference signals are consecutive, where the index of the cyclic shift value is for identifying the cyclic shift value.

According to the foregoing solution, if cyclic shift values corresponding to the at least two reference signals indicated by the first indication information are adjacent, cyclic shift orthogonal space corresponding to the two reference signals is consecutive, that is, cyclic shift orthogonal space that has been allocated to the terminal is consecutive. Therefore, remaining cyclic shift orthogonal space is also consecutive, so that the remaining cyclic shift orthogonal space can be flexibly allocated to another terminal. The another terminal and the foregoing terminal may have a same delay spread amount requirement, or may have different delay spread amount requirements. According to the method, code division multiplexing may be performed on reference signals between terminals having different delay spread amount requirements. Therefore, flexible and efficient allocation of the reference signals can be implemented, and a code division multiplexing capability can be fully utilized. In a possible implementation method, that cyclic shift values respectively corresponding to the at least two reference signals are adjacent includes: Indexes of the cyclic shift values respectively

corresponding to the at least two reference signals are consecutive, where the index of the cyclic shift value is for identifying the cyclic shift value.

According to the foregoing solution, the cyclic shift value is uniquely identified by using the index of the cyclic shift value, and indexes of adj acent cyclic shift values that correspond to the cyclic shift values are consecutive. With reference to the method, during specific implementation, the foregoing first indication information may indicate at least two consecutive indexes of cyclic shift values, to indicate, to the terminal, at least two reference signals corresponding to consecutive cyclic shift orthogonal space. The method is simple and easy to implement.

In a possible implementation method, third indication information is received from the radio access network device, where the third indication information indicates a cyclic shift segment size of the first group of reference signals.

According to the foregoing solution, a cyclic shift segment size indicates a size of cyclic shift space or orthogonal code division space occupied by a reference signal, and the third indication information indicates the cyclic shift segment size corresponding to the first group of reference signals allocated to the terminal. Therefore, the third indication information indicates a size of cyclic shift space or orthogonal code division space occupied by the first group of reference signals allocated to the terminal, so that the terminal can accurately learn of an occupation status of the terminal on the cyclic shift space or the orthogonal code division space. This helps the terminal accurately learn of a resource usage of the terminal.

According to a third aspect, an embodiment of this application provides a communication apparatus. The apparatus may be a radio access network device, or may be a chip or a module used in the radio access network device. The apparatus has a function of implementing any implementation method in the first aspect. The function may be implemented by hardware, or may be implemented by hardware executing corresponding software. The hardware or the software includes one or more modules corresponding to the foregoing function.

According to a fourth aspect, an embodiment of this application provides a communication apparatus. The apparatus may be a terminal, or may be a chip used in the terminal. The apparatus has a function of implementing any implementation method in the second aspect. The function may be implemented by hardware, or may be implemented by hardware executing corresponding software. The hardware or the software includes one or more modules corresponding to the foregoing function.

According to a fifth aspect, an embodiment of this application provides a communication apparatus, including a processor and an interface circuit. The processor is configured to: communicate with another apparatus through the interface circuit, and perform any implementation method in the first aspect and the second aspect. There are one or more processors.

According to a sixth aspect, an embodiment of this application provides a communication apparatus, including a processor coupled to a memory. The processor is configured to invoke a program stored in the memory, to perform any implementation method in the first aspect and the second aspect. The memory may be located inside the apparatus, or may be located outside the apparatus. In addition, there may be one or more processors.

According to a seventh aspect, an embodiment of this application provides a communication apparatus, including a processor and a memory. The memory is configured to store computer instructions. When the apparatus runs, the processor executes the computer instructions stored in the memory, to enable the apparatus to perform any implementation method in the first aspect and the second aspect.

According to an eighth aspect, an embodiment of this application provides a communication apparatus, including a unit or a means (means) configured to perform steps of any implementation method in the first aspect and the second aspect.

According to a ninth aspect, an embodiment of this application further provides a computer-readable storage medium. The computer-readable storage medium stores instructions. When the instructions are run on a communication apparatus, any implementation method in the first aspect and the second aspect is performed.

According to a tenth aspect, an embodiment of this application further provides a computer program product. The computer program product includes a computer program or instructions. When the computer program or the instructions are run by a communication apparatus, any implementation method in the first aspect and the second aspect is performed.

According to an eleventh aspect, an embodiment of this application further provides a chip system, including a processor, configured to perform any implementation method in the first aspect and the second aspect.

## BRIEF DESCRIPTION OF DRAWINGS

FIG. 1(a) is a schematic diagram of an architecture of a communication system to which an embodiment of this application is applied;

FIG. 1(b) is a schematic diagram of a resource;

FIG. 1(c) shows that a sequence r(n) is mapped to an even-numbered subcarrier;
FIG. 2(a) shows a time-frequency resource mapping pattern of a Type1 DMRS;
FIG. 2(b) shows a time-frequency resource mapping pattern of a Type1 DMRS;
FIG. 3(a) is a schematic diagram of superimposing an orthogonal code in frequency domain;
FIG. 3(b) is another schematic diagram of superimposing an orthogonal code in frequency domain;
FIG. 4 is a schematic diagram of orthogonal codes;
FIG. 5(a) shows a time-frequency resource mapping pattern of a Type2 DMRS;
FIG. 5(b) shows a time-frequency resource mapping pattern of a Type2 DMRS;
FIG. 6(a) is a schematic diagram of superimposing an orthogonal code in frequency domain;
FIG. 6(b) is another schematic diagram of superimposing an orthogonal code in frequency domain;
FIG. 7 is a schematic diagram of multipath transmission of a signal;
FIG. 8 is a schematic diagram of delays of a received signal presented at a receiving end after a DMRS signal is transmitted through different paths;
FIG. 9 is a schematic diagram of transformation to time domain through a cyclic shift;
FIG. 10 is a schematic diagram of orthogonal codes;
FIG. 11(a) shows a time-frequency resource mapping pattern of a Type 1 DMRS;
FIG. 11(b) shows a time-frequency resource mapping pattern of a Type 1 DMRS;
FIG. 11(c) shows a time-frequency resource mapping pattern of a Type 1 DMRS;
FIG. 11(d) shows a time-frequency resource mapping pattern of a Type 1 DMRS;
FIG. 12 is a schematic diagram of orthogonal codes;
FIG. 13(a) shows a time-frequency resource mapping pattern of a Type2 DMRS;
FIG. 13(b) shows a time-frequency resource mapping pattern of a Type2 DMRS;
FIG. 14 is a schematic comparison diagram of transformation to time domain through a cyclic shift;
FIG. 15(a) is a schematic diagram of a correspondence between a cyclic shift value and a DMRS;
FIG. 15(b) is a schematic diagram of a correspondence between a cyclic shift value and a DMRS;
FIG. 15(c) is a schematic diagram of a correspondence between a cyclic shift value and a DMRS;
FIG. 16(a) is a schematic diagram of a cyclic shift segment size;
FIG. 16(b) is a schematic diagram of cyclic shift segment sizes;
FIG. 16(c) is a schematic diagram of cyclic shift intervals;
FIG. 17(a) is a schematic diagram of multiplexing CS orthogonal space between terminals having different delay spread amounts;
FIG. 17(b) is a schematic diagram of multiplexing CS orthogonal space between terminals having different delay spread amounts;
FIG. 18(a) is a schematic diagram of multiplexing CS orthogonal space between terminals having different delay spread amounts;
FIG. 18(b) is a schematic diagram of multiplexing CS orthogonal space between terminals having different delay spread amounts;
FIG. 19(a) is a schematic diagram of a communication method according to an embodiment of this application;
FIG. 19(b) is a schematic diagram of a communication method according to an embodiment of this application;
FIG. 20 is a schematic diagram of a structure of a possible communication apparatus according to an embodiment of this application; and
FIG. 21 is a schematic diagram of a structure of a possible communication apparatus according to an embodiment of this application.

## DESCRIPTION OF EMBODIMENTS

FIG. 1(a) is a schematic diagram of an architecture of a communication system to which an embodiment of this application is applied. As shown in FIG. 1(a), the communication system 1000 includes a radio access network 100 and a core network 200. Optionally, the communication system 1000 may further include an internet 300. The radio access network 100 may include at least one radio access network device, for example, 110a and 110b in FIG. 1(a), and may further include at least one terminal, for example, 120a to 120j in FIG. 1(a). 110a is a base station, 110b is a micro base station, 120a, 120e, 120f, and 120j are mobile phones, 120b is a car, 120c is a fuel dispenser, 120d is a home access node (home access point, HAP) deployed indoors or outdoors, 120g is a notebook computer, 120h is a printer, and 120i is an unmanned aerial vehicle. A same terminal or radio access network device may provide different functions in different application scenarios. For example, the mobile phones in FIG. 1(a) include 120a, 120e, 120f, and 120j. The mobile phone 120a may access the base station 110a, connect to the car 120b, directly communicate with the mobile phone 120e, and access the HAP. The mobile phone 120b may access the HAP and directly communicate with the mobile phone 120a. The mobile phone 120f may access the micro base station 110b, connect to the notebook

computer 120g, and connect to the printer 120h. The mobile phone 120j may control the unmanned aerial vehicle 120i.

The terminal is connected to the radio access network device, and the radio access network device is connected to the core network. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1(a) is merely a schematic diagram, and the communication system may further include other network devices, for example, may further include a wireless relay device and a wireless backhaul device, which are not shown in FIG. 1(a).

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like, or may be a module or a unit, for example, may be a central unit (central unit, CU) or may be a distributed unit (distributed unit, DU), that completes some functions of a base station. The radio access network device may be a macro base station (for example, 110a in FIG. 1(a)), may be a micro base station or an indoor base station (for example, 110b in FIG. 1(a)), or may be a relay node or a donor node. A specific technology and a specific device form that are used by the radio access network device are not limited in embodiments of this application. In embodiments of this application, a base station is used as an example of the radio access network device for description.

The terminal may also be referred to as a terminal device, user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the helicopter or the unmanned aerial vehicle 120i in FIG. 1(a) may be configured as a mobile base station. For those terminals 120j that access the radio access network 100 by using the 120i, the terminal 120i is a base station. However, for the base station 110a, the 120i is a terminal, that is, the 110a and the 120i communicate with each other by using a radio air interface protocol. Certainly, the 110a and the 120i may also communicate with each other by using an interface protocol between base stations. In this case, for the 110a, the 120i is also a base station. Therefore, both the base station and the terminal may be collectively referred to as communication apparatuses. The 110a and the 110b in FIG. 1(a) may be referred to as communication apparatuses having a base station function, and the 120a to the 120j in FIG. 1(a) may be referred to as communication apparatuses having a terminal function.

Communication may be performed between the base station and the terminal, between base stations, and between terminals through a licensed spectrum, through an unlicensed spectrum, or through both a licensed spectrum and an unlicensed spectrum. Communication may be performed through a spectrum below 6 gigahertz (gigahertz, GHz), through a spectrum above 6 GHz, or through both a spectrum below 6 GHz and a spectrum above 6 GHz. A spectrum resource for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. A cell that establishes a

wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol or may be a discrete Fourier transform-spread-OFDM (discrete Fourier transform-spread-OFDM, DFT-s-OFDM) symbol. Unless otherwise specified, symbols in embodiments of this application are all time domain symbols.

For ease of understanding the solutions in embodiments of this application, the following first describes nouns or terms used in embodiments of this application. The following uses 5G as an example to explain the nouns or the terms.

I. Resource block (resource block, RB)

FIG. 1(b) is a schematic diagram of a resource. The RB is a basic unit for frequency-domain scheduling. One RB includes twelve subcarriers. One resource element (resource element, RE) occupies one symbol in time domain, and occupies one subcarrier in frequency domain. One grid in the figure represents one RE.

II. DMRS type

In a conventional 5G NR standard, based on a frequency domain resource configuration of a DMRS, the DMRS type may be classified into a type 1 (Type1) and a type 2 (Type2).

Main characteristics of the two types of DMRSs are as follows:

Type1:

(1) Multiplexing of a maximum of eight orthogonal DMRSs is supported.
(2) Two code division multiplexing (code division multiplexing, CDM) groups are included, and DMRSs corresponding to all ports in each CDM group occupy a same time-frequency resource.
(3) Each DMRS occupies six subcarriers in each RB.

Type2:

(1) Multiplexing of a maximum of twelve orthogonal DMRSs is supported.
(2) Three CDM groups are included, and DMRSs corresponding to all ports in each CDM group occupy a same time-frequency resource.
(3) Each DMRS occupies four subcarriers in each RB.

The Type1 uses a higher frequency domain resource density and has better channel estimation performance. The Type2 can support more orthogonal DMRSs, and can support transmission of more streams, for example, MU-MIMO. This helps improve a capacity.

Each DMRS is identified by using one port number. A time-frequency resource location of the DMRS is determined based on the port number and a configuration type (the Type1 or the Type2). The configuration type is set by using a higher layer signaling radio resource control (radio resource control, RRC) parameter, and the port number is indicated by using an antenna port (antenna port) field of downlink control information (downlink control information, DCI).

III. Sequence generation of the DMRS

When an OFDM waveform is used, the DMRS may be generated by using a pseudorandom sequence. Specifically, in an NR system, a scrambling code sequence $r(n)$ of the DMRS may be obtained through quadrature phase shift keying (quadrature phase shift keying, QPSK) modulation performed on a sequence $c(n)$, where $c(n)$ may be defined as a Gold sequence, and then $r(n)$ may be represented as:

$$r(n)=\frac{1}{\sqrt{2}}\left(1-2\cdot c(2n)\right)+j\frac{1}{\sqrt{2}}\left(1-2\cdot c(2n+1)\right)$$

where

$$c(n) = \left(x_1(n+N_C) + x_2(n+N_C)\right) \bmod 2$$

$$x_1(n+31) = \left(x_1(n+3) + x_1(n)\right) \bmod 2$$

$$x_2(n+31) = \left(x_2(n+3) + x_2(n+2) + x_2(n+1) + x_2(n)\right) \bmod 2$$

$N_C$=1600, $x_1(n)$ may be initialized to $x_1(0)$ = 1 *and* $x_1(n)$ = 0, *where* $n$ = 1, 2, ..., *and* 30, and $x_2(n)$ meets $c_{\text{init}} = \sum_{i=0}^{30} x_2(i) \cdot 2^i$. APUSCH is used as an example, and $c_{\text{init}}$ is determined based on information such as a DMRS scrambling identity (identity document, ID), a cell ID, and a subframe location and a symbol location of the DMRS, for example, meets:

$$c_{\text{init}} = \left(2^{17}\left(N_{\text{symb}}^{\text{slot}} n_{\text{s, f}}^{\mu} + l + 1\right)\left(2N_{\text{ID}}^{\bar{n}_{\text{SCID}}^{\bar{\lambda}}} + 1\right) + 2^{17}\left\lfloor\frac{\bar{\lambda}}{2}\right\rfloor + 2N_{\text{ID}}^{\bar{n}_{\text{SCID}}^{\bar{\lambda}}} + \bar{n}_{\text{SCID}}^{\bar{\lambda}}\right) \bmod 2^{31}$$

$N_{\text{symb}}^{\text{slot}}$ is a quantity of OFDM symbols in one slot, $n_{\text{s,f}}^{\mu}$ is a slot number in one frame, *l* is an OFDM symbol number in one slot, $\bar{n}_{\text{SCID}}^{\bar{\lambda}} \in \{0, 1\}$, and $N_{\text{ID}}^{0}$ and $N_{\text{ID}}^{1} \in \{0, 1, \ldots, 65535\}$ and are configured IDs.

A length of the sequence r(n) depends on bandwidth actually allocated to the DMRS, and the sequence is mapped to a subcarrier. FIG. 2(a) shows a time-frequency mapping pattern of a Type1 DMRS. The DMRS occupies one OFDM symbol. An example in which the sequence r(n) is mapped to an even-numbered subcarrier is used, and a schematic diagram is shown in FIG. 1(c), where one RB is used as an example in the figure. A grid in FIG. 1(c) is a symbol in time domain, and is a subcarrier in frequency domain, and twelve subcarriers form one RB.

Different DMRSs on which code division multiplexing is performed can be obtained by superimposing a frequency domain orthogonal code and a time domain orthogonal code on the scrambling code sequence r(n), and a DMRS sequence obtained through superimposing of the orthogonal code may be represented as:

$$a_{k,l}^{(p,\mu)} = \beta_{\text{PDSCH}}^{\text{DMRS}} w_{\text{f}}(k') w_{\text{t}}(l') r(2n+k')$$

$$k = \begin{cases} 4n + 2k' + \Delta & \text{Configuration type 1} \\ 6n + k' + \Delta & \text{Configuration type 2} \end{cases}$$

$$k' = 0,1$$

$$l = \bar{l} + l'$$

$$n = 0,1,\ldots$$

$\beta_{\text{PDSCH}}^{\text{DMRS}}$ is for meeting a power requirement for transmitting a signal. $a_{k,l}^{(p,\mu)}$ represents a sequence of a DMRS corresponding to a port number *p* on a subcarrier *k* and a symbol *l,* where each port number corresponds to one DMRS,

that is, the port number is in a one-to-one correspondence with the DMRS, and $\mu$ is related to a subcarrier spacing. $w_f(k')$ and $w_t(l')$ respectively represent a frequency domain orthogonal code and a time domain orthogonal code. For values of $w_f(k')$, $w_t(l')$, and $\Delta$, refer to the following tables, where a PUSCH DMRS is used as an example, and is referenced from the standard 3GPP TS 38.211 V16.6.0.

**Table 6.4.1.1.3-1: Parameters for PUSCH DM-RS configuration type 1**

| *p* | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

**Table 6.4.1.1.3-2: Parameters for PUSCH DM-RS configuration type 2**

| *p* | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

IV. Orthogonality of the DMRS

Usually, orthogonality may be implemented in three manners: frequency division orthogonality, time division orthogonality, and code division orthogonality.

The following describes how the foregoing two types of DMRSs maintain orthogonality.

1. Orthogonality of the Type 1 DMRS

FIG. 2(a) and FIG. 2(b) show time-frequency resource mapping patterns of the Type1 DMRS. Based on different quantities of symbols occupied by the DMRS, there are two types of mapping manner: single-symbol mapping (refer to FIG. 2(a)) and dual-symbol mapping (refer to FIG. 2(b)). In the single-symbol mapping, a maximum of four orthogonal DMRSs are supported. In the dual-symbol mapping, a maximum of eight orthogonal DMRSs are supported.

In the figure, one RB is used as an example. During actual scheduling, the DMRS may alternatively occupy a plurality of RBs based on actually allocated resources.

It should be noted that each port number in the figure corresponds to one DMRS, in other words, the port number is in a one-to-one correspondence with the DMRS.

Orthogonality of the four DMRSs in the single-symbol mapping and orthogonality of the eight DMRSs in the dual-symbol mapping may be implemented through the frequency division orthogonality and the code division orthogonality.

Frequency domain resources occupied by DMRSs on which the frequency division orthogonality is performed are different. For example, refer to FIG. 2(a). Ports {0 and 1} occupy one group of comb-shaped frequency domain resources, ports {2 and 3} occupy another group of comb-shaped frequency domain resources, and frequency division orthogonality is performed between DMRSs corresponding to the ports {0 and 1} and DMRSs corresponding to the ports {2 and 3}. For another example, refer to FIG. 2(b). Ports {0, 1, 4, and 5} occupy one group of comb-shaped frequency domain resources, ports {2, 3, 6, and 7} occupy another group of comb-shaped frequency domain resources, and frequency division orthogonality is performed between DMRSs corresponding to the ports {0, 1, 4, and 5} and DMRSs corresponding to the ports {2, 3, 6, and 7}. The comb-shaped frequency domain resource means that subcarriers in the frequency domain resource are inconsecutive, and the subcarriers are distributed at an equal spacing.

DMRSs on which the code division orthogonality is performed occupy a same frequency domain resource, but use different orthogonal codes. In FIG. 2(a), the port 0 and the port 1 occupy a same frequency domain resource, and the port 2 and the port 3 occupy a same frequency domain resource. DMRSs that occupy a same frequency domain resource may be further orthogonal to each other through code division. The frequency domain orthogonal code is superimposed on the scrambling code sequence r(n), to ensure that the DMRSs on which the code division multiplexing is performed are orthogonal to each other. The ports {0 and 1} form a CDM group 0, and the ports {2 and 3} form a CDM group 1. A DMRS corresponding to a port number in each CDM group is orthogonal through superimposing of a frequency domain orthogonal code (1, 1) or (1, -1) whose periodicity is 2. FIG. 3(a) is a schematic diagram in which a port 0 and a port 1 are orthogonal through code division. FIG. 3(a) corresponds to FIG. 2(a). In FIG. 3(a), n is a number of a subcarrier occupied by a DMRS. The frequency domain orthogonal code (1, 1) is superimposed on the port 0, and the frequency domain orthogonal code (1, -1) is superimposed on the port 1, to implement orthogonality between the DMRS corresponding to the port 0 and the DMRS corresponding to the port 1. In FIG. 2(b), the port 0, the port 1, the port 4, and the port 5 occupy a same frequency domain resource, and the port 2, the port 3, the port 6, and the port 7 occupy a same frequency domain resource. DMRSs that occupy a same frequency domain resource may be further orthogonal to each other through code division. The frequency domain orthogonal code is superimposed on the scrambling code sequence r(n), to ensure that the DMRSs on which the code division multiplexing is performed are orthogonal to each other. The ports {0, 1, 4, and 5} form a CDM group 0, and the ports {2, 3, 6, and 7} form a CDM group 1. A DMRS corresponding to a port number in each CDM group is orthogonal through superimposing of a frequency domain orthogonal code (1, 1) or (1, -1) whose periodicity is 2 and superimposing of a time domain orthogonal code (1, 1) or (1, -1) whose periodicity is 2. FIG. 3(b) is a schematic diagram in which a port 0, a port 1, a port 4, and a port 5 are orthogonal through time division and code division. FIG. 3(b) corresponds to FIG. 2(b). In FIG. 3(b), n is a number of a subcarrier occupied by a DMRS. The frequency domain orthogonal code (1, 1) is superimposed on the port 0, the frequency domain orthogonal code (1, -1) is superimposed on the port 1, the time domain orthogonal code (1, 1) is superimposed on both the port 0 and the port 1, the frequency domain orthogonal code (1, 1) is superimposed on the port 4, the frequency domain orthogonal code (1, - 1) is superimposed on the port 5, the time domain orthogonal code (1, -1) is superimposed on both the port 4 and the port 5, to implement orthogonality between the DMRS corresponding to the port 0, the DMRS corresponding to the port 1, the DMRS corresponding to the port 4, and the DMRS corresponding to the port 5.

The Type1 DMRS occupies an equal-spaced subcarrier in frequency domain, and the frequency domain orthogonal code (1, 1) or (1, -1) whose periodicity is 2 is superimposed on the Type1 DMRS, to ensure orthogonality. This is equivalent to ensuring orthogonality by using two cyclic shift (cyclic shift, CS) values.

FIG. 3(a) and FIG. 3(b) are used as examples. A frequency domain orthogonal code that is superimposed on a subcarrier with a number $n$ = 0, 1, 2, ... and that is of the DMRS corresponding to the port 0 is {1, 1, 1, 1, 1, 1, ...}, and the frequency domain orthogonal code is mapped to an equal-spaced subcarrier. Therefore, the frequency domain orthogonal code may be represented as $e^{j\alpha_0 n}$, where $\alpha_0$ represents a cyclic shift value corresponding to the port 0, and $\alpha_0 = 2\pi \cdot \frac{0}{2}$. A frequency domain orthogonal code of the DMRS corresponding to the port 1 is {1, -1, 1, -1, 1, -1, ...}, and is mapped to an equal-spaced subcarrier. Therefore, the frequency domain orthogonal code may be represented as $e^{j\alpha_1 n}$, where $\alpha_1$ represents a cyclic shift value corresponding to the port 1, $\alpha_1 = 2\pi \cdot \frac{1}{2}$, $j$ represents an imaginary

unit, $j = \sqrt{-1}$ , and e is a natural constant. Therefore, it may be equivalent to a case that the DMRS corresponding to the port 0 and the DMRS corresponding to the port 1 use different cyclic shift values to obtain the frequency domain orthogonal codes, to ensure code division orthogonality performed on the two DMRSs. For details, refer to a schematic diagram in FIG. 4.

2. Orthogonality of the Type2 DMRS

FIG. 5(a) and FIG. 5(b) show time-frequency resource mapping patterns of the Type2 DMRS. Based on different quantities of symbols occupied by the DMRS, there are two types of mapping manner: single-symbol mapping (referring to FIG. 5(a)) and dual-symbol mapping (referring to FIG. 5(b)). In the single-symbol mapping, a maximum of six orthogonal DMRSs are supported. In the dual-symbol mapping, a maximum of twelve orthogonal DMRSs are supported.

In the figure, one RB is used as an example. During actual scheduling, the DMRS may alternatively occupy a plurality of RBs based on actually allocated resources.

Each port in the figure corresponds to one DMRS, in other words, the port is in a one-to-one correspondence with the DMRS.

Orthogonality of the six DMRSs in the single-symbol mapping and orthogonality of the twelve DMRSs in the dual-symbol mapping may be implemented through the frequency division orthogonality and the code division orthogonality.

Subcarriers occupied by DMRSs on which the frequency division orthogonality is performed are different. For example, refer to FIG. 5(a). Ports {0 and 1}, ports {2 and 3}, and ports {4 and 5} respectively occupy different frequency domain resources, and frequency division orthogonality is performed between DMRSs corresponding to the ports {0 and 1}, DMRSs corresponding to the ports {2 and 3}, and DMRSs corresponding to the ports {4 and 5}. For another example, refer to FIG. 5(b). Ports {0, 1, 6, and 7}, ports {2, 3, 8, and 9}, and ports {4, 5, 10, and 11} respectively occupy different frequency domain resources, and frequency division orthogonality is performed between DMRSs corresponding to the ports {0, 1, 6, and 7}, DMRSs corresponding to the ports {2, 3, 8, and 9}, and DMRSs corresponding to the ports {4, 5, 10, and 11}.

DMRSs on which the code division orthogonality is performed occupy a same frequency domain resource, but use different orthogonal codes. In FIG. 5(a), the port 0 and the port 1 occupy a same frequency domain resource, the port 2 and the port 3 occupy a same frequency domain resource, and the port 4 and the port 5 occupy a same frequency domain resource. DMRSs that occupy a same frequency domain resource may be further orthogonal to each other through code division. The frequency domain orthogonal code is superimposed on the scrambling code sequence r(n), to ensure that the DMRSs on which the code division multiplexing is performed are orthogonal to each other. The ports {0 and 1} form a CDM group 0, the ports {2 and 3} form a CDM group 1, and the ports {4 and 5} form a CDM group 2. A DMRS corresponding to a port number in each CDM group is orthogonal through superimposing, in frequency domain, of an orthogonal code (1, 1) or (1, -1) whose periodicity is 2. FIG. 6(a) is a schematic diagram in which a port 0 and a port 1 are orthogonal through code division. FIG. 6(a) corresponds to FIG. 5(a). In FIG. 6(a), n is a number of a subcarrier occupied by a DMRS. The frequency domain orthogonal code (1, 1) is superimposed on the port 0, and the frequency domain orthogonal code (1, -1) is superimposed on the port 1, to implement orthogonality between the DMRS corresponding to the port 0 and the DMRS corresponding to the port 1. In FIG. 5(b), the port 0, the port 1, the port 6, and the port 7 occupy a same frequency domain resource, the port 2, the port 3, the port 8, and the port 9 occupy a same frequency domain resource, and the port 4, the port 5, the port 10, and the port 11 occupy a same frequency domain resource. DMRSs that occupy a same frequency domain resource may be further orthogonal to each other through code division. The frequency domain orthogonal code is superimposed on the scrambling code sequence r(n), to ensure that the DMRSs on which the code division multiplexing is performed are orthogonal to each other. The ports {0, 1, 6, and 7} form a CDM group 0, the ports {2, 3, 8, and 9} form a CDM group 1, and the ports {4, 5, 10, and 11} form a CDM group 2. A DMRS corresponding to a port number in each CDM group is orthogonal through superimposing of a frequency domain orthogonal code (1, 1) or (1, -1) whose periodicity is 2 and superimposing of a time domain orthogonal code (1, 1) or (1, -1) whose periodicity is 2. FIG. 6(b) is a schematic diagram in which a port 0, a port 1, a port 6, and a port 7 are orthogonal through time division and code division. FIG. 6(b) corresponds to FIG. 5(b). In FIG. 6(b), n is a number of a subcarrier occupied by a DMRS. The frequency domain orthogonal code (1, 1) is superimposed on the port 0, the frequency domain orthogonal code (1, -1) is superimposed on the port 1, the time domain orthogonal code (1, 1) is superimposed on both the port 0 and the port 1, the frequency domain orthogonal code (1, 1) is superimposed on the port 6, the frequency domain orthogonal code (1, -1) is superimposed on the port 7, the time domain orthogonal code (1, -1) is superimposed on both the port 6 and the port 7, to implement orthogonality between the DMRS corresponding to the port 0, the DMRS corresponding to the port 1, the DMRS corresponding to the port 6, and the DMRS corresponding to the port 7.

V. Multipath effect

A radio channel has a multipath effect. Due to phenomena such as refraction and reflection of a building, a DMRS signal travels through a plurality of paths to a receiving end during propagation. Because different paths have different propagation distances, time at which the DMRS signal arrives at the receiving end through different paths is different, and there is a specific delay spread amount in time domain.

FIG. 7 is a schematic diagram of multipath transmission of a signal. It can be seen that a signal at a transmitting end may arrive at a receiving end through a path 1, a path 2, and a path 3. FIG. 7 is described by using the three paths as an example.

FIG. 8 is a schematic diagram of delays of a received signal presented at a receiving end after a DMRS signal is transmitted through different paths. FIG. 8 is described by using the three paths shown in FIG. 7 as an example. t0 is a reference time point, and may be understood as a moment at which a receiver starts to receive the signal. 11, t2, and t3 are arrival time of the signal to the receiving end through three different paths. t1 corresponds to the path 1, t2 corresponds to the path 2, and t3 corresponds to the path 3. From a perspective of the receiving end, signals passing through a multipath channel arrive at the receiving end at different time, and it is assumed that strength of a signal that arrives earlier is greater than strength of a signal that arrives later.

Duration between a time point at which the signal sent by the transmitting end arrives at the receiving end through a farthest path and the reference time point is referred to as a delay spread amount. In FIG. 8, a time difference between t3 and t0 is a delay spread amount.

The DMRS needs to arrive at the receiving end after being transmitted through a channel. It is assumed that frequency domain signals that are shown in FIG. 4 and that are obtained in a manner in which two DMRSs that are orthogonal to each other by using cyclic shift values $\alpha_0 = 2\pi \cdot \frac{0}{2}$ and $\alpha_1 = 2\pi \cdot \frac{1}{2}$ arrive at the receiving end through the channel are represented as:

$$\mathrm{y(n)} = \mathrm{H}_1(n)x_1(n)e^{j\alpha_0 n} + \mathrm{H}_2(n)x_1(n)e^{j\alpha_1 n}$$

$H_1$ and $H_2$ respectively represent frequency domain channels that the two DMRSs pass through, n represents a frequency domain sampling point sequence number, y(n) represents a received signal, $x_1(n)e^{j\alpha 0n}$ and $x_1(n)e^{j\alpha 1n}$ are sequences of the two DMRSs, and two cyclic shift values are different, that is, $\alpha_0 \neq \alpha_1$.

To estimate the channels $H_1(n)$ and $H_2(n)$, the following formula may be set:

$$\frac{\mathrm{y(n)}}{x_1(n)e^{j\alpha_0 n}} = \mathrm{H}_1(n) + \mathrm{H}_2(n)e^{j(\alpha_1 - \alpha_0)n}$$

N-point inverse discrete Fourier transform (inverse discrete Fourier transformation, IDFT) is performed to transform to time domain:

$$\mathrm{IDFT}\{\frac{\mathrm{y(n)}}{\mathrm{x_1(n)}}\} = \mathrm{h_1(k)} + \mathrm{h_2(k - k_0)}$$

k represents a time domain sampling point sequence number. $h_1(k)$ *and* $h_2(k - k_0)$ are respectively representations of channels in time domain transformed from $H_1(n)$ and $\mathrm{H}_2(n)e^{j(\alpha_1 - \alpha_0)n}$. $\alpha_1 - \alpha_0 = 2\pi \cdot \frac{1}{2}$ in $H_2(n)e^{j(\alpha 1 - \alpha 0)n}$ may be understood as that phase rotation of $2\pi \cdot \frac{1}{2}$ is performed on $H_2(n)$ in frequency domain. This is equivalent to $\frac{\mathrm{N}}{2}$-point shift performed in time domain, that is, $\mathrm{k_0} = \frac{\mathrm{N}}{2}$. N time domain sampling points are duration occupied by the DMRS signal and the duration is represented by N sampling points in a discrete manner. For details, refer to a schematic diagram of signal distribution in time domain in FIG. 9. During actual channel estimation, an algorithm such as time domain windowing may be used to distinguish between the channels $h_1(k)$ and $h_2(k)$.

DMRSs obtained by using different cyclic shift values are used, and consequently, a delay spread amount of

the DMRS signal is limited. For example, if two cyclic shift values are used, the delay spread amount of the signal is limited to no more than time corresponding to $\frac{N}{2}$ time domain sampling points. Otherwise, interference is generated between the two received superimposed DMRSs. Refer to FIG. 9. If a delay spread amount of a signal that passes through the channel $h_1(k)$ exceeds $\frac{N}{2}$, the signal overlaps with a signal that passes through the channel $h_2(k)$, causing inter-signal interference and affecting accuracy of channel estimation at the receiving end.

VI. User pairing

The user pairing means that a plurality of users perform data transmission on a same time-frequency resource. In embodiments of this application, the user pairing is also referred to as terminal pairing.

VII. Port expansion of the DMRS

Currently, a requirement for a transmission rate in communication is continuously increasing. To improve the transmission rate, embodiments of this application provide a solution: increasing a quantity of DMRSs to increase a quantity of layers of transmitted data, thereby achieving an objective of improving the transmission rate. For example, in an MU-MIMO scenario with more than twelve streams, a quantity of supported DMRSs is increased to 12 or more.

To increase a quantity of supported orthogonal DMRSs, a solution is to further increase a quantity of DMRSs used for code division orthogonal multiplexing to implement DMRS expansion. Specifically, for both the Type1 DMRS and the Type2 DMRS, more orthogonal DMRSs may be obtained by using more cyclic shift values, so that multi-stream transmission, for example, MU-MIMO, can be better supported.

The following separately describes expansion of a quantity of ports of the Type1 DMRS and expansion of a quantity of ports of the Type2 DMRS.

1. Expansion of the quantity of ports of the Type1 DMRS

For the Type1 DMRS, more cyclic shift values may be used, for example, four orthogonal DMRSs are obtained by using four cyclic shift values, or eight orthogonal DMRSs are obtained by using eight cyclic shift values, to achieve an objective of expanding a quantity of DMRSs.

In FIG. 4, two cyclic shift values are used to ensure that two DMRSs are orthogonal, where a cyclic shift value $\alpha_0 = 2\pi \cdot \frac{0}{2}$, and a corresponding frequency domain orthogonal code is {1, 1, 1, 1, 1, 1, ...}; and a cyclic shift value $\alpha_1 = 2\pi \cdot \frac{1}{2}$, and a corresponding frequency domain orthogonal code is {1, -1, 1, -1, 1, -1, ...}, where frequency domain orthogonal codes obtained by using the two cyclic shift values have a periodicity with a length of two. Two DMRSs obtained based on two cyclic shift values form one DMRS set. The two DMRSs included in the DMRS set may be identified by using ports {0 and 1}, ports {2 and 3}, ports {4 and 5}, or ports {6 and 7}. For details, refer to FIG. 2(a) and FIG. 2(b).

In FIG. 10, four cyclic shift values are used to ensure that four DMRSs are orthogonal, where a cyclic shift value $\beta_0 = 2\pi \cdot \frac{0}{4}$, and a corresponding frequency domain orthogonal code is {1, 1, 1, 1, 1, 1, 1, 1, ...}; a cyclic shift value $\beta_1 = 2\pi \cdot \frac{1}{4}$, and a corresponding frequency domain orthogonal code is {1, j, -1, j, 1, j, -1, j, ...}; a cyclic shift value $\beta_2 = 2\pi \cdot \frac{2}{4}$, and a corresponding frequency domain orthogonal code is {1, -1, 1, -1, 1, -1, 1, -1, ...}; and a cyclic shift value $\beta_3 = 2\pi \cdot \frac{3}{4}$, and a corresponding frequency domain orthogonal code is {1, j, -1, j, 1, j, -1, j, ...}, where frequency domain orthogonal codes obtained by using the four cyclic shift values have a periodicity with a length of four. *J* represents an imaginary unit, and $j = \sqrt{-1}$. Four DMRSs obtained based on four cyclic shift values form one DMRS set. The

four DMRSs included in the DMRS set may be identified by using ports {0, 1, 2, and 3}, ports {4, 5, 6, and 7}, ports {8, 9, 10, and 11}, or ports {12, 13, 14, and 15}. Each of the four DMRSs in the set corresponds to one cyclic shift value. For details, refer to time-frequency resource mapping diagrams and port identifiers in FIG. 11(a) and FIG. 11(b).

For another example, eight cyclic shift values are used to ensure that eight DMRSs are orthogonal, where a cyclic shift value $\gamma_0 = 2\pi \cdot \frac{0}{8}$, and a corresponding frequency domain orthogonal code is {1, 1, 1, 1, 1, 1, 1, 1, 1, 1, 1, 1, 1, 1, 1, 1, ...}; a cyclic shift value $\gamma_1 = 2\pi \cdot \frac{1}{8}$, and a corresponding frequency domain orthogonal code is $\{1,\ \frac{\sqrt{2}}{2}+\frac{\sqrt{2}}{2}j,\ j,\ -\frac{\sqrt{2}}{2}+\frac{\sqrt{2}}{2}j,\ -1,\ -\frac{\sqrt{2}}{2}-\frac{\sqrt{2}}{2}j,\ -j,\ \frac{\sqrt{2}}{2}-\frac{\sqrt{2}}{2}j,\ 1,\ \frac{\sqrt{2}}{2}+\frac{\sqrt{2}}{2}j,\ j,\ -\frac{\sqrt{2}}{2}+\frac{\sqrt{2}}{2}j,\ -1,\ -\frac{\sqrt{2}}{2}-\frac{\sqrt{2}}{2}j,\ -j,\ \frac{\sqrt{2}}{2}-\frac{\sqrt{2}}{2}j,\ \ldots\}$; a cyclic shift value $\gamma_2 = 2\pi \cdot \frac{2}{8}$, and a corresponding frequency domain orthogonal code is {1, j, -1, -j, 1, j, -1, -j, 1, j, -1, -j, 1, j, -1, -j, ...}; a cyclic shift value $\gamma_3 = 2\pi \cdot \frac{3}{8}$, and a corresponding frequency domain orthogonal code is $\{1,\ -\frac{\sqrt{2}}{2}+\frac{\sqrt{2}}{2}j,\ -j,\ \frac{\sqrt{2}}{2}+\frac{\sqrt{2}}{2}j,\ -1,\ \frac{\sqrt{2}}{2}-\frac{\sqrt{2}}{2}j,\ j,\ -\frac{\sqrt{2}}{2}-\frac{\sqrt{2}}{2}j,\ 1,\ -\frac{\sqrt{2}}{2}+\frac{\sqrt{2}}{2}j,\ -j,\ \frac{\sqrt{2}}{2}+\frac{\sqrt{2}}{2}j,\ -1,\ \frac{\sqrt{2}}{2}-\frac{\sqrt{2}}{2}j,\ j,\ -\frac{\sqrt{2}}{2}-\frac{\sqrt{2}}{2}j,\ \ldots\}$; a cyclic shift value $\gamma_4 = 2\pi \cdot \frac{4}{8}$, and a corresponding frequency domain orthogonal code is {1, -1, 1, -1, 1, -1, 1, -1, 1, -1, 1, -1, 1, -1, 1, -1, ...}; a cyclic shift value $\gamma_5 = 2\pi \cdot \frac{5}{8}$, and a corresponding frequency domain orthogonal code is $\{1,\ -\frac{\sqrt{2}}{2}-\frac{\sqrt{2}}{2}j,\ j,\ \frac{\sqrt{2}}{2}-\frac{\sqrt{2}}{2}j,\ -1,\ \frac{\sqrt{2}}{2}+\frac{\sqrt{2}}{2}j,\ -j,\ -\frac{\sqrt{2}}{2}+\frac{\sqrt{2}}{2}j,\ 1,\ -\frac{\sqrt{2}}{2}-\frac{\sqrt{2}}{2}j,\ j,\ \frac{\sqrt{2}}{2}-\frac{\sqrt{2}}{2}j,\ -1,\ \frac{\sqrt{2}}{2}+\frac{\sqrt{2}}{2}j,\ -j,\ -\frac{\sqrt{2}}{2}+\frac{\sqrt{2}}{2}j,\ \ldots\}$; a cyclic shift value $\gamma_6 = 2\pi \cdot \frac{6}{8}$, and a corresponding frequency domain orthogonal code is {1, -j, -1, j, 1, -j, -1, j, 1, -j, -1, j, 1, - j, -1, j, ...}; and a cyclic shift value $\gamma_7 = 2\pi \cdot \frac{7}{8}$, and a corresponding frequency domain orthogonal code is $\{1,\ \frac{\sqrt{2}}{2}-\frac{\sqrt{2}}{2}j,\ -j,\ -\frac{\sqrt{2}}{2}-\frac{\sqrt{2}}{2}j,\ -1,\ -\frac{\sqrt{2}}{2}+\frac{\sqrt{2}}{2}j,\ j,\ \frac{\sqrt{2}}{2}+\frac{\sqrt{2}}{2}j,\ 1,\ \frac{\sqrt{2}}{2}-\frac{\sqrt{2}}{2}j,\ -j,\ -\frac{\sqrt{2}}{2}-\frac{\sqrt{2}}{2}j,\ -1,\ -\frac{\sqrt{2}}{2}+\frac{\sqrt{2}}{2}j,\ j,\ \frac{\sqrt{2}}{2}+\frac{\sqrt{2}}{2}j,\ \ldots\}$, where frequency domain orthogonal codes obtained by using the eight cyclic shift values have a periodicity with a length of eight. Eight DMRSs obtained based on eight cyclic shift values form one DMRS set. The eight DMRSs included in the DMRS set may be identified by using ports {0, 1, 2, 3, 4, 5, 6, and 7}, ports {8, 9, 10, 11, 12, 13, 14, and 15}, ports {16, 17, 18, 19, 20, 21, 22, and 23}, or ports {24, 25, 26, 27, 28, 29, 30, and 31}. Each of the eight DMRSs in the set corresponds to one cyclic shift value. For details, refer to FIG. 11(c) and FIG. 11(d).

In the foregoing design, when two cyclic shift values are used, it can be ensured that two DMRSs are orthogonal. When the two cyclic shift values are expanded to four cyclic shift values, it can be ensured that four DMRSs are orthogonal. The four DMRSs may be allocated to one terminal whose rank is 4 for use, where a delay spread amount of the terminal does not exceed duration of N/4 time domain sampling points, or the four DMRSs may be allocated to two terminals for use, for example, allocated to a terminal 1 whose rank is 2 and a terminal 2 whose rank is 2, or allocated to a terminal 2 whose rank is 3 and a terminal 2 whose rank is 1, where neither a delay spread amount of the terminal 1 nor a delay spread amount of the terminal 2 exceeds duration of N/4 time domain sampling points, or may be allocated to three terminals for use. It should be noted that, in the design, if the four DMRSs are allocated to a plurality of terminals, delay spread amounts of the plurality of terminals are limited to be less than duration of N/4 time domain sampling points.

In the foregoing design, when two cyclic shift values are used, it can be ensured that two DMRSs are orthogonal. When the two cyclic shift values are expanded to eight cyclic shift values, it can be ensured that eight DMRSs are orthogonal. The eight DMRSs may be allocated to one terminal whose rank is 8 for use, where a delay spread amount of the terminal does not exceed duration of N/8 time domain sampling points, or the eight DMRSs may be allocated to

two terminals for use, for example, allocated to a terminal 1 whose rank is 4 and a terminal 2 whose rank is 4, or allocated to a terminal 2 whose rank is 5 and a terminal 2 whose rank is 3, where neither a delay spread amount of the terminal 1 nor a delay spread amount of the terminal 2 exceeds duration of N/8 time domain sampling points, or may be allocated to three terminals or four terminals for use. It should be noted that, in the design, if the eight DMRSs are allocated to a plurality of terminals for multiplexing, delay spread amounts of the plurality of terminals are limited to be less than duration of N/8 time domain sampling points.

2. Expansion of the quantity of ports of the Type2 DMRS

For the Type2 DMRS, more cyclic shift values may be used, for example, two orthogonal DMRSs are obtained by using two cyclic shift values, to achieve an objective of expanding a quantity of DMRSs.

For the Type2 DMRS, a superimposing manner of an orthogonal code obtained by using a cyclic shift value is different from that of the Type1 DMRS. Refer to FIG. 12. Two cyclic shift values are used to ensure that two DMRSs are orthogonal, where a cyclic shift value $\alpha_0$ = $2\pi \cdot \frac{0}{2}$, and a corresponding orthogonal code is {1, 1, 1, 1, 1, 1, ...}; and a cyclic shift value $\alpha_1$ = $2\pi \cdot \frac{1}{2}$, and a corresponding orthogonal code is {1, -1, 1, -1, 1, -1, ...}. The orthogonal codes generated by using the two cyclic shift values are denoted as outer-layer CS codes, and are separately superimposed on an inner-layer orthogonal code {1, 1, 1, 1, ...}, to obtain two orthogonal DMRSs, where the inner-layer orthogonal code is the frequency domain orthogonal code shown in FIG. 6(a). Refer to FIG. 13(a). The two DMRSs may be identified by using ports {0 and 1}, {4 and 5}, or {8 and 9}. In addition, the outer-layer CS codes generated by using the two cyclic shift values are separately superimposed on an inner-layer orthogonal code {1, -1, 1, - 1, ...}, to obtain another two orthogonal DMRSs. Refer to FIG. 13(a). The two DMRSs may be identified by using ports {2 and 3}, {6 and 7}, or {10 and 11}.

In the foregoing solution, more cyclic shift values are used, so that a quantity of supported orthogonal DMRSs can be increased. However, using the cyclic shift value limits the delay spread amount of the DMRS. A plurality of DMRSs allocated to a same terminal may be considered as having a same delay spread amount. As a quantity of cyclic shift values further increases, the delay spread amount is further limited. For example, FIG. 14 is a schematic comparison diagram of limitation of delay spread amounts that are of DMRSs obtained by using different quantities of cyclic shift values and that are presented in time domain, (a) in FIG. 14 represents a maximum delay spread amount that is allowable when two cyclic shift values are used, where the maximum delay spread amount may be quantized to time represented by N/2 time domain sampling points, and N time domain sampling points represent total duration occupied by a signal, (b) in FIG. 14 represents a maximum delay spread amount that is allowable when four cyclic shift values are used, where the maximum delay spread amount may be quantized to time represented by N/4 time domain sampling points. As the quantity of cyclic shift values increases, a maximum allowable delay spread amount decreases.

The foregoing implementation method of the DMRS port expansion also belongs to a part of embodiments of the present invention.

Currently, when a DMRS is allocated to a user (that is, a terminal), a delay spread amount requirement of the user is not considered. Consequently, DMRS allocation is not flexible enough and efficiency is low.

To flexibly and efficiently allocate the DMRS to the terminal, embodiments of this application provide a corresponding solution. The solution is applicable to a scenario before a quantity of ports of the DMRS is expanded, and is also applicable to a scenario after the quantity of ports of the DMRS is expanded. FIG. 19(a) shows a communication method according to an embodiment of this application. The method includes the following steps.

A reference signal in the method may be a DMRS, or may be another reference signal. This is not limited in this application. For ease of description, the following uses the DMRS as an example for description.

Step 1901a: A base station sends first indication information to a first terminal. Correspondingly, the first terminal receives the first indication information.

Optionally, the first indication information is included in DCI.

The first indication information indicates a first group of reference signals, the first group of reference signals include at least one reference signal, and the first group of reference signals belong to a first reference signal set in at least two reference signal sets.

The reference signal herein may be a DMRS or another reference signal. For ease of description, an example in which the reference signal is the DMRS is used for description in the following embodiments of this application.

When the reference signal is the DMRS, the first indication information indicates a first group of DMRSs, the first group of DMRSs include at least one DMRS, and the first group of DMRSs belong to a first DMRS set in at least two DMRS sets.

Step 1902a: The base station sends the DMRS in the first group of DMRSs to the first terminal, or the first terminal sends the DMRS in the first group of DMRSs to the base station.

In an implementation method, in a downlink direction, the base station sends the DMRS in the first group of DMRSs to the first terminal, so that the terminal may obtain the DMRS in the first group of DMRSs. In the downlink direction, the foregoing first indication information may be carried in an antenna port (antenna port(s)) field of a DCI format 1_1 or a DCI format 1_2. In another implementation method, in an uplink direction, the first terminal receives the first indication information, obtains the DMRS in the first group of DMRSs based on the first indication information, and then sends the DMRS in the first group of DMRSs to the base station. In the uplink direction, the foregoing first indication information may be carried in an antenna port field of a DCI format 0_1 or a DCI format 0_2.

According to the foregoing solution, the at least two reference signal sets are predefined, where minimum cyclic shift intervals respectively corresponding to the at least two DMRS sets are different from each other, the at least two DMRS sets occupy a same time-frequency resource, and code division orthogonality is performed between different DMRSs in a same DMRS set. When a reference signal is allocated to the first terminal, a minimum cyclic shift interval corresponding to a delay spread amount requirement of the first terminal may be determined based on the delay spread amount requirement of the first terminal, and one or more reference signals may be selected from a reference signal set corresponding to the minimum cyclic shift interval and configured for the first terminal, so that the reference signal is flexibly and efficiently configured for the first terminal based on the delay spread amount requirement of the first terminal.

The following describes the foregoing method in detail with reference to the accompanying drawings and examples.

The at least two DMRS sets described in step 1901a are predefined DMRS sets, one DMRS set includes one or more DMRSs, and the DMRS set may also be referred to as a plurality of DMRSs.

The at least two DMRS sets occupy the same time-frequency resource. Specifically, different DMRSs in each DMRS set occupy a same time-frequency resource, and different DMRSs in different DMRS sets also occupy a same time-frequency resource. In addition, code division orthogonality is performed between DMRSs in any one of the at least two DMRS sets. For example, the at least two DMRS sets include a first DMRS set and a second DMRS set, code division orthogonality is performed between any two DMRSs in the first DMRS set, and code division orthogonality is performed between any two DMRSs in the second DMRS set. For example, the first DMRS set includes a DMRS corresponding to a port 0 and a DMRS corresponding to a port 1 in FIG. 2(a). The DMRS corresponding to the port 0 and the DMRS corresponding to the port 1 occupy a same time-frequency resource, and code division orthogonality is maintained by using two different cyclic shift values. The second DMRS set includes a DMRS corresponding to a port 0, a DMRS corresponding to a port 1, a DMRS corresponding to a port 2, and a DMRS corresponding to a port 3 in FIG. 11(a). The DMRS corresponding to the port 0, the DMRS corresponding to the port 1, the DMRS corresponding to the port 2, and the DMRS corresponding to the port 3 occupy a same time-frequency resource, and code division orthogonality is maintained by using four different cyclic shift values. FIG. 2(a) and FIG. 11(a) represent a same resource, and each RE in FIG. 2(a) and FIG. 11(a) is correspondingly the same. A resource occupied by each DMRS in the first DMRS set includes an RE corresponding to (a symbol 2 and a subcarrier 0), an RE corresponding to (a symbol 2 and a subcarrier 2), an RE corresponding to (a symbol 2 and a subcarrier 4), an RE corresponding to (a symbol 2 and a subcarrier 6), an RE corresponding to (a symbol 2 and a subcarrier 8), and an RE corresponding to (a symbol 2 and a subcarrier 10) in FIG. 2(a). A resource occupied by each DMRS in the second DMRS set includes an RE corresponding to (a symbol 2 and a subcarrier 0), an RE corresponding to (a symbol 2 and a subcarrier 2), an RE corresponding to (a symbol 2 and a subcarrier 4), an RE corresponding to (a symbol 2 and a subcarrier 6), an RE corresponding to (a symbol 2 and a subcarrier 8), and an RE corresponding to (a symbol 2 and a subcarrier 10) in FIG. 11(a).

Each of the at least two DMRS sets corresponds to one minimum cyclic shift interval, and minimum cyclic shift intervals respectively corresponding to the at least two DMRS sets are different from each other. For example, the at least two DMRS sets include the first DMRS set, the second DMRS set, and a third DMRS set. The first DMRS set corresponds to a first minimum cyclic shift interval, the second DMRS set corresponds to a second minimum cyclic shift interval, the third DMRS set corresponds to a third minimum cyclic shift interval, and the first minimum cyclic shift interval, the second minimum cyclic shift interval, and the third minimum cyclic shift interval are different from each other. Any DMRS in each DMRS set corresponds to one cyclic shift value. It is assumed that M cyclic shift values corresponding to the DMRS set are arranged according to a specific rule, where a difference between two adjacent cyclic shift values after the arrangement is used as a cyclic shift interval, the M cyclic shift values correspond to M cyclic shift intervals, and a smallest value of the M cyclic shift intervals is used as a minimum cyclic shift interval. In a specific implementation method, the M cyclic shift values may form a set { $\alpha_0$, $\alpha_1$, $\alpha_2$, ..., and $\alpha_{M-1}$} in ascending order, where indexes of the cyclic shift values may be identified by 0, 1, 2, ..., and M-1, or may be identified by symbols $\alpha_0$, $\alpha_1$, $\alpha_2$, ... , *and* $\alpha_{M-1}$. Because of a cyclic property, M-1 and 0 are also two adjacent indexes. The difference between the two adjacent cyclic shift values is used as the cyclic shift interval. A difference between two cyclic shift values A and B is represented as follows: If A≥B, the difference is A-B. If A<B, the difference is A+2$\pi$-B. Therefore, the M cyclic shift intervals are $\alpha_1 - \alpha_0$, $\alpha_2 - \alpha_1$, ..., $\alpha_{M-1} - \alpha_{M-2}$, and $\alpha_0 + 2\pi - \alpha_{M-1}$.

It is assumed that the first DMRS set includes two DMRSs, and cyclic shift values corresponding to the two DMRSs are respectively $\alpha_0 = 2\pi \cdot \frac{0}{2}$ and $\alpha_1 = 2\pi \cdot \frac{1}{2}$, where a cyclic shift interval from $\alpha_0$ to $\alpha_1$ is $\alpha_1 - \alpha_0 = 2\pi \cdot \frac{1}{2}$, a cyclic shift interval from $\alpha_1$ to $\alpha_0$ is $\alpha_0$ + $2\pi - \alpha_1 = 2\pi \cdot \frac{1}{2}$, where a minimum cyclic shift interval is a cyclic shift interval with a smaller value in the two cyclic shift intervals, that is, a minimum cyclic shift interval corresponding to the first DMRS set is $2\pi \cdot \frac{1}{2}$.

It is assumed that the second DMRS set includes four DMRSs, cyclic shift values corresponding to the four DMRSs are respectively $\alpha_0 = 2\pi \cdot \frac{0}{4}$, $\alpha_1 = 2\pi \cdot \frac{1}{4}$, $\alpha_2 = 2\pi \cdot \frac{2}{4}$, and $\alpha_3 = 2\pi \cdot \frac{3}{4}$, and there are four cyclic shift intervals, where a cyclic shift interval from $\alpha_0$ to $\alpha_1$ is $\alpha_1 - \alpha_0 = 2\pi \cdot \frac{1}{4}$, a cyclic shift interval from $\alpha_1$ to $\alpha_2$ is $\alpha_2 - \alpha_1 = 2\pi \cdot \frac{1}{4}, \ldots,$ and a cyclic shift interval from $\alpha_3$ to $\alpha_0$ is $\alpha_0 + 2\pi - \alpha_3 = 2\pi \cdot \frac{1}{4}$, where a minimum cyclic shift interval is a cyclic shift interval with a smallest value in a plurality of cyclic shift intervals, that is, a minimum cyclic shift interval corresponding to the second DMRS set is $2\pi \cdot \frac{1}{4}$.

Alternatively, in another example, it is assumed that the second DMRS set includes four DMRSs, cyclic shift values corresponding to the four DMRSs are respectively $\alpha_0 = 2\pi \cdot \frac{0}{8}$, $\alpha_1 = 2\pi \cdot \frac{1}{8}$, $\alpha_2 = 2\pi \cdot \frac{3}{8}$, and $\alpha_3 = 2\pi \cdot \frac{5}{8}$, and there are eight cyclic shift intervals, where a cyclic shift interval from $\alpha_0$ to $\alpha_1$ is $\alpha_1 - \alpha_0 = 2\pi \cdot \frac{1}{8}$, a cyclic shift interval from $\alpha_1$ to $\alpha_2$ is $\alpha_2$ - $\alpha_1 = 2\pi \cdot \frac{1}{4}, \ldots,$ and a cyclic shift interval from $\alpha_3$ to $\alpha_0$ is $\alpha_0 + 2\pi - \alpha_3 = 2\pi \cdot \frac{3}{8}$, where a minimum cyclic shift interval is a cyclic shift interval with a smallest value in a plurality of cyclic shift intervals, that is, a minimum cyclic shift interval corresponding to the second DMRS set is $2\pi \cdot \frac{1}{8}$.

It is assumed that the third DMRS set includes eight DMRSs, cyclic shift values corresponding to the eight DMRSs are respectively $\alpha_0 = 2\pi \cdot \frac{0}{8}$, $\alpha_1 = 2\pi \cdot \frac{1}{8}$, $\alpha_2 = 2\pi \cdot \frac{2}{8}$, , $\alpha_3$ = $2\pi \cdot \frac{3}{8}$, $\alpha_4 = 2\pi \cdot \frac{4}{8}$, $\alpha_5 = 2\pi \cdot \frac{5}{8}$, $\alpha_6 = 2\pi \cdot \frac{6}{8}$, and $\alpha_7 = 2\pi \cdot \frac{7}{8}$, and there are a plurality of cyclic shift intervals, where a cyclic shift interval from $\alpha_0$ to $\alpha_1$ is $\alpha_1 - \alpha_0 = 2\pi \cdot \frac{1}{8}$, a cyclic shift interval from $\alpha_1$ to $\alpha_2$ is $\alpha_2 - \alpha_1 = 2\pi \cdot \frac{1}{8}, \ldots,$ and a cyclic shift interval from $\alpha_7$ to $\alpha_0$ is $\alpha_0 + 2\pi - \alpha_7 = 2\pi \cdot \frac{1}{8}$, where a minimum cyclic shift interval is a cyclic shift interval with a smallest value in the plurality of cyclic shift intervals, that is, a minimum cyclic shift interval corresponding to the second DMRS set is $2\pi \cdot \frac{1}{8}$. The rest may be deduced by analogy.

In this embodiment of this application, if all cyclic shift intervals corresponding to one DMRS set are the same, a minimum cyclic shift interval corresponding to the DMRS set is also referred to as a cyclic shift interval corresponding to the DMRS set.

DMRSs in a same DMRS set may be allocated to one terminal, or may be allocated to a plurality of terminals. For example, the DMRS in the first DMRS set may be allocated to the first terminal, and is used for data transmission

between the first terminal and the base station. For another example, the DMRSs in the first DMRS set may be allocated to the first terminal and a second terminal. A DMRS allocated to the first terminal is used for data transmission between the first terminal and the base station, and a DMRS allocated to the second terminal is used for data transmission between the second terminal and the base station.

Alternatively, the DMRS in the first DMRS set is allocated to the first terminal, and is used for data transmission between the first terminal and the base station. The DMRS in the second DMRS set is allocated to the second terminal, and is used for data transmission between the second terminal and the base station. The DMRS in the third DMRS set is allocated to a third terminal, and is used for data transmission between the third terminal and the base station. For a specific implementation method in which DMRSs in different DMRS sets are respectively allocated to different terminals, refer to an embodiment in FIG. 19(b).

Optionally, the base station and each terminal may obtain the at least two DMRS sets in a manner defined in a protocol or preconfigured, store the at least two DMRS sets in advance, or generate the at least two DMRS sets according to a formula. A method in which the base station and the terminal obtain the at least two DMRS sets is not limited in this application.

In this embodiment of this application, a relationship between the DMRS set and a CDM group is as follows:

I. Type1 DMRS scenario

If all ports in one CDM group are distinguished between by superimposing different frequency domain orthogonal codes, DMRSs corresponding to all the ports in the CDM group form one DMRS set. FIG. 2(a) is used as an example. A CDM group 0 includes a port 0 and a port 1, and the port 0 and the port 1 are distinguished between by superimposing different frequency domain orthogonal codes. Therefore, a DMRS corresponding to the port 0 and a DMRS corresponding to the port 1 form one DMRS set. A CDM group 1 includes a port 2 and a port 3, and the port 2 and the port 3 are distinguished between by superimposing different frequency domain orthogonal codes. Therefore, a DMRS corresponding to the port 2 and a DMRS corresponding to the port 3 form another DMRS set.

If all ports in one CDM group are distinguished between by superimposing both a frequency domain orthogonal code and a time domain orthogonal code, DMRSs corresponding to ports superimposed with a same time domain orthogonal code in the CDM group are grouped into a same DMRS set. FIG. 2(b) is used as an example. A CDM group 0 includes a port 0, a port 1, a port 4, and a port 5. If different frequency domain orthogonal codes and a same time domain orthogonal code are superimposed on the port 0 and the port 1, a DMRS corresponding to the port 0 and a DMRS corresponding to the port 1 form one DMRS set. If different frequency domain orthogonal codes and a same time domain orthogonal code are superimposed on the port 4 and the port 5, a DMRS corresponding to the port 4 and a DMRS corresponding to the port 5 form one DMRS set. The time domain orthogonal code superimposed on the port 0 and the port 1 is different from the time domain orthogonal code superimposed on the port 4 and the port 5. A CDM group 1 includes a port 2, a port 3, a port 6, and a port 7. According to a same grouping method as the CDM group 0, a DMRS corresponding to the port 2 and a DMRS corresponding to the port 3 form one DMRS set, and a DMRS corresponding to the port 6 and a DMRS corresponding to the port 7 form one DMRS set.

II. Type2 DMRS scenario

If all ports in one CDM group are distinguished between by superimposing both a frequency domain orthogonal code and an inner-layer orthogonal code, DMRSs corresponding to ports superimposed with a same inner-layer orthogonal code in the CDM group are grouped into a same DMRS set. FIG. 13(a) is used as an example. A CDM group 0 includes a port 0, a port 1, a port 2, and a port 3. If different frequency domain orthogonal codes and a same inner-layer orthogonal code are superimposed on the port 0 and the port 1, a DMRS corresponding to the port 0 and a DMRS corresponding to the port 1 form one DMRS set. If different frequency domain orthogonal codes and a same inner-layer orthogonal code are superimposed on the port 2 and the port 3, a DMRS corresponding to the port 2 and a DMRS corresponding to the port 3 form one DMRS set. The inner-layer orthogonal code superimposed on the port 0 and the port 1 is different from the inner-layer orthogonal code superimposed on the port 2 and the port 3. A CDM group 1 includes a port 4, a port 5, a port 6, and a port 7. According to a same grouping method as the CDM group 0, a DMRS corresponding to the port 4 and a DMRS corresponding to the port 5 form one DMRS set, and a DMRS corresponding to the port 6 and a DMRS corresponding to the port 7 form one DMRS set. A CDM group 2 includes a port 8, a port 9, a port 10, and a port 11. According to a same grouping method as the CDM group 0, a DMRS corresponding to the port 8 and a DMRS corresponding to the port 8 form one DMRS set, and a DMRS corresponding to the port 10 and a DMRS corresponding to the port 11 form one DMRS set.

If all ports in one CDM group are distinguished between by superimposing a frequency domain orthogonal code, an inner-layer orthogonal code, and a time domain orthogonal code, DMRSs corresponding to ports superimposed with a same inner-layer orthogonal code and a same time domain orthogonal code in the CDM group are grouped into

a same DMRS set. FIG. 13(b) is used as an example. A CDM group 0 includes a port 0, a port 1, a port 2, a port 3, a port 12, a port 13, a port 14, and a port 15. If different frequency domain orthogonal codes, a same inner-layer orthogonal code, and a same time domain orthogonal code are superimposed on the port 0 and the port 1, a DMRS corresponding to the port 0 and a DMRS corresponding to the port 1 form one DMRS set. If different frequency domain orthogonal codes, a same inner-layer orthogonal code, and a same time domain orthogonal code are superimposed on the port 2 and the port 3, a DMRS corresponding to the port 2 and a DMRS corresponding to the port 3 form one DMRS set. If different frequency domain orthogonal codes, a same inner-layer orthogonal code, and a same time domain orthogonal code are superimposed on the port 12 and the port 13, a DMRS corresponding to the port 12 and a DMRS corresponding to the port 13 form one DMRS set. If different frequency domain orthogonal codes, a same inner-layer orthogonal code, and a same time domain orthogonal code are superimposed on the port 14 and the port 15, a DMRS corresponding to the port 14 and a DMRS corresponding to the port 15 form one DMRS set. A CDM group 1 includes a port 4, a port 5, a port 6, a port 7, a port 16, a port 17, a port 18, and a port 19. According to a same grouping method as the CDM group 0, a DMRS corresponding to the port 4 and a DMRS corresponding to the port 5 form one DMRS set, a DMRS corresponding to the port 6 and a DMRS corresponding to the port 7 form one DMRS set, a DMRS corresponding to the port 16 and a DMRS corresponding to the port 17 form one DMRS set, and a DMRS corresponding to the port 18 and a DMRS corresponding to the port 19 form one DMRS set. A CDM group 2 includes a port 8, a port 9, a port 10, a port 11, a port 20, a port 21, a port 22, and a port 23. According to a same grouping method as the CDM group 0, a DMRS corresponding to the port 8 and a DMRS corresponding to the port 9 form one DMRS set, a DMRS corresponding to the port 10 and a DMRS corresponding to the port 11 form one DMRS set, a DMRS corresponding to the port 20 and a DMRS corresponding to the port 21 form one DMRS set, and a DMRS corresponding to the port 22 and a DMRS corresponding to the port 23 form one DMRS set.

The at least two DMRS sets mentioned in step 1901a in this embodiment of this application may correspond to different CDM groups, and DMRSs in the CDM groups occupy a same time-frequency resource. To be specific, different DMRSs in a same CDM group of the CDM groups occupy a same time-frequency resource, and different DMRSs in different CDM groups of the CDM groups also occupy a same time-frequency resource.

The following describes the DMRS set with reference to examples. One DMRS set includes M DMRSs, each DMRS corresponds to one port, each DMRS corresponds to one cyclic shift value, and M is an integer greater than 1.

I. DMRS set in the Type1 DMRS scenario

(1) The DMRS set includes two DMRSs.

Cyclic shift values corresponding to the two DMRSs are respectively $\alpha_0 = 2\pi \cdot \frac{0}{2}$ and $\alpha_1 = 2\pi \cdot \frac{1}{2}$ as shown in Table 1.

**Table 1**

| | |
|---|---|
| $\alpha_0 = 2\pi \cdot \frac{0}{2}$ | $\alpha_1 = 2\pi \cdot \frac{1}{2}$ |

$\alpha_0 = 2\pi \cdot \frac{0}{2}$ may alternatively be represented as $\alpha_0 = 0$, and $\alpha_1 = 2\pi \cdot \frac{1}{2}$ may alternatively be represented as $\alpha_0 = \pi$.

A minimum cyclic shift interval corresponding to the DMRS set is $2\pi \cdot \frac{1}{2}$.

The two DMRSs corresponding to $\alpha_0$ and $\alpha_1$ shown in Table 1 occupy a same time-frequency resource location. For example, a time-frequency resource pattern of the DMRS is shown in FIG. 2(a). The DMRS set may be a set including two DMRSs corresponding to ports {0 and 1}, or the DMRS set may be a set including two DMRSs corresponding to ports {2 and 3}. A time-frequency resource occupied by the two DMRSs corresponding to the ports {0 and 1} is the same as a time-frequency resource occupied by the two DMRSs corresponding to the ports {2 and 3}, and the two DMRSs corresponding to the ports {0 and 1} and the two DMRSs corresponding to the ports {2 and 3} are distinguished between by superimposing different time domain orthogonal codes.

(2) The DMRS set includes four DMRSs.

Cyclic shift values corresponding to the four DMRSs are respectively $\beta_0 = 2\pi \cdot \frac{0}{4}$, $\beta_1 = 2\pi \cdot \frac{1}{4}$, $\beta_2 = 2\pi \cdot \frac{2}{4}$, and $\beta_3 = 2\pi \cdot \frac{3}{4}$ as shown in Table 2.

**Table 2**

| | |
|---|---|
| $\beta_0 = 2\pi \cdot \frac{0}{4}$ | $\beta_1 = 2\pi \cdot \frac{1}{4}$ |
| $\beta_2 = 2\pi \cdot \frac{2}{4}$ | $\beta_3 = 2\pi \cdot \frac{3}{4}$ |

$\beta_0 = 2\pi \cdot \frac{0}{4}$ may alternatively be represented as $\beta_0 = 0$, $\beta_1 = 2\pi \cdot \frac{1}{4}$ may alternatively be represented as $\beta_1 = \frac{\pi}{2}$, $\beta_2 = 2\pi \cdot \frac{2}{4}$ may alternatively be represented as $\beta_2 = \pi$, and $\beta_3 = 2\pi \cdot \frac{3}{4}$ may alternatively be represented as $\beta_3 = \frac{3\pi}{2}$.

A minimum cyclic shift interval corresponding to the DMRS set is $2\pi \cdot \frac{1}{4}$.

The four DMRSs corresponding to the four cyclic shift values shown in Table 2 occupy a same time-frequency resource location. For example, a time-frequency resource pattern of the DMRS is shown in FIG. 11(a). The DMRS set may be a set including four DMRSs corresponding to ports {0, 1, 2, and 3}, or the DMRS set may be a set including four DMRSs corresponding to ports {4, 5, 6, and 7}.

(3) The DMRS set includes eight DMRSs.

Cyclic shift values corresponding to the eight DMRSs are respectively $\gamma_0 = 2\pi \cdot \frac{0}{8}$, $\gamma_1 = 2\pi \cdot \frac{1}{8}$, $\gamma_2 = 2\pi \cdot \frac{2}{8}$, $\gamma_3 = 2\pi \cdot \frac{3}{8}$, $\gamma_4 = 2\pi \cdot \frac{4}{8}$, $\gamma_5 = 2\pi \cdot \frac{5}{8}$, $\gamma_6 = 2\pi \cdot \frac{6}{8}$, and $\gamma_7 = 2\pi \cdot \frac{7}{8}$ as shown in Table 3.

**Table 3**

| | |
|---|---|
| $\gamma_0 = 2\pi \cdot \frac{0}{8}$ | $\gamma_1 = 2\pi \cdot \frac{1}{8}$ |
| $\gamma_2 = 2\pi \cdot \frac{2}{8}$ | $\gamma_3 = 2\pi \cdot \frac{3}{8}$ |
| $\gamma_4 = 2\pi \cdot \frac{4}{8}$ | $\gamma_5 = 2\pi \cdot \frac{5}{8}$ |
| $\gamma_6 = 2\pi \cdot \frac{6}{8}$ | $\gamma_7 = 2\pi \cdot \frac{7}{8}$ |

$\gamma_0 = 2\pi \cdot \frac{0}{8}$ may alternatively be represented as $\gamma_0 = 0$, $\gamma_1 = 2\pi \cdot \frac{1}{8}$ may alternatively be represented as $\gamma_1 = \frac{\pi}{4}$, $\gamma_2 = 2\pi \cdot \frac{2}{8}$ may alternatively be represented as $\gamma_2 = \frac{\pi}{2}$, $\gamma_3 = 2\pi \cdot \frac{3}{8}$ may alternatively be represented as $\gamma_3 = \frac{3\pi}{4}$, $\gamma_4 = 2\pi \cdot \frac{4}{8}$ may alternatively be represented as $\gamma_4 = \pi$, $\gamma_5 = 2\pi \cdot \frac{5}{8}$ may alternatively be represented as $\gamma_5 = \frac{5\pi}{4}$, $\gamma_6 = 2\pi \cdot \frac{6}{8}$ may alternatively be represented as $\gamma_6 = \frac{3\pi}{2}$, and $\gamma_7 = 2\pi \cdot \frac{7}{8}$ may alternatively be represented as $\gamma_7 = \frac{7\pi}{4}$.

A minimum cyclic shift interval corresponding to the DMRS set is $2\pi \cdot \frac{1}{8}$.

The eight DMRSs corresponding to the eight cyclic shift values shown in Table 3 occupy a same time-frequency resource location. For example, a time-frequency resource pattern of the DMRS is shown in FIG. 11(c). The DMRS set may be a set including eight DMRSs corresponding to ports {0, 1, 2, 3, 4, 5, 6, and 7}, or the DMRS set may be a set including eight DMRSs corresponding to ports {8, 9, 10, 11, 12, 13, 14, and 15}.

For the Type1 DMTS, for ease of description, the DMRS set including two DMRSs is referred to as a DMRS set 1, the DMRS set including four DMRSs is referred to as a DMRS set 2, and the DMRS set including eight DMRSs is referred to as a DMRS set 3. In an example, if the delay spread amount of the first terminal matches cyclic shift orthogonal space corresponding to two cyclic shift values, in step 1901a, the at least two DMRS sets include the DMRS set 1, and one or more DMRSs in the DMRS set 1 may be indicated to the first terminal by using the first indication information. In another example, if the delay spread amount of the first terminal matches cyclic shift orthogonal space corresponding to four cyclic shift values, in step 1901a, the at least two DMRS sets include the DMRS set 2, and one or more DMRSs in the DMRS set 2 may be indicated to the first terminal by using the first indication information. In another example, if the delay spread amount of the first terminal matches cyclic shift orthogonal space corresponding to eight cyclic shift values, in step 1901a, the at least two DMRS sets include the DMRS set 3, and one or more DMRSs in the DMRS set 3 may be indicated to the first terminal by using the first indication information.

II. DMRS set in the Type2 DMRS scenario

(1) The DMRS set includes one DMRS.

A cyclic shift value corresponding to the DMRS is $\alpha_0 = 2\pi \cdot \frac{0}{1}$ as shown in Table 4.

**Table 4**

| |
|---|
| $\alpha_0 = 2\pi \cdot \frac{0}{1}$ |

$\alpha_0 = 2\pi \cdot \frac{0}{1}$ may alternatively be represented as $\alpha_0 = 0$.

A minimum cyclic shift interval corresponding to the DMRS set is $2\pi$.

The cyclic shift value shown in Table 4 corresponds to one DMRS. As shown in FIG. 15(a), the DMRS may be a DMRS 1 or a DMRS 2. Code division orthogonal multiplexing is performed on the DMRS 1 and the DMRS 2 by using inner-layer orthogonal codes. For a meaning of the inner-layer orthogonal code, refer to the foregoing descriptions. The DMRS 1 may separately form one DMRS set, or the DMRS 2 may separately form one DMRS set. For example, the DMRS set includes the DMRS 1 or includes the DMRS 2.

(2) The DMRS set includes two DMRSs.

Cyclic shift values corresponding to the two DMRSs are respectively $\beta_0 = 2\pi \cdot \frac{0}{2}$ and $\beta_1 = 2\pi \cdot \frac{1}{2}$ as shown in Table 5.

**Table 5**

| | |
|---|---|
| $\beta_0 = 2\pi \cdot \frac{0}{2}$ | $\beta_1 = 2\pi \cdot \frac{1}{2}$ |

$\beta_0 = 2\pi \cdot \frac{0}{2}$ may alternatively be represented as $\beta_0 = 0$, and $\beta_1 = 2\pi \cdot \frac{1}{2}$ may alternatively be represented as $\beta_1 = \pi$.

A minimum cyclic shift interval corresponding to the DMRS set is $2\pi \cdot \frac{1}{2}$.

The cyclic shift values $\beta_0$ and $\beta_1$ shown in Table 5 correspond to a DMRS 3 and a DMRS 4, or correspond to a DMRS 5 and a DMRS 6 as shown in FIG. 15(b). The DMRS set includes the DMRS 3 and the DMRS 4, or includes the DMRS 5 and the DMRS 6. The DMRS 3, the DMRS 4, the DMRS 5, and the DMRS 6 occupy a same time-frequency resource location. Code division orthogonal multiplexing is performed on the DMRS 3 and the DMRS 4 by using outer-layer orthogonal codes (that is, orthogonal codes generated by using different cyclic shift values), code division orthogonal multiplexing is performed on the DMRS 5 and the DMRS 6 by using outer-layer orthogonal codes (that is, orthogonal codes generated by using different cyclic shift values), and code division orthogonal multiplexing is performed on {DMRS 3 and DMRS 4} and {DMRS 5 and DMRS 6} by using inner-layer orthogonal codes. Code division orthogonal multiplexing performed by using outer-layer orthogonal codes may also be referred to as code division orthogonal multiplexing performed by using different cyclic shift values.

(3) The DMRS set includes four DMRSs.

Cyclic shift values corresponding to the four DMRSs are respectively $\gamma_0 = 2\pi \cdot \frac{0}{4}$, $\gamma_1 = 2\pi \cdot \frac{1}{4}$, $\gamma_2 = 2\pi \cdot \frac{2}{4}$, and $\gamma_3 = 2\pi \cdot \frac{3}{4}$ as shown in Table 6.

**Table 6**

| | |
|---|---|
| $\gamma_0 = 2\pi \cdot \frac{0}{4}$ | $\gamma_1 = 2\pi \cdot \frac{1}{4}$ |
| $\gamma_2 = 2\pi \cdot \frac{2}{4}$ | $\gamma_3 = 2\pi \cdot \frac{3}{4}$ |

$\gamma_0 = 2\pi \cdot \frac{0}{4}$ may alternatively be represented as $\gamma_0 = 0$, $\gamma_1 = 2\pi \cdot \frac{1}{4}$ may alternatively be represented as $\gamma_1 = \frac{\pi}{2}$, $\gamma_2 = 2\pi \cdot \frac{2}{4}$ may alternatively be represented as $\gamma_2 = \pi$, and $\gamma_3 = 2\pi \cdot \frac{3}{4}$ may alternatively be represented as $\gamma_3 = \frac{3\pi}{2}$.

A minimum cyclic shift interval corresponding to the DMRS set is $2\pi \cdot \frac{1}{4}$.

The cyclic shift values $\gamma_0$,$\gamma_1$,$\gamma_2$, and $\gamma_3$ shown in Table 6 respectively correspond to a DMRS 7, a DMRS 8, a

DMRS 9, and a DMRS 10, or respectively correspond to a DMRS 11, a DMRS 12, a DMRS 13, and a DMRS 14. The DMRS set includes the DMRS 7, the DMRS 8, the DMRS 9, and the DMRS 10, or includes the DMRS 11, the DMRS 12, the DMRS 13, and the DMRS 14. As shown in FIG. 15(c), the DMRS 7, the DMRS 8, the DMRS 9, the DMRS 10, the DMRS 11, the DMRS 12, the DMRS 13, and the DMRS 14 occupy a same time-frequency resource location. Code division orthogonal multiplexing is performed on the DMRS 7, the DMRS 8, the DMRS 9, and the DMRS 10 by using outer-layer orthogonal codes, code division orthogonal multiplexing is performed on the DMRS 11, the DMRS 12, the DMRS 13, and the DMRS 14 by using outer-layer orthogonal codes, and code division orthogonal multiplexing is performed on {DMRS 7, DMRS 8, DMRS 9, and DMRS 10} and {DMRS 11, DMRS 12, DMRS 13, and DMRS 14} by using inner-layer orthogonal codes.

For the Type2 DMTS, for ease of description, the DMRS set including one DMRS is referred to as a DMRS set a, the DMRS set including two DMRSs is referred to as a DMRS set b, and the DMRS set including four DMRSs is referred to as a DMRS set c. In an example, if the delay spread amount of the first terminal matches cyclic shift orthogonal space corresponding to one cyclic shift value, in step 1901a, the at least two DMRS sets include the DMRS set a, and one DMRS in the DMRS set a is indicated to the first terminal by using the first indication information. In another example, if the delay spread amount of the first terminal matches cyclic shift orthogonal space corresponding to two cyclic shift values, in step 1901a, the at least two DMRS sets include the DMRS set b, and one or more DMRSs in the DMRS set b may be indicated to the first terminal by using the first indication information. In another example, if the delay spread amount of the first terminal matches cyclic shift orthogonal space corresponding to four cyclic shift values, in step 1901a, the at least two DMRS sets include the DMRS set c, and one or more DMRSs in the DMRS set c may be indicated to the first terminal by using the first indication information.

In an implementation method, if the first indication information indicates at least two DMRSs, and the at least two DMRSs belong to the first DMRS set, cyclic shift values corresponding to the at least two DMRSs indicated by the first indication information may be adjacent. To be specific, cyclic shift values corresponding to the DMRSs in the first DMRS set are sorted, and the cyclic shift values corresponding to the at least two DMRSs indicated by the first indication information are adjacent in this sorting. Because the cyclic shift values corresponding to the at least two DMRSs indicated by the first indication information are adjacent, cyclic shift orthogonal space corresponding to the two DMRSs is consecutive, that is, cyclic shift orthogonal space that has been allocated to the first terminal is consecutive. Therefore, remaining cyclic shift orthogonal space is also consecutive, so that the remaining cyclic shift orthogonal space can be flexibly allocated to another terminal. The another terminal and the first terminal may have a same delay spread amount requirement, or may have different delay spread amount requirements. According to the method, code division multiplexing may be performed on reference signals between terminals having different delay spread amount requirements. Therefore, flexible and efficient allocation of the DMRSs can be implemented, and a code division multiplexing capability can be fully utilized.

In an implementation method, that the cyclic shift values respectively corresponding to the at least two DMRSs are adjacent is specifically that indexes of the cyclic shift values respectively corresponding to the at least two DMRSs are consecutive, where the index of the cyclic shift value is for identifying the cyclic shift value. With reference to the method, during specific implementation, the foregoing first indication information may indicate at least two consecutive indexes of cyclic shift values, to indicate, to the first terminal, at least two DMRSs corresponding to consecutive cyclic shift orthogonal space. The method is simple and easy to implement.

In an implementation method, the first minimum cyclic shift interval corresponding to the first DMRS set is a default value. According to the method, in step 1902a, the first terminal may receive the first group of DMRSs from the base station based on the first group of DMRSs indicated by the first indication information and the default first minimum cyclic shift interval, or the first terminal determines the first group of DMRSs based on the first group of DMRSs indicated by the first indication information and the default first minimum cyclic shift interval, and then sends the first group of DMRSs to the base station.

In another implementation method, the first indication information indicates the first group of DMRSs, and further indicates the first minimum cyclic shift interval, and the first minimum cyclic shift interval corresponds to the first DMRS set. According to the method, in step 1902a, the first terminal may receive the first group of DMRSs from the base station based on the first group of DMRSs and the first minimum cyclic shift interval indicated by the first indication information, or the first terminal determines the first group of DMRSs based on the first group of DMRSs and the first minimum cyclic shift interval indicated by the first indication information, and then sends the first group of DMRSs to the base station.

In another implementation method, the base station further sends second indication information to the first terminal, to indicate the first minimum cyclic shift interval, where the first minimum cyclic shift interval corresponds to the first DMRS set. According to the method, in step 1902a, the first terminal may receive the first group of DMRSs from the base station based on the first group of DMRSs indicated by the first indication information and the first minimum cyclic shift interval indicated by the second indication information, or the first terminal determines the first group of DMRSs based on the first group of DMRSs indicated by the first indication information and the first minimum cyclic shift interval indicated by the second indication information, and then sends the first group of DMRSs to the base station. Optionally,

the second indication information and the first indication information may be carried in different signaling. For example, the first indication information is carried in DCI, and the second indication information is carried in RRC. Alternatively, the second indication information and the first indication information are carried in different fields of a same piece of signaling. For example, the first indication information and the second indication information are carried in different fields of a same piece of DCI.

With reference to an example, the following describes a specific implementation method in which the first terminal obtains the first group of DMRSs. First, the first terminal may determine the first minimum cyclic shift interval based on the default value, the first indication information, or the second indication information, so that a value range of the cyclic shift value may be determined based on the first minimum cyclic shift interval, and then the DMRS of the first group of DMRSs may be obtained based on the value range of the cyclic shift value and the first indication information.

For example, if the first minimum cyclic shift interval is equal to $2\pi \cdot \frac{1}{4}$, the first terminal determines that the value range of the cyclic shift value is $\{\beta_0 = 2\pi \cdot \frac{0}{4}, \beta_1 = 2\pi \cdot \frac{1}{4}, \beta_2 = 2\pi \cdot \frac{2}{4}, and\ \beta_3 = 2\pi \cdot \frac{3}{4}\}$. For example, if the first indication information includes indexes of $\beta_0$, $\beta_1$, the DMRSs obtained by the first terminal include a DMRS corresponding to $2\pi \cdot \frac{0}{4}$ and a DMRS corresponding to $2\pi \cdot \frac{1}{4}$.

In an implementation method, the base station may further send third indication information to the first terminal, where the third indication information indicates a cyclic shift segment size of the first group of DMRSs. The cyclic shift segment size is a size of cyclic shift space or orthogonal code division space occupied by the DMRS allocated to the terminal. FIG. 16(a) is a schematic diagram of a cyclic shift segment size. In this example, the first group of DMRSs indicated by the first indication information include two DMRSs, the two DMRSs come from the first DMRS set, the first DMRS set includes eight DMRSs, the eight DMRSs correspond to eight cyclic shift values shown in Table 3, the two DMRSs indicated by the first indication information respectively correspond to $\gamma_0 = 2\pi \cdot \frac{0}{8}$ and $\gamma_1 = 2\pi \cdot \frac{1}{8}$, and the cyclic shift segment size that is of the first group of DMRSs and that is indicated by the third indication information is $2\pi \cdot \frac{1}{8}$, indicating that a size of cyclic shift space or orthogonal code division space occupied by each DMRS allocated to the first terminal is $2\pi \cdot \frac{1}{8}$. Optionally, the third indication information and the first indication information are carried in different fields of a same piece of signaling, for example, carried in different fields of a same piece of DCI. Alternatively, the third indication information and the first indication information are carried in different signaling. For example, the third indication information is carried in RRC, and the first indication information is carried in DCI.

In an implementation method, one or more tables may be defined in embodiments of this application, and both the terminal and the base station may pre-store one or more of the following tables. The embodiment in FIG. 19(a) may be implemented with reference to the following tables. For example, the tables are shown as follows.

In the following example, a DMRS port number group is also referred to as a DMRS port group, a port number group, or a port group. One DMRS port number group includes one or more DMRS ports, and each DMRS port number corresponds to one DMRS.

In an example, in an OFDM waveform, when being used as the Type1 DMRS, the DMRS occupies one OFDM symbol, a time-frequency resource mapping pattern of the DMRS is shown in FIG. 2(a). When rank=1, a DMRS port number group may be shown in Table 7(a) below.

**Table 7(a)**

| Field value (value) | DMRS port number group (DMRS port(s)) |
|---|---|
| 0 | 0 |
| 1 | 1 |
| 2 | 2 |
| 3 | 3 |
| ... | ... |

Based on the foregoing descriptions, in the example in FIG. 2(a), the DMRS set includes two DMRSs corresponding to the ports {0 and 1}, or includes two DMRSs corresponding to the ports {2 and 3}. If the at least two DMRS sets in step 1901a include the DMRS set herein including the two DMRSs corresponding to the ports {0 and 1}, when the first indication information is the field value 0 in Table 7(a), it indicates that one DMRS corresponding to the port 0 is indicated to the first terminal; or when the first indication information is the field value 1 in Table 7(a), it indicates that the DMRS corresponding to the port 1 is indicated to the first terminal. If the at least two DMRS sets in step 1901a include the DMRS set herein including the two DMRSs corresponding to the ports {2 and 3}, when the first indication information is the field value 2 in Table 7(a), it indicates that one DMRS corresponding to the port 2 is indicated to the first terminal; or when the first indication information is the field value 3 in Table 7(a), it indicates that the DMRS corresponding to the port 3 is indicated to the first terminal.

In an example, in an OFDM waveform, when being used as the Type1 DMRS, the DMRS occupies one OFDM symbol, a time-frequency resource mapping pattern of the DMRS is shown in FIG. 2(a). When rank=2, a DMRS port number group may be shown in Table 7(b) below.

**Table 7(b)**

| Field value (value) | DMRS port number group (DMRS port(s)) |
|---|---|
| 0 | 0 and 1 |
| 1 | 2 and 3 |
| ... | ... |

Based on the foregoing descriptions, in the example in FIG. 2(a), the DMRS set includes two DMRSs corresponding to the ports {0 and 1}, or includes two DMRSs corresponding to the ports {2 and 3}. If the at least two DMRS sets in step 1901a include the DMRS set herein including the two DMRSs corresponding to the ports {0 and 1}, when the first indication information is the field value 0 in Table 7(b), it indicates that the two DMRSs corresponding to the ports {0 and 1} are indicated to the first terminal. If the at least two DMRS sets in step 1901a include the DMRS set herein including the two DMRSs corresponding to the ports {2 and 3}, when the first indication information is the field value 1 in Table 7(b), it indicates that the two DMRSs corresponding to the ports {2 and 3} are indicated to the first terminal.

In another example, in an OFDM waveform, when being used as the Type1 DMRS, the DMRS occupies one OFDM symbol, a time-frequency resource mapping pattern of the DMRS is shown in FIG. 11(a). When rank=1, a DMRS port number group may be shown in Table 8(a) below.

**Table 8(a)**

| Field value (value) | DMRS port number group (DMRS port(s)) |
|---|---|
| 0 | 0 |
| 1 | 1 |
| 2 | 2 |
| 3 | 3 |
| 4 | 4 |
| 5 | 5 |
| 6 | 6 |
| 7 | 7 |
| ... | ... |

Based on the foregoing descriptions, in the example in FIG. 11(a), the DMRS set includes four DMRSs corresponding to the ports {0, 1, 2, and 3}, or includes four DMRSs corresponding to the ports {4, 5, 6, and 7}. If the at least two DMRS sets in step 1901a include the DMRS set herein including the four DMRSs corresponding to the ports {0, 1, 2, and 3}, when the first indication information is the field value 0 in Table 8(a), it indicates that one DMRS corresponding to the port {0} is indicated to the first terminal; when the first indication information is the field value 1 in Table 8(a), it indicates that one DMRS corresponding to the port {1} is indicated to the first terminal; when the first indication information is the field value 2 in Table 8(a), it indicates that one DMRS corresponding to the port {2} is indicated to the first terminal;

or when the first indication information is the field value 3 in Table 8(a), it indicates that one DMRS corresponding to the port {3} is indicated to the first terminal. If the at least two DMRS sets in step 1901a include the DMRS set herein including the four DMRSs corresponding to the ports {4, 5, 6, and 7}, when the first indication information is the field value 4 in Table 8(a), it indicates that one DMRS corresponding to the port {4} is indicated to the first terminal; when the first indication information is the field value 5 in Table 8(a), it indicates that one DMRS corresponding to the port {5} is indicated to the first terminal; when the first indication information is the field value 6 in Table 8(a), it indicates that one DMRS corresponding to the port {6} is indicated to the first terminal; or when the first indication information is the field value 7 in Table 8(a), it indicates that one DMRS corresponding to the port {7} is indicated to the first terminal.

In another example, in an OFDM waveform, when being used as the Type1 DMRS, the DMRS occupies one OFDM symbol, a time-frequency resource mapping pattern of the DMRS is shown in FIG. 11(a). When rank=2, a DMRS port number group may be shown in Table 8(b) below.

**Table 8(b)**

| Field value (value) | DMRS port number group (DMRS port(s)) |
|---|---|
| 0 | 0 and 2 |
| 1 | 1 and 3 |
| 2 | 0 and 1 |
| 3 | 4 and 6 |
| 4 | 5 and 7 |
| 5 | 4 and 5 |
| ... | ... |

Based on the foregoing descriptions, in the example in FIG. 11(a), the DMRS set includes four DMRSs corresponding to the ports {0, 1, 2, and 3}, or includes four DMRSs corresponding to the ports {4, 5, 6, and 7}. If the at least two DMRS sets in step 1901a include the DMRS set herein including the four DMRSs corresponding to the ports {0, 1, 2, and 3}, when the first indication information is the field value 0 in Table 8(b), it indicates that two DMRSs corresponding to the ports {0 and 2} are indicated to the first terminal; when the first indication information is the field value 1 in Table 8(b), it indicates that two DMRSs corresponding to the ports {1 and 3} are indicated to the first terminal; or when the first indication information is the field value 2 in Table 8(b), it indicates that two DMRSs corresponding to the ports {0 and 1} are indicated to the first terminal. If the at least two DMRS sets in step 1901a include the DMRS set herein including the four DMRSs corresponding to the ports {4, 5, 6, and 7}, when the first indication information is the field value 3 in Table 8(b), it indicates that two DMRSs corresponding to the ports {4 and 6} are indicated to the first terminal; when the first indication information is the field value 4 in Table 8(b), it indicates that two DMRSs corresponding to the ports {5 and 7} are indicated to the first terminal; or when the first indication information is the field value 5 in Table 8(b), it indicates that two DMRSs corresponding to the ports {4 and 5} are indicated to the first terminal.

In another example, in an OFDM waveform, when being used as the Type1 DMRS, the DMRS occupies one OFDM symbol, a time-frequency resource mapping pattern of the DMRS is shown in FIG. 11(a). When rank=3, a DMRS port number group may be shown in Table 8(c) below.

**Table 8(c)**

| Field value (value) | DMRS port number group (DMRS port(s)) |
|---|---|
| 0 | 0, 1, and 2 |
| 1 | 4, 5, and 6 |
| ... | ... |

Based on the foregoing descriptions, in the example in FIG. 11(a), the DMRS set includes four DMRSs corresponding to the ports {0, 1, 2, and 3}, or includes four DMRSs corresponding to the ports {4, 5, 6, and 7}. If the at least two DMRS sets in step 1901a include the DMRS set herein including the four DMRSs corresponding to the ports {0, 1, 2, and 3}, when the first indication information is the field value 0 in Table 8(c), it indicates that three DMRSs corresponding to the ports {0, 1, and 2} are indicated to the first terminal. If the at least two DMRS sets in step 1901a include the DMRS set herein including the four DMRSs corresponding to the ports {4, 5, 6, and 7}, when the first indication information is

the field value 1 in Table 8(c), it indicates that three DMRSs corresponding to the ports {4, 5, and 6} are indicated to the first terminal.

In another example, in an OFDM waveform, when being used as the Type1 DMRS, the DMRS occupies one OFDM symbol, a time-frequency resource mapping pattern of the DMRS is shown in FIG. 11(a). When rank=4, a DMRS port number group may be shown in Table 8(d) below.

**Table 8(d)**

| Field value (value) | DMRS port number group (DMRS port(s)) |
|---|---|
| 0 | 0, 1, 2, and 3 |
| 1 | 4, 5, 6, and 7 |
| ... | ... |

Based on the foregoing descriptions, in the example in FIG. 11(a), the DMRS set includes four DMRSs corresponding to the ports {0, 1, 2, and 3}, or includes four DMRSs corresponding to the ports {4, 5, 6, and 7}. If the at least two DMRS sets in step 1901a include the DMRS set herein including the four DMRSs corresponding to the ports {0, 1, 2, and 3}, when the first indication information is the field value 0 in Table 8(d), it indicates that the four DMRSs corresponding to the ports {0, 1, 2, and 3} are indicated to the first terminal. If the at least two DMRS sets in step 1901a include the DMRS set herein including the four DMRSs corresponding to the ports {4, 5, 6, and 7}, when the first indication information is the field value 1 in Table 8(d), it indicates that the four DMRSs corresponding to the ports {4, 5, 6, and 7} are indicated to the first terminal.

In another example, in an OFDM waveform, when being used as the Type1 DMRS, the DMRS occupies one OFDM symbol, a time-frequency resource mapping pattern of the DMRS is shown in FIG. 11(c). When rank=1, a DMRS port number group may be shown in Table 9(a) below.

**Table 9(a)**

| Field value (value) | DMRS port number group (DMRS port(s)) |
|---|---|
| 0 | 0 |
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 10 | 10 |
| 11 | 11 |
| 12 | 12 |
| 13 | 13 |
| 14 | 14 |
| 15 | 15 |
| ... | ... |

Based on the foregoing descriptions, in the example in FIG. 11(c), the DMRS set includes four DMRSs corresponding to the ports {0, 1, 2, 3, 4, 5, 6, and 7}, or includes eight DMRSs corresponding to the ports {8, 9, 10, 11, 12, 13, 14, and 15}. If the at least two DMRS sets in step 1901a include the DMRS set herein including the eight DMRSs

corresponding to the ports {0, 1, 2, 3, 4, 5, 6, and 7}, when the first indication information is the field value 0 in Table 9(a), it indicates that one DMRS corresponding to the port {0} is indicated to the first terminal; when the first indication information is the field value 1 in Table 9(a), it indicates that one DMRS corresponding to the port {1} is indicated to the first terminal; when the first indication information is the field value 2 in Table 9(a), it indicates that one DMRS corresponding to the port {2} is indicated to the first terminal; when the first indication information is the field value 3 in Table 9(a), it indicates that one DMRS corresponding to the port {3} is indicated to the first terminal; when the first indication information is the field value 4 in Table 9(a), it indicates that one DMRS corresponding to the port {4} is indicated to the first terminal; when the first indication information is the field value 5 in Table 9(a), it indicates that one DMRS corresponding to the port {5} is indicated to the first terminal; when the first indication information is the field value 6 in Table 9(a), it indicates that one DMRS corresponding to the port {6} is indicated to the first terminal; or when the first indication information is the field value 7 in Table 9(a), it indicates that one DMRS corresponding to the port {7} is indicated to the first terminal. If the at least two DMRS sets in step 1901a include the DMRS set herein including the eight DMRSs corresponding to the ports {8, 9, 10, 11, 12, 13, 14, and 15}, when the first indication information is the field value 8 in Table 9(a), it indicates that one DMRS corresponding to the port {8} is indicated to the first terminal; when the first indication information is the field value 9 in Table 9(a), it indicates that one DMRS corresponding to the port {9} is indicated to the first terminal; when the first indication information is the field value 10 in Table 9(a), it indicates that one DMRS corresponding to the port {10} is indicated to the first terminal; when the first indication information is the field value 11 in Table 9(a), it indicates that one DMRS corresponding to the port {11} is indicated to the first terminal; when the first indication information is the field value 12 in Table 9(a), it indicates that one DMRS corresponding to the port {12} is indicated to the first terminal; when the first indication information is the field value 13 in Table 9(a), it indicates that one DMRS corresponding to the port {13} is indicated to the first terminal; when the first indication information is the field value 14 in Table 9(a), it indicates that one DMRS corresponding to the port {14} is indicated to the first terminal; or when the first indication information is the field value 15 in Table 9(a), it indicates that one DMRS corresponding to the port {15} is indicated to the first terminal.

In another example, in an OFDM waveform, when being used as the Type1 DMRS, the DMRS occupies one OFDM symbol, a time-frequency resource mapping pattern of the DMRS is shown in FIG. 11(c). When rank=2, a DMRS port number group may be shown in Table 9(b) below.

**Table 9(b)**

| Field value (value) | DMRS port number group (DMRS port(s)) |
|---|---|
| 0 | 0 and 2 |
| 1 | 1 and 3 |
| 2 | 0 and 1 |
| 3 | 4 and 6 |
| 4 | 5 and 7 |
| 5 | 4 and 5 |
| 6 | 8 and 10 |
| 7 | 9 and 11 |
| 8 | 8 and 9 |
| 9 | 12 and 14 |
| 10 | 13 and 15 |
| 11 | 12 and 13 |
| ... | ... |

Based on the foregoing descriptions, in the example in FIG. 11(c), the DMRS set includes four DMRSs corresponding to the ports {0, 1, 2, 3, 4, 5, 6, and 7}, or includes eight DMRSs corresponding to the ports {8, 9, 10, 11, 12, 13, 14, and 15}. If the at least two DMRS sets in step 1901a include the DMRS set herein including the eight DMRSs corresponding to the ports {0, 1, 2, 3, 4, 5, 6, and 7}, when the first indication information is the field value 0 in Table 9(b), it indicates that two DMRSs corresponding to the ports {0 and 2} are indicated to the first terminal; when the first indication information is the field value 1 in Table 9(b), it indicates that two DMRSs corresponding to the ports {1 and 3} are indicated to the first terminal; when the first indication information is the field value 2 in Table 9(b), it indicates that

two DMRSs corresponding to the ports {0 and 1} are indicated to the first terminal; when the first indication information is the field value 3 in Table 9(b), it indicates that two DMRSs corresponding to the ports {4 and 6} are indicated to the first terminal; when the first indication information is the field value 4 in Table 9(b), it indicates that two DMRSs corresponding to the ports {5 and 7} are indicated to the first terminal; or when the first indication information is the field value 5 in Table 9(b), it indicates that two DMRSs corresponding to the ports {4 and 5} are indicated to the first terminal. If the at least two DMRS sets in step 1901a include the DMRS set herein including the eight DMRSs corresponding to the ports {8, 9, 10, 11, 12, 13, 14, and 15}, when the first indication information is the field value 6 in Table 9(b), it indicates that two DMRSs corresponding to the ports {8 and 10} are indicated to the first terminal; when the first indication information is the field value 7 in Table 9(b), it indicates that two DMRSs corresponding to the ports {9 and 11} are indicated to the first terminal; when the first indication information is the field value 8 in Table 9(b), it indicates that two DMRSs corresponding to the ports {8 and 9} are indicated to the first terminal; when the first indication information is the field value 9 in Table 9(b), it indicates that two DMRSs corresponding to the ports {12 and 14} are indicated to the first terminal; when the first indication information is the field value 10 in Table 9(b), it indicates that two DMRSs corresponding to the ports {13 and 15} are indicated to the first terminal; or when the first indication information is the field value 11 in Table 9(b), it indicates that two DMRSs corresponding to the ports {12 and 13} are indicated to the first terminal.

In another example, in an OFDM waveform, when being used as the Type1 DMRS, the DMRS occupies one OFDM symbol, a time-frequency resource mapping pattern of the DMRS is shown in FIG. 11(c). When rank=3, a DMRS port number group may be shown in Table 9(c) below.

**Table 9(c)**

| Field value (value) | DMRS port number group (DMRS port(s)) |
|---|---|
| 0 | 0, 1, and 2 |
| 1 | 4, 5, and 6 |
| 2 | 8, 9, and 10 |
| 3 | 12, 13, and 14 |
| ... | ... |

Based on the foregoing descriptions, in the example in FIG. 11(c), the DMRS set includes four DMRSs corresponding to the ports {0, 1, 2, 3, 4, 5, 6, and 7}, or includes eight DMRSs corresponding to the ports {8, 9, 10, 11, 12, 13, 14, and 15}. If the at least two DMRS sets in step 1901a include the DMRS set herein including the eight DMRSs corresponding to the ports {0, 1, 2, 3, 4, 5, 6, and 7}, when the first indication information is the field value 0 in Table 9(c), it indicates that three DMRSs corresponding to the ports {0, 1, and 2} are indicated to the first terminal; or when the first indication information is the field value 1 in Table 9(c), it indicates that three DMRSs corresponding to the ports {4, 5, and 6} are indicated to the first terminal. If the at least two DMRS sets in step 1901a include the DMRS set herein including the eight DMRSs corresponding to the ports {8, 9, 10, 11, 12, 13, 14, and 15}, when the first indication information is the field value 2 in Table 9(c), it indicates that three DMRSs corresponding to the ports {8, 9, and 10} are indicated to the first terminal; or when the first indication information is the field value 3 in Table 9(c), it indicates that three DMRSs corresponding to the ports {12, 13, and 14} are indicated to the first terminal.

In another example, in an OFDM waveform, when being used as the Type1 DMRS, the DMRS occupies one OFDM symbol, a time-frequency resource mapping pattern of the DMRS is shown in FIG. 11(c). When rank=4, a DMRS port number group may be shown in Table 9(d) below.

**Table 9(d)**

| Field value (value) | DMRS port number group (DMRS port(s)) |
|---|---|
| 0 | 0, 1, 2, and 3 |
| 1 | 4, 5, 6, and 7 |
| 2 | 8, 9, 10, and 11 |
| 3 | 12, 13, 14, and 15 |
| ... | ... |

Based on the foregoing descriptions, in the example in FIG. 11(c), the DMRS set includes four DMRSs corresponding to the ports {0, 1, 2, 3, 4, 5, 6, and 7}, or includes eight DMRSs corresponding to the ports {8, 9, 10, 11, 12, 13, 14, and 15}. If the at least two DMRS sets in step 1901a include the DMRS set herein including the eight DMRSs corresponding to the ports {0, 1, 2, 3, 4, 5, 6, and 7}, when the first indication information is the field value 0 in Table 9(d), it indicates that four DMRSs corresponding to the ports {0, 1, 2, and 3} are indicated to the first terminal; or when the first indication information is the field value 1 in Table 9(d), it indicates that four DMRSs corresponding to the ports {4, 5, 6, and 7} are indicated to the first terminal. If the at least two DMRS sets in step 1901a include the DMRS set herein including the eight DMRSs corresponding to the ports {8, 9, 10, 11, 12, 13, 14, and 15}, when the first indication information is the field value 2 in Table 9(d), it indicates that four DMRSs corresponding to the ports {8, 9, 10, and 11} are indicated to the first terminal; or when the first indication information is the field value 3 in Table 9(d), it indicates that four DMRSs corresponding to the ports {12, 13, 14, and 15} are indicated to the first terminal.

In another implementation method, for a rank value, two or more tables in Table 7(a), Table 7(b), Table 8(a) to Table 8(d), and Table 9(a) to Table 9(d) may alternatively be combined into one table. For example, for rank=2, Table 7(b) and Table 8(b) may be written into one table, as shown in Table 10 below.

**Table 10**

| Field value (value) | DMRS port number group (DMRS port(s)) |
|---|---|
| 0 | 0 and 1 |
| 1 | 2 and 3 |
| 2 | 0 and 2 |
| 3 | 1 and 3 |
| 4 | 0 and 1 |
| 5 | 4 and 6 |
| 6 | 5 and 7 |
| 7 | 4 and 5 |
| ... | ... |

In Table 10, the field values 0 and 1 correspond to Table 7(b), and the field values 2 to 7 correspond to Table 8(b).

It should be noted that, for other DMRS types such as a dual-symbol Type1 DMRS, a single-symbol Type2 DMRS, and a dual-symbol Type2 DMRS, in another rank value condition, there may also be similar tables. Details are not listed one by one.

Based on the foregoing descriptions, embodiments of this application propose increasing a quantity of DMRSs to increase a quantity of layers of transmitted data, thereby achieving an objective of improving a transmission rate. However, when the DMRS is increased, the delay spread amount of the terminal is further limited. For example, when two DMRSs are expanded to four DMRSs, the expanded DMRSs may be allocated to a plurality of terminals whose delay spread amounts are not greater than N/4 for multiplexing. However, actually, there are terminals whose delay spread amounts are greater than N/4. In this design, the terminals cannot be paired. To be specific, the expanded DMRSs cannot enable DMRS multiplexing to be performed between a terminal having a small delay spread amount and a terminal having a large delay spread amount.

To enable DMRS multiplexing to be performed between terminals having different delay spread amounts, embodiments of this application provide a corresponding solution. The following uses an example in which DMRS multiplexing is performed between two terminals for description. An implementation method in which DMRS multiplexing is performed between more than two terminals is similar to a method in which DMRS multiplexing is performed between two terminals. Details are not described again.

FIG. 19(b) is a schematic diagram of a communication method according to an embodiment of this application. The method includes the following steps.

Step 1901b: A base station sends first indication information to a first terminal. Correspondingly, the first terminal receives the first indication information.

Step 1902b: The base station sends a DMRS in a first group of DMRSs to the first terminal, or the first terminal sends a DMRS in a first group of DMRSs to the base station.

Specific implementations of step 1901b and step 1902b are the same as those of step 1901a and step 1902a. Details are not described again.

Step 1903b: The base station sends fourth indication information to a second terminal. Correspondingly, the second terminal receives the fourth indication information.

Optionally, the fourth indication information is included in DCI.

The fourth indication information indicates a second group of DMRSs, the second group of DMRSs include at least one DMRS, and the second group of DMRSs belong to a second DMRS set in at least two DMRS sets.

Step 1904b: The base station sends the DMRS in the second group of DMRSs to the second terminal, or the second terminal sends the DMRS in the second group of DMRSs to the base station.

In an implementation method, if in step 1902b, the base station sends the DMRS in the first group of DMRSs to the first terminal, in step 1904b, the base station sends the DMRS in the second group of DMRSs to the second terminal, so that the terminals may obtain the DMRS in the first group of DMRSs and the DMRS in the second group of DMRSs.

In another implementation method, if in step 1902b, the first terminal obtains the DMRS in the first group of DMRSs based on the first indication information, and then sends the DMRS in the first group of DMRSs to the base station, in step 1904b, the second terminal obtains the DMRS in the second group of DMRSs based on the fourth indication information, and then sends the DMRS in the second group of DMRSs to the base station.

According to the foregoing solution, when a reference signal is allocated to a terminal (for example, the first terminal or the second terminal), a minimum cyclic shift interval corresponding to a delay spread amount requirement of the terminal may be determined based on the delay spread amount requirement of the terminal, and one or more reference signals may be selected from a reference signal set corresponding to the minimum cyclic shift interval and configured for the terminal, so that the reference signal is flexibly and efficiently configured for the terminal based on the delay spread amount requirement of the terminal. In addition, when a plurality of terminals perform code division orthogonal multiplexing on DMRSs, reference signals in different DMRS sets may be configured for different terminals, so that code division orthogonal multiplexing is performed on the DMRSs between the plurality of terminals, thereby reducing time-frequency resource overheads. In addition, because minimum cyclic shift intervals corresponding to different DMRS sets are different from each other, code division orthogonal multiplexing may be performed on the DMRSs between terminals having different delay spread amount requirements, that is, code division multiplexing is performed between a terminal having a low delay spread amount requirement and a terminal having a high delay spread amount requirement, thereby fully improving a code division orthogonal multiplexing capability.

In an implementation method, a first minimum cyclic shift interval corresponding to a first DMRS set is a default value, is indicated by using the first indication information, or is indicated by using second indication information. For a specific implementation, refer to the descriptions in the embodiment in FIG. 19(a). Details are not described again.

In an implementation method, a second minimum cyclic shift interval corresponding to a second DMRS set is a default value, is indicated by using the fourth indication information, or is indicated by using sixth indication information. A specific implementation is similar to various implementation methods of the first minimum cyclic shift value. For details, refer to the foregoing descriptions. Details are not described again. Optionally, the sixth indication information and the fourth indication information are carried in different fields of a same piece of signaling, for example, carried in different fields of a same piece of DCI. Alternatively, the sixth indication information and the fourth indication information are carried in different signaling. For example, the sixth indication information is carried in RRC, and the fourth indication information is carried in DCI.

The first minimum cyclic shift interval corresponding to the first DMRS set is different from the second minimum cyclic shift interval corresponding to the second DMRS set.

In an implementation method, the base station may further send third indication information to the first terminal, where the third indication information indicates a cyclic shift segment size of the first group of DMRSs, and send fifth indication information to the second terminal, where the fifth indication information indicates a cyclic shift segment size of the second group of DMRSs. The cyclic shift segment size of the first group of DMRSs is different from the cyclic shift segment size of the second group of DMRSs. The cyclic shift segment size is a size of cyclic shift space or orthogonal code division space occupied by the DMRS allocated to the terminal. FIG. 16(b) is a schematic diagram of cyclic shift segment sizes. A cyclic shift segment size corresponding to a DMRS allocated to a terminal 1 is $2\pi \cdot \frac{1}{8}$, a cyclic shift segment size corresponding to a DMRS allocated to a terminal 2 is $2\pi \cdot \frac{1}{4}$, and a cyclic shift segment size corresponding to a DMRS allocated to a terminal 3 is $2\pi \cdot \frac{1}{2}$. For example, if the first terminal is the terminal 1, and the second terminal is the terminal 2, the cyclic shift segment size of the first group of DMRSs allocated to the first terminal is $2\pi \cdot \frac{1}{8}$, and

the cyclic shift segment size of the second group of DMRSs allocated to the second terminal is $2\pi \cdot \frac{1}{4}$. If the first terminal is the terminal 2, and the second terminal is the terminal 3, the cyclic shift segment size of the first group of DMRSs allocated to the first terminal is $2\pi \cdot \frac{1}{4}$, and the cyclic shift segment size of the second group of DMRSs allocated to the second terminal is $2\pi \cdot \frac{1}{2}$.

In an implementation method, the base station allocates DMRSs to a plurality of terminals, that is, code division multiplexing is performed on the DMRSs between the plurality of terminals. The plurality of terminals include the first terminal and the second terminal. For example, a total quantity of DMRSs allocated to the plurality of terminals is N, where N is an integer greater than 1. The N DMRSs are in a one-to-one correspondence with N cyclic shift values, each DMRS corresponds to one cyclic shift value, and the N DMRSs include the first group of DMRSs and the second group of DMRSs. The N cyclic shift values are different from each other, the N cyclic shift values correspond to N cyclic shift intervals, any one of the N cyclic shift intervals indicates an interval that is between two cyclic shift values whose values are adjacent and that is in the N cyclic shift intervals, and at least two of the N cyclic shift intervals have different values.

The following provides descriptions with reference to an example. FIG. 16(c) is a schematic diagram of cyclic shift intervals. It is assumed that code division multiplexing is performed on DMRSs between the terminal 1, the terminal 2, and the terminal 3, where the first terminal and the second terminal may be any two different terminals of the terminal 1, the terminal 2, and the terminal 3. A cyclic shift value corresponding to the DMRS allocated to the terminal 1 is $2\pi \cdot \frac{0}{8}$ and $2\pi \cdot \frac{1}{8}$, a cyclic shift value corresponding to the DMRS allocated to the terminal 2 is $2\pi \cdot \frac{1}{4}$, and a cyclic shift value corresponding to the DMRS allocated to the terminal 3 is $2\pi \cdot \frac{1}{2}$. Therefore, a total quantity N of DMRSs allocated to the terminal 1, the terminal 2, and the terminal 3 is 4, and the four cyclic shift values corresponding to the four DMRSs include $2\pi \cdot \frac{0}{8}$, $2\pi \cdot \frac{1}{8}$, $2\pi \cdot \frac{1}{4}$, and $2\pi \cdot \frac{1}{2}$. Therefore, four cyclic shift intervals may be obtained, which are respectively:

cyclic shift interval 1:

$$2\pi \cdot \frac{1}{8} - 2\pi \cdot \frac{0}{8} = 2\pi \cdot \frac{1}{8};$$

cyclic shift interval 2:

$$2\pi \cdot \frac{1}{4} - 2\pi \cdot \frac{1}{8} = 2\pi \cdot \frac{1}{8};$$

cyclic shift interval 3:

$$2\pi \cdot \frac{1}{2} - 2\pi \cdot \frac{1}{4} = 2\pi \cdot \frac{1}{4};$$

and

cyclic shift interval 4:

$$2\pi \cdot \frac{0}{8} + 2\pi - 2\pi \cdot \frac{1}{2} = 2\pi \cdot \frac{1}{2}.$$

It should be noted that, when the last cyclic shift interval is calculated, because an adjacent next cyclic shift

value (that is, the smallest cyclic shift value $2\pi \cdot \frac{0}{8}$ ) is smaller than an adjacent previous cyclic shift value (that is, the largest cyclic shift value $2\pi \cdot \frac{1}{2}$ ), when the cyclic shift interval is calculated, $2\pi$ needs to be added before calculation.

With reference to Table 1 to Table 6, the following describes specific examples of code division multiplexing performed on DMRSs between the terminals having different delay spread amount requirements.

(1) Type1 DMRS scenario

In the following examples, for values of $\alpha$, $\beta$, and $\gamma$, refer to Table 1 to Table 3.

In an example, code division multiplexing is performed on DMRSs between the terminal 1 and the terminal 2, and a delay spread amount corresponding to the terminal 2 is twice a delay spread amount corresponding to the terminal 1. The base station allocates two DMRSs to the terminal 1, and the two DMRSs respectively correspond to $\beta_0$ and $\beta_1$. The base station allocates one DMRS to the terminal 2, and the DMRS corresponds to $\alpha_1$. For this example, refer to FIG. 17(a). This example may be understood as that orthogonal multiplexing is performed on cyclic shift orthogonal space between the terminal 1 of a rank = 2 and the terminal 2 of a rank = 1.

In another example, code division multiplexing is performed on DMRSs between the terminal 1, the terminal 2, and the terminal 3. A delay spread amount corresponding to the terminal 3 is twice a delay spread amount corresponding to the terminal 2, and the delay spread amount corresponding to the terminal 2 is twice a delay spread amount corresponding to the terminal 1. The base station allocates two DMRSs to the terminal 1, and the two DMRSs respectively correspond to $\gamma_0$ and $\gamma_1$. The base station allocates one DMRS to the terminal 2, and the DMRS corresponds to $\beta_1$. The base station allocates one DMRS to the terminal 3, and the DMRS corresponds to $\alpha_1$. For this example, refer to FIG. 17(b). This example may be understood as that orthogonal multiplexing is performed on cyclic shift orthogonal space between the terminal 1 of a rank = 2, the terminal 2 of a rank = 1, and the terminal 3 of a rank = 1.

(2) Type2 DMRS scenario

In the following examples, for values of $\alpha$, $\beta$, and $\gamma$, refer to Table 4 to Table 6.

In an example, code division multiplexing is performed on DMRSs between the terminal 1 and the terminal 2, and a delay spread amount corresponding to the terminal 2 is twice a delay spread amount corresponding to the terminal 1. The base station allocates two DMRSs to the terminal 1, and the two DMRSs respectively correspond to $\beta_0$ and $\beta_1$. The base station allocates one DMRS to the terminal 2, and the DMRS corresponds to $\alpha_0$. For this example, refer to FIG. 18(a). ADMRS 3 and a DMRS 4 are allocated to the terminal 1, and a DMRS 2 is allocated to the terminal 2. The DMRS 2 herein has a same meaning as the DMRS 2 in FIG. 15(a), and the DMRS 3 and the DMRS 4 have a same meaning as the DMRS 3 and the DMRS 4 in FIG. 15(b). This example may be understood as that orthogonal multiplexing is performed on cyclic shift orthogonal space between the terminal 1 of a rank = 2 and the terminal 2 of a rank = 1.

In another example, code division multiplexing is performed on DMRSs between the terminal 1, the terminal 2, and the terminal 3. A delay spread amount corresponding to the terminal 3 is twice a delay spread amount corresponding to the terminal 2, and the delay spread amount corresponding to the terminal 2 is twice a delay spread amount corresponding to the terminal 1. The base station allocates two DMRSs to the terminal 1, and the two DMRSs respectively correspond to $\gamma_0$ and $\gamma_1$. The base station allocates one DMRS to the terminal 2, and the DMRS corresponds to $\beta_1$. The base station allocates one DMRS to the terminal 3, and the DMRS corresponds to $\alpha_0$. For this example, refer to FIG. 18(b). A DMRS 7 and a DMRS 8 are allocated to the terminal 1, a DMRS 4 is allocated to the terminal 2, and a DMRS 2 is allocated to the terminal 3. The DMRS 2 herein has a same meaning as the DMRS 2 in FIG. 15(a), the DMRS 4 has a same meaning as the DMRS 4 in FIG. 15(b), and the DMRS 7 and the DMRS 8 have a same meaning as the DMRS 7 and the DMRS 8 in FIG. 15(c). This example may be understood as that orthogonal multiplexing is performed on cyclic shift orthogonal space between the terminal 1 of a rank = 2, the terminal 2 of a rank = 1, and the terminal 3 of a rank = 1.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application may be implemented by hardware or a combination of hardware and computer software. Whether a function is performed by hardware or hardware driven by computer software depends on a particular application scenario and a design constraint condition of the technical solutions.

FIG. 20 and FIG. 21 each are a schematic diagram of a structure of a possible communication apparatus according to an embodiment of this application. The communication apparatuses may be configured to implement a

function of the terminal or the base station in the foregoing method embodiments, and therefore can also achieve beneficial effects of the foregoing method embodiments. In embodiments of this application, the communication apparatus may be one of the terminals 120a to 120j shown in FIG. 1, may be the base station 110a or 110b shown in FIG. 1, or may be a module (for example, a chip) used in the terminal or the base station.

As shown in FIG. 20, the communication apparatus 2000 includes a processing unit 2010 and a transceiver unit 2020. The communication apparatus 2000 is configured to implement a function of the terminal or the base station in the method embodiment shown in FIG. 19(a) or FIG. 19(b).

In a first embodiment, when the communication apparatus 2000 is configured to implement the function of the base station in the method embodiment shown in FIG. 19(a) or FIG. 19(b), the transceiver unit 2020 is configured to send first indication information to a first terminal, where the first indication information indicates a first group of reference signals, the first group of reference signals include at least one reference signal, the reference signal in the first group of reference signals belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource; and the transceiver unit 2020 is further configured to: send the at least one reference signal in the first group of reference signals to the first terminal, or receive the at least one reference signal in the first group of reference signals from the first terminal.

In a possible implementation method, the first indication information further indicates a first minimum cyclic shift interval, and the first minimum cyclic shift interval corresponds to the first reference signal set.

In a possible implementation method, the transceiver unit 2020 is further configured to send second indication information to the first terminal, where the second indication information indicates a first minimum cyclic shift interval, and the first minimum cyclic shift interval corresponds to the first reference signal set.

In a possible implementation method, each reference signal in the at least two reference signal sets corresponds to one cyclic shift value, the first group of reference signals include at least two reference signals, the at least two reference signals belong to the first reference signal set, and cyclic shift values corresponding to the at least two reference signals are adjacent.

In a possible implementation method, that cyclic shift values respectively corresponding to the at least two reference signals are adjacent includes: Indexes of the cyclic shift values respectively corresponding to the at least two reference signals are consecutive, where the index of the cyclic shift value is for identifying the cyclic shift value.

In a possible implementation method, the transceiver unit 2020 is further configured to send third indication information to the first terminal, where the third indication information indicates a cyclic shift segment size of the first group of reference signals.

In a possible implementation method, the transceiver unit 2020 is further configured to send fourth indication information to a second terminal, where the fourth indication information indicates a second group of reference signals, the second group of reference signals include at least one reference signal, the reference signal in the second group of reference signals belongs to a second reference signal set, the second reference signal set is one of the at least two reference signal sets, and the second reference signal set is different from the first reference signal set.

In a possible implementation method, the transceiver unit 2020 is further configured to: send third indication information to the first terminal, where the third indication information indicates a cyclic shift segment size of the first group of reference signals, and send fifth indication information to the second terminal, where the fifth indication information indicates a cyclic shift segment size of the second group of reference signals, where the cyclic shift segment size of the first group of reference signals is different from the cyclic shift segment size of the second group of reference signals.

In a possible implementation method, N reference signals allocated to at least two terminals are in a one-to-one correspondence with N cyclic shift values, the at least two terminals include the first terminal and the second terminal, the N reference signals include the first group of reference signals and the second group of reference signals, the N cyclic shift values are different from each other, the N cyclic shift values correspond to N cyclic shift intervals, any one of the N cyclic shift intervals indicates an interval that is between two cyclic shift values whose values are adjacent and that is in the N cyclic shift intervals, at least two of the N cyclic shift intervals have different values, and N is an integer greater than 1. In a second embodiment, when the communication apparatus 2000 is configured to implement the function of the first terminal in the method embodiment shown in FIG. 19(a) or FIG. 19(b), the transceiver unit 2020 is configured to receive first indication information from a radio access network device, where the first indication information indicates a first group of reference signals, the first group of reference signals include at least one reference signal, the reference signal in the first group of reference signals belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource; and the processing unit 2010 is configured to obtain the at least one reference signal in the first group of reference signals based on the first indication information.

In a possible implementation method, the first indication information further indicates a first minimum cyclic

shift interval, and the first minimum cyclic shift interval corresponds to the first reference signal set.

In a possible implementation method, the transceiver unit 2020 is further configured to receive second indication information from the radio access network device, where the second indication information indicates a first minimum cyclic shift interval, and the first minimum cyclic shift interval corresponds to the first reference signal set.

In a possible implementation method, each reference signal in the at least two reference signal sets corresponds to one cyclic shift value, the first group of reference signals include at least two reference signals, the at least two reference signals belong to the first reference signal set, and cyclic shift values corresponding to the at least two reference signals are adjacent.

In a possible implementation method, that cyclic shift values respectively corresponding to the at least two reference signals are adjacent includes: Indexes of the cyclic shift values respectively corresponding to the at least two reference signals are consecutive, where the index of the cyclic shift value is for identifying the cyclic shift value.

In a possible implementation method, the transceiver unit 2020 is further configured to receive third indication information from the radio access network device, where the third indication information indicates a cyclic shift segment size of the first group of reference signals.

For more detailed descriptions of the processing unit 2010 and the transceiver unit 2020, directly refer to related descriptions in the method embodiment shown in FIG. 19(a) or FIG. 19(b). Details are not described herein again.

As shown in FIG. 21, the communication apparatus 2100 includes a processor 2110 and an interface circuit 2120. The processor 2110 and the interface circuit 2120 are coupled to each other. It may be understood that the interface circuit 2120 may be a transceiver or an input/output interface. Optionally, the communication apparatus 2100 may further include a memory 2130, configured to: store instructions executed by the processor 2110, store input data required by the processor 2110 to run the instructions, or store data generated after the processor 2110 runs the instructions.

When the communication apparatus 2100 is configured to implement the method shown in FIG. 19(a) or FIG. 19(b), the processor 2110 is configured to implement a function of the processing unit 2010, and the interface circuit 2120 is configured to implement a function of the transceiver unit 2020.

When the communication apparatus is a chip used in a terminal, the chip in the terminal implements the function of the terminal in the foregoing method embodiments. The chip in the terminal receives information from another module (for example, a radio frequency module or an antenna) in the terminal, where the information is sent by a base station to the terminal; or the chip in the terminal sends information to another module (for example, a radio frequency module or an antenna) in the terminal, where the information is sent by the terminal to a base station.

When the communication apparatus is a module used in a base station, the module in the base station implements the function of the base station in the foregoing method embodiments. Th module in the base station receives information from another module (for example, a radio frequency module or an antenna) in the base station, where the information is sent by a terminal to the base station; or the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

The method steps in embodiments of this application may be implemented by hardware, or may be implemented by the processor by executing software instructions. The software instructions may include corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and can write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by software, hardware, firmware, or any combination thereof. When the software is used to implement the embodiments, all or some of the embodiments may be implemented in a form of a computer program product. The computer program product includes one or more computer programs or instructions. The computer program (English: computer program) is a set of instructions that indicate each

action of an electronic computer or another device having a message processing capability, and is usually written in a program design language and is run on a target architecture. When the computer programs or the instructions are loaded and executed on a computer, all or some of the procedures or functions in embodiments of this application are executed. The computer may be a general-purpose computer, a dedicated computer, a computer network, a base station, a terminal, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for distinguishing for ease of description, and are not intended to limit the scope of embodiments of this application. The sequence numbers of the foregoing processes do not mean execution sequences. The execution sequences of the processes should be determined based on functions and internal logic of the processes.

## Claims

**1.** A communication method, comprising:

sending first indication information to a first terminal, wherein the first indication information indicates a first group of reference signals, the first group of reference signals comprise at least one reference signal, the reference signal in the first group of reference signals belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource; and

sending the at least one reference signal in the first group of reference signals to the first terminal, or receiving the at least one reference signal in the first group of reference signals from the first terminal.

**2.** The method according to claim 1, wherein
the first indication information further indicates a first minimum cyclic shift interval, and the first minimum cyclic shift interval corresponds to the first reference signal set.

**3.** The method according to claim 1, further comprising:
sending second indication information to the first terminal, wherein the second indication information indicates a first minimum cyclic shift interval, and the first minimum cyclic shift interval corresponds to the first reference signal set.

**4.** The method according to any one of claims 1 to 3, wherein
each reference signal in the at least two reference signal sets corresponds to one cyclic shift value, the first group of reference signals comprise at least two reference signals, the at least two reference signals belong to the first reference signal set, and cyclic shift values respectively corresponding to the at least two reference signals are adjacent.

**5.** The method according to claim 4, wherein that cyclic shift values respectively corresponding to the at least two reference signals are adjacent comprises:

indexes of the cyclic shift values respectively corresponding to the at least two reference signals are consecutive, wherein the index of the cyclic shift value is for identifying the cyclic shift value.

6. The method according to any one of claims 1 to 5, further comprising: sending third indication information to the first terminal, wherein the third indication information indicates a cyclic shift segment size of the first group of reference signals.

7. The method according to any one of claims 1 to 5, further comprising: sending fourth indication information to a second terminal, wherein the fourth indication information indicates a second group of reference signals, the second group of reference signals comprise at least one reference signal, the reference signal in the second group of reference signals belongs to a second reference signal set, the second reference signal set is one of the at least two reference signal sets, and the second reference signal set is different from the first reference signal set.

8. The method according to claim 7, further comprising:

sending third indication information to the first terminal, wherein the third indication information indicates a cyclic shift segment size of the first group of reference signals; and
sending fifth indication information to the second terminal, wherein the fifth indication information indicates a cyclic shift segment size of the second group of reference signals, wherein
the cyclic shift segment size of the first group of reference signals is different from the cyclic shift segment size of the second group of reference signals.

9. The method according to claim 7 or 8, wherein N reference signals allocated to at least two terminals are in a one-to-one correspondence with N cyclic shift values, the at least two terminals comprise the first terminal and the second terminal, the N reference signals comprise the first group of reference signals and the second group of reference signals, the N cyclic shift values are different from each other, the N cyclic shift values correspond to N cyclic shift intervals, any one of the N cyclic shift intervals indicates an interval that is between two cyclic shift values whose values are adjacent and that is in the N cyclic shift intervals, at least two of the N cyclic shift intervals have different values, and N is an integer greater than 1.

10. A communication method, comprising:

receiving first indication information from a radio access network device, wherein the first indication information indicates a first group of reference signals, the first group of reference signals comprise at least one reference signal, the reference signal in the first group of reference signals belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource; and
obtaining the at least one reference signal in the first group of reference signals based on the first indication information.

11. The method according to claim 10, wherein the first indication information further indicates a first minimum cyclic shift interval, and the first minimum cyclic shift interval corresponds to the first reference signal set.

12. The method according to claim 10, further comprising: receiving second indication information from the radio access network device, wherein the second indication information indicates a first minimum cyclic shift interval, and the first minimum cyclic shift interval corresponds to the first reference signal set.

13. The method according to any one of claims 10 to 12, wherein each reference signal in the at least two reference signal sets corresponds to one cyclic shift value, the first group of reference signals comprise at least two reference signals, the at least two reference signals belong to the first reference signal set, and cyclic shift values respectively corresponding to the at least two reference signals are adjacent.

14. The method according to claim 13, wherein that cyclic shift values respectively corresponding to the at least two

reference signals are adjacent comprises:
indexes of the cyclic shift values respectively corresponding to the at least two reference signals are consecutive, wherein the index of the cyclic shift value is for identifying the cyclic shift value.

**15.** The method according to any one of claims 10 to 13, further comprising:
receiving third indication information from the radio access network device, wherein the third indication information indicates a cyclic shift segment size of the first group of reference signals.

**16.** A communication apparatus, comprising:

a transceiver unit, configured to send first indication information to a first terminal, wherein the first indication information indicates a first group of reference signals, the first group of reference signals comprise at least one reference signal, the reference signal in the first group of reference signals belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource, wherein
the transceiver unit is further configured to: send the at least one reference signal in the first group of reference signals to the first terminal, or receive the at least one reference signal in the first group of reference signals from the first terminal.

**17.** The apparatus according to claim 16, wherein
the first indication information further indicates a first minimum cyclic shift interval, and the first minimum cyclic shift interval corresponds to the first reference signal set.

**18.** The apparatus according to claim 16, wherein the transceiver unit is further configured to send second indication information to the first terminal, wherein the second indication information indicates a first minimum cyclic shift interval, and the first minimum cyclic shift interval corresponds to the first reference signal set.

**19.** The apparatus according to any one of claims 16 to 18, wherein
each reference signal in the at least two reference signal sets corresponds to one cyclic shift value, the first group of reference signals comprise at least two reference signals, the at least two reference signals belong to the first reference signal set, and cyclic shift values respectively corresponding to the at least two reference signals are adjacent.

**20.** The apparatus according to any one of claims 16 to 19, wherein
the transceiver unit is further configured to send third indication information to the first terminal, wherein the third indication information indicates a cyclic shift segment size of the first group of reference signals.

**21.** The apparatus according to any one of claims 16 to 19, further comprising:
the transceiver unit is further configured to send fourth indication information to a second terminal, wherein the fourth indication information indicates a second group of reference signals, the second group of reference signals comprise at least one reference signal, the reference signal in the second group of reference signals belongs to a second reference signal set, the second reference signal set is one of the at least two reference signal sets, and the second reference signal set is different from the first reference signal set.

**22.** The apparatus according to claim 21, wherein the transceiver unit is further configured to:

send third indication information to the first terminal, wherein the third indication information indicates a cyclic shift segment size of the first group of reference signals; and
send fifth indication information to the second terminal, wherein the fifth indication information indicates a cyclic shift segment size of the second group of reference signals, wherein
the cyclic shift segment size of the first group of reference signals is different from the cyclic shift segment size of the second group of reference signals.

**23.** The apparatus according to claim 21 or 22, wherein N reference signals allocated to at least two terminals are in a one-to-one correspondence with N cyclic shift values, the at least two terminals comprise the first terminal and the second terminal, the N reference signals comprise the first group of reference signals and the second group of reference signals, the N cyclic shift values are different from each other, the N cyclic shift values correspond to N

cyclic shift intervals, any one of the N cyclic shift intervals indicates an interval that is between two cyclic shift values whose values are adjacent and that is in the N cyclic shift intervals, at least two of the N cyclic shift intervals have different values, and N is an integer greater than 1.

**24.** A communication apparatus, comprising:

a transceiver unit, configured to receive first indication information from a radio access network device, wherein the first indication information indicates a first group of reference signals, the first group of reference signals comprise at least one reference signal, the at least one reference signal belongs to a first reference signal set, the first reference signal set is one of at least two reference signal sets, minimum cyclic shift intervals respectively corresponding to the at least two reference signal sets are different from each other, and the at least two reference signal sets occupy a same time-frequency resource; and
a processing unit, configured to obtain the at least one reference signal in the first group of reference signals based on the first indication information.

**25.** The apparatus according to claim 24, wherein
the first indication information further indicates a first minimum cyclic shift interval, and the first minimum cyclic shift interval corresponds to the first reference signal set.

**26.** The apparatus according to claim 24, wherein
the transceiver unit is further configured to receive second indication information from the radio access network device, wherein the second indication information indicates a first minimum cyclic shift interval, and the first minimum cyclic shift interval corresponds to the first reference signal set.

**27.** The apparatus according to any one of claims 24 to 26, wherein
each reference signal in the at least two reference signal sets corresponds to one cyclic shift value, the first group of reference signals comprise at least two reference signals, the at least two reference signals belong to the first reference signal set, and cyclic shift values respectively corresponding to the at least two reference signals are adjacent.

**28.** The apparatus according to any one of claims 24 to 27, wherein
the transceiver unit is further configured to receive third indication information from the radio access network device, wherein the third indication information indicates a cyclic shift segment size of the first group of reference signals.

**29.** A communication apparatus, comprising a processor, wherein the processor is configured to perform the method according to any one of claims 1 to 15.

**30.** A communication apparatus, comprising a processor, wherein the processor is configured to execute instructions stored in a memory, to implement the method according to any one of claims 1 to 15.

**31.** A computer program product, storing instructions, wherein when the instructions are executed by a computer, the method according to any one of claims 1 to 15 is implemented.

**32.** A computer-readable storage medium, wherein the storage medium stores a computer program or instructions, and when the computer program or the instructions are executed, the method according to any one of claims 1 to 15 is implemented.

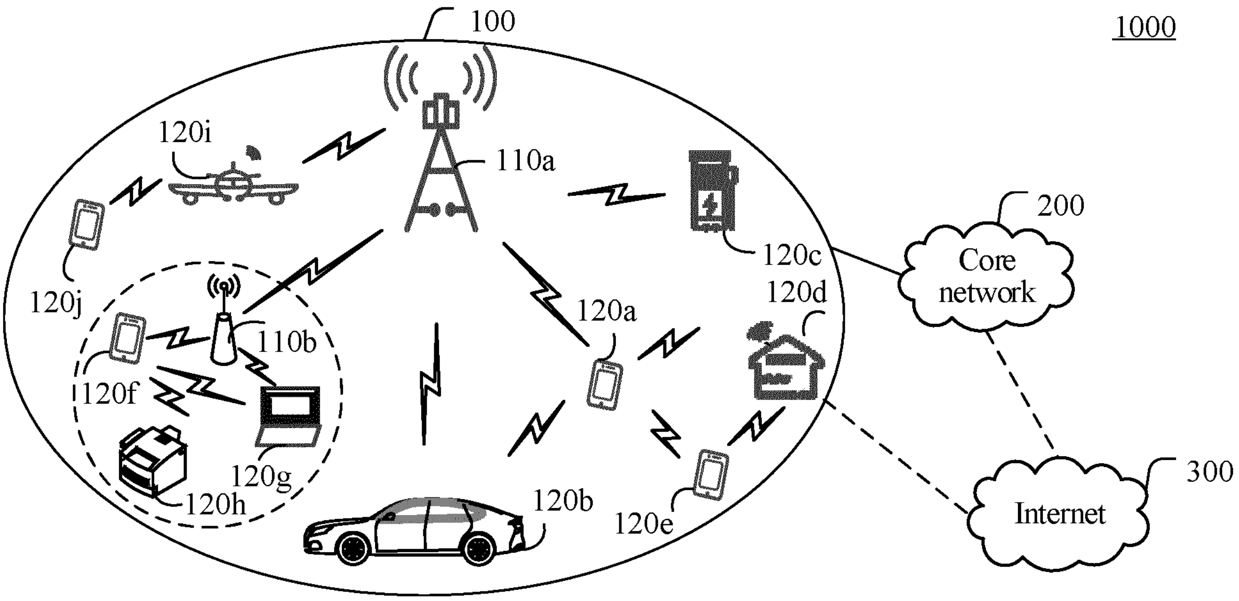
100
1000
120i
110a
200
Core network
120c
120j
120d
120a
110b
120f
300
120g
Internet
120h
120b
120e

FIG. 1(a)

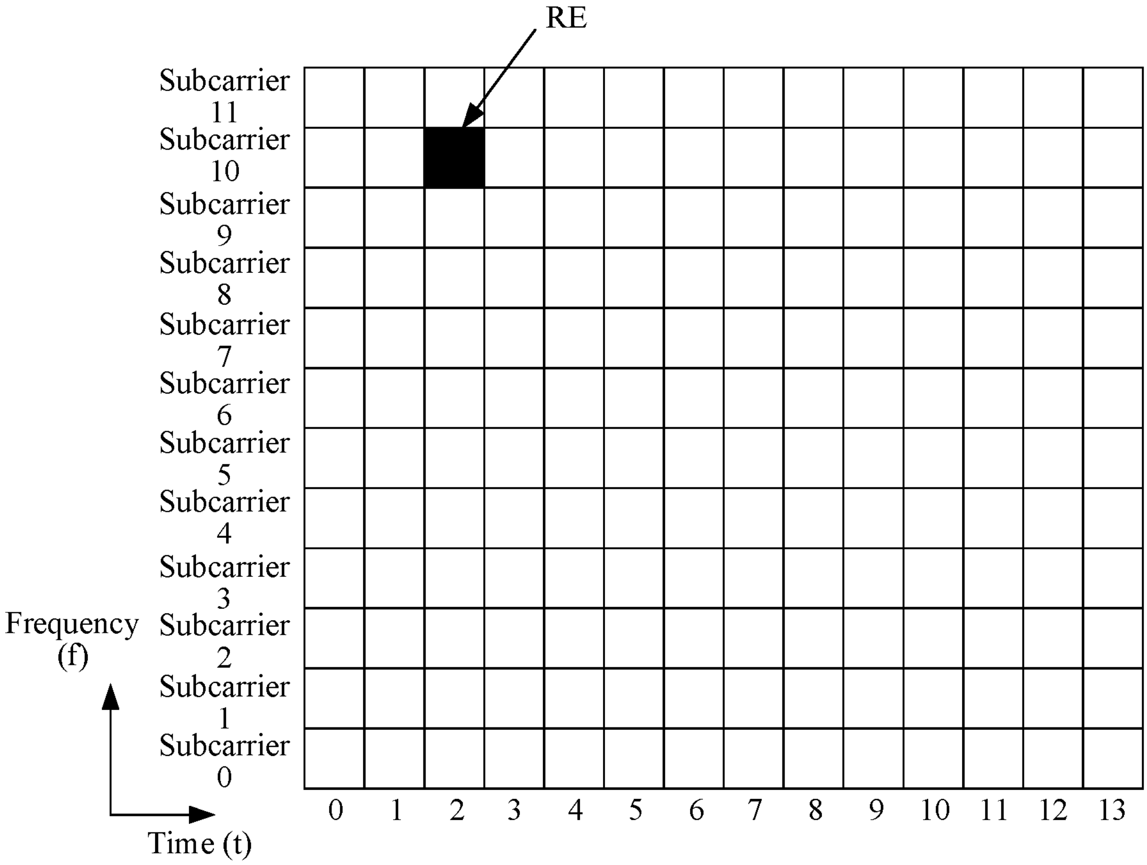
RE
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
Time (t)
0 1 2 3 4 5 6 7 8 9 10 11 12 13

FIG. 1(b)

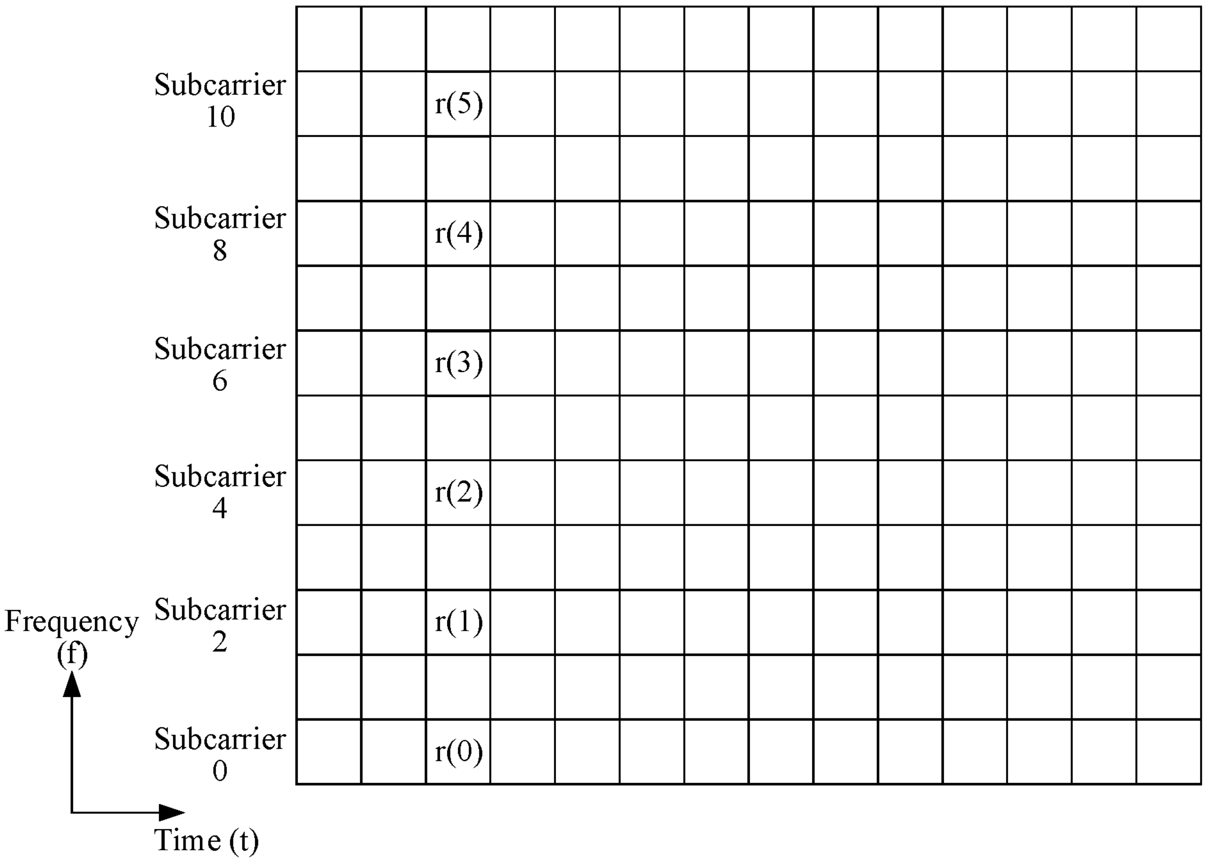
Subcarrier 10
r(5)
Subcarrier 8
r(4)
Subcarrier 6
r(3)
Subcarrier 4
r(2)
Frequency (f)
Subcarrier 2
r(1)
Subcarrier 0
r(0)
Time (t)

FIG. 1(c)

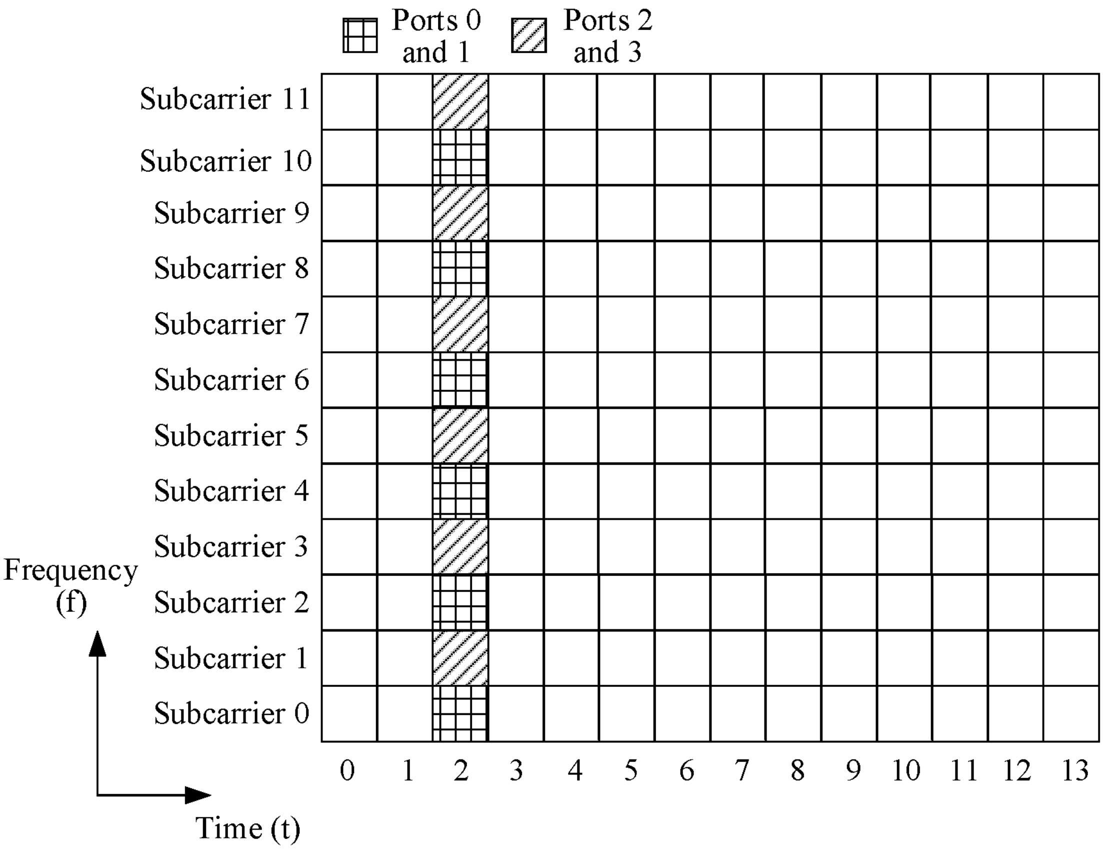
Ports 0 and 1
Ports 2 and 3
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
Time (t)
0 1 2 3 4 5 6 7 8 9 10 11 12 13

FIG. 2(a)

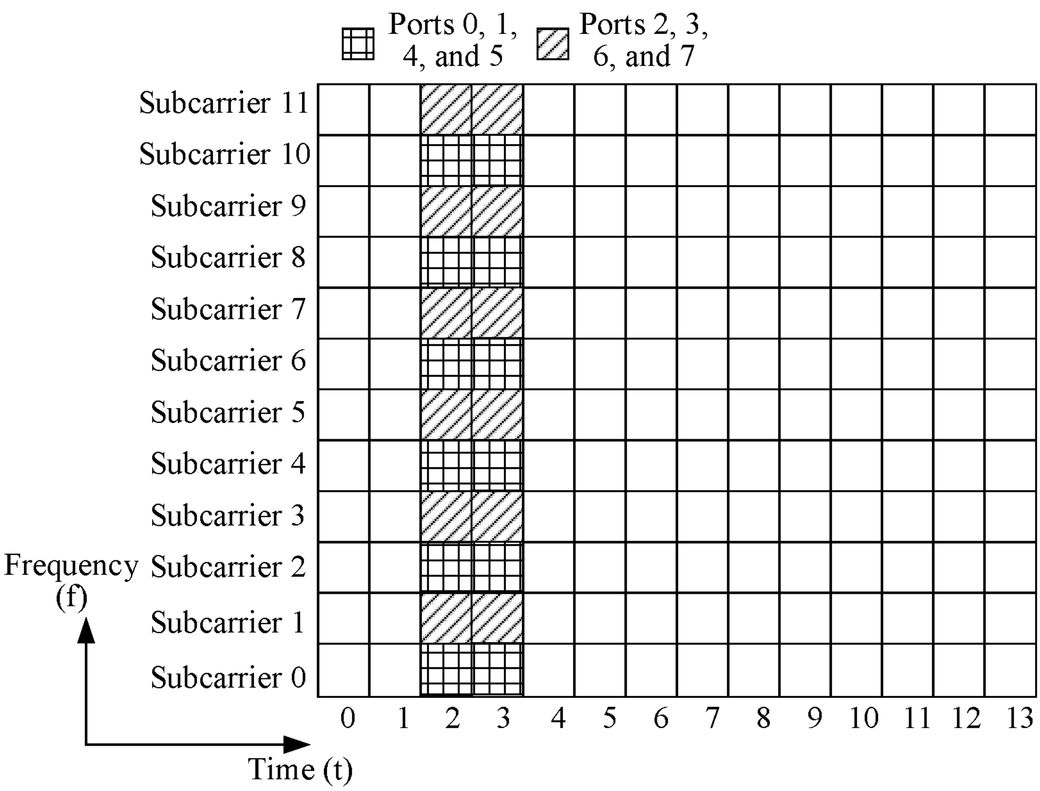
Ports 0, 1, 4, and 5
Ports 2, 3, 6, and 7
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
0 1 2 3 4 5 6 7 8 9 10 11 12 13
Time (t)

FIG. 2(b)

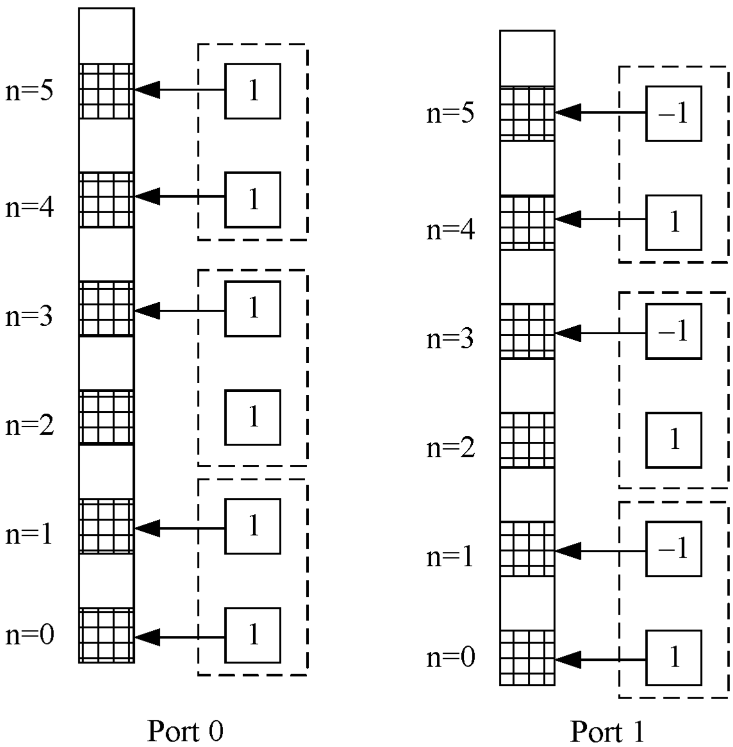
n=5
n=4
n=3
n=2
n=1
n=0
1
1
1
1
1
1
Port 0
n=5
n=4
n=3
n=2
n=1
n=0
−1
1
−1
1
−1
1
Port 1

FIG. 3(a)

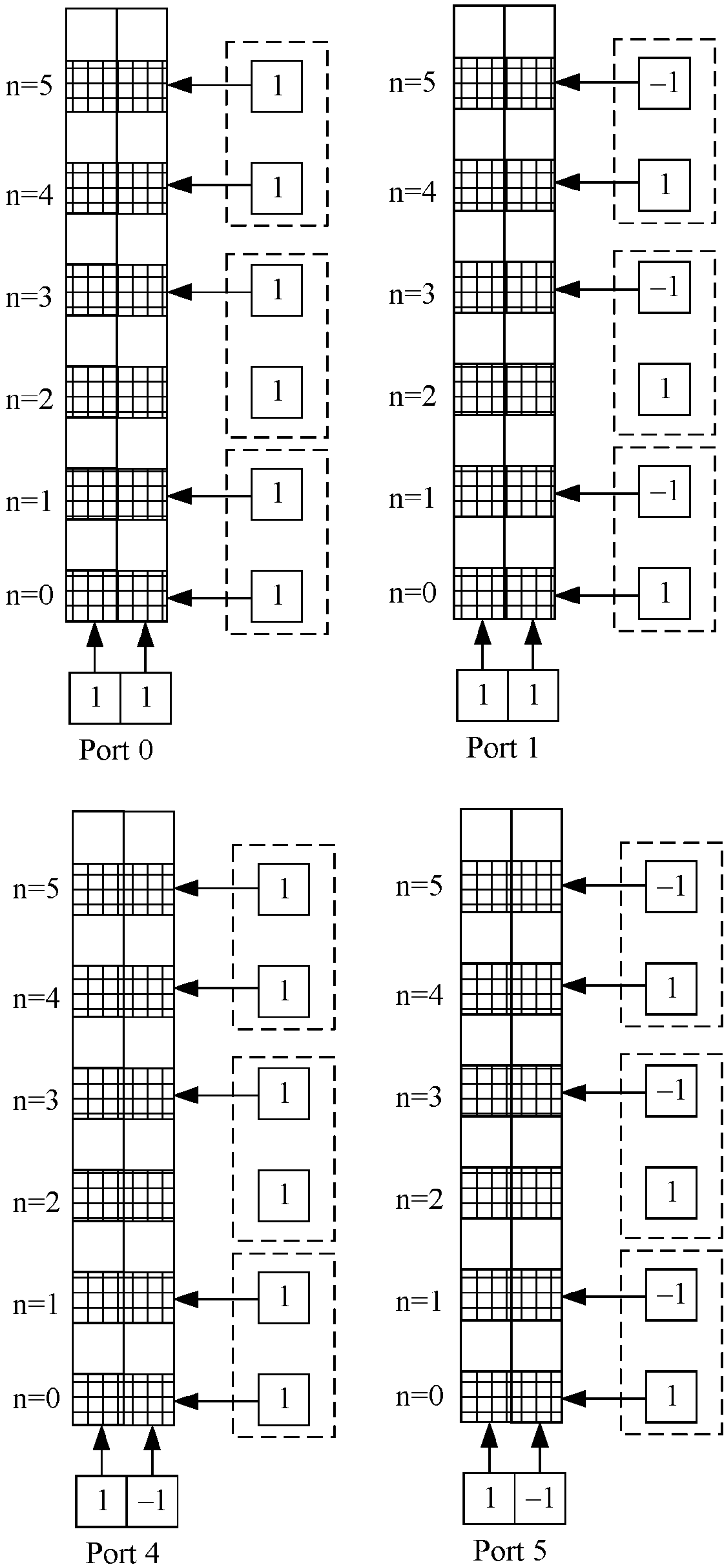
n=5
n=4
n=3
n=2
n=1
n=0
1
1
1
1
1
1
1 1
Port 0
n=5
n=4
n=3
n=2
n=1
n=0
–1
1
–1
1
–1
1
1 1
Port 1
n=5
n=4
n=3
n=2
n=1
n=0
1
1
1
1
1
1
1 –1
Port 4
n=5
n=4
n=3
n=2
n=1
n=0
–1
1
–1
1
–1
1
1 –1
Port 5

FIG. 3(b)

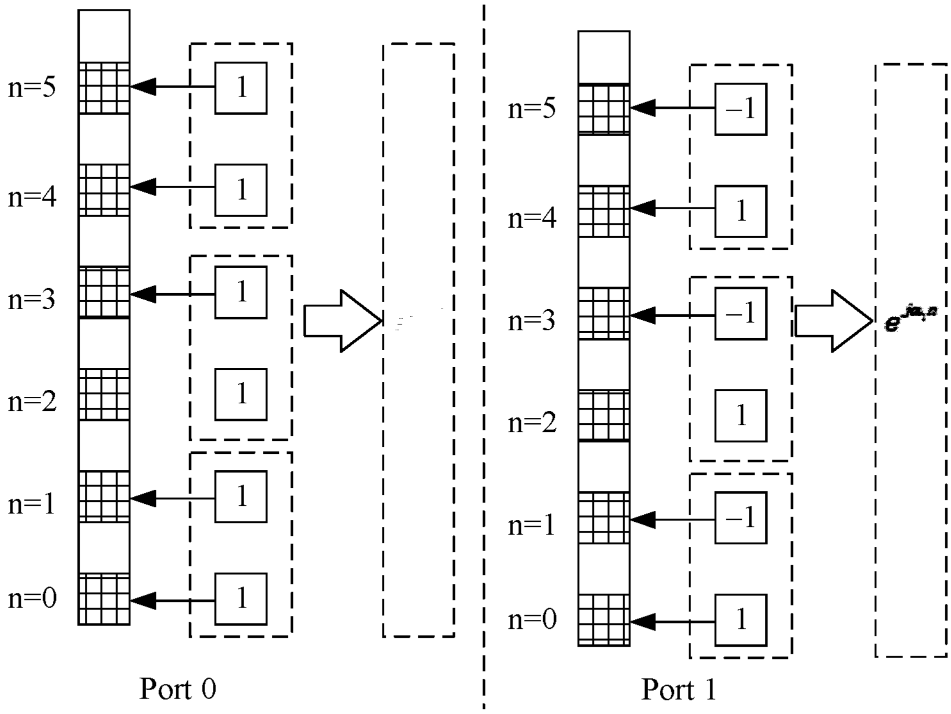
n=5
n=4
n=3
n=2
n=1
n=0
1
1
1
1
1
1
Port 0
n=5
n=4
n=3
n=2
n=1
n=0
−1
1
−1
1
−1
1
Port 1

FIG. 4

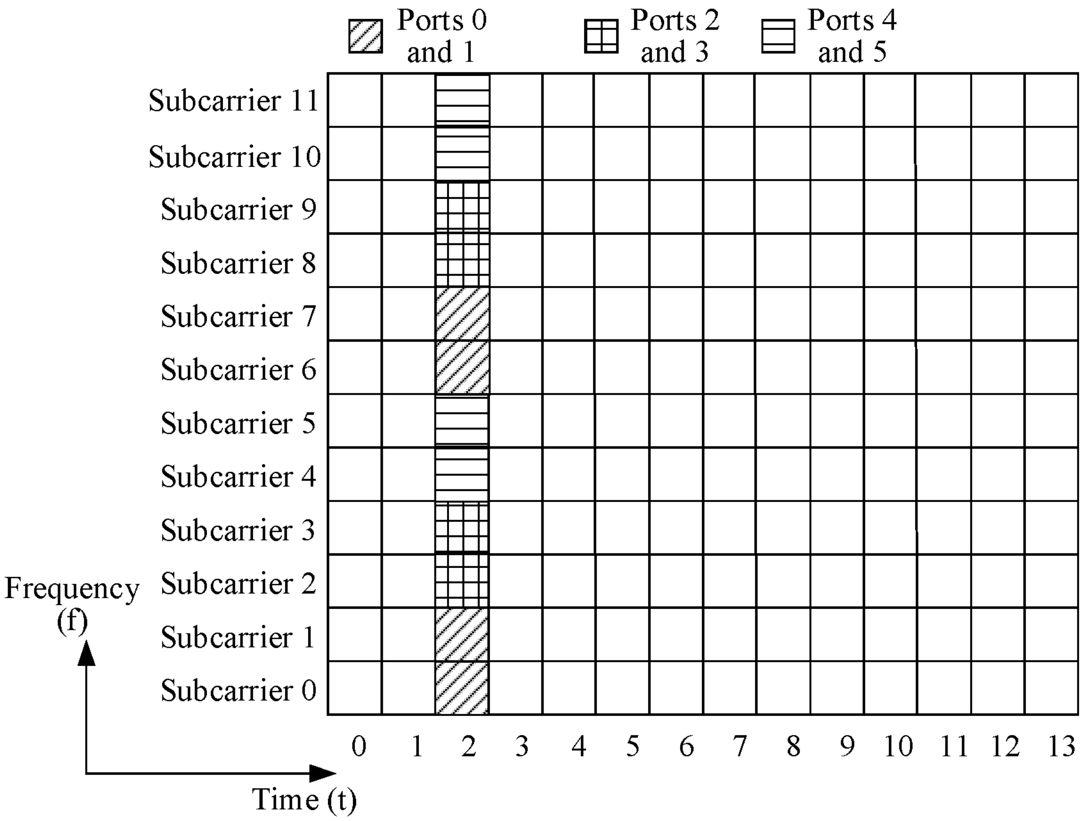
Ports 0 and 1
Ports 2 and 3
Ports 4 and 5
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
0 1 2 3 4 5 6 7 8 9 10 11 12 13
Time (t)

FIG. 5(a)

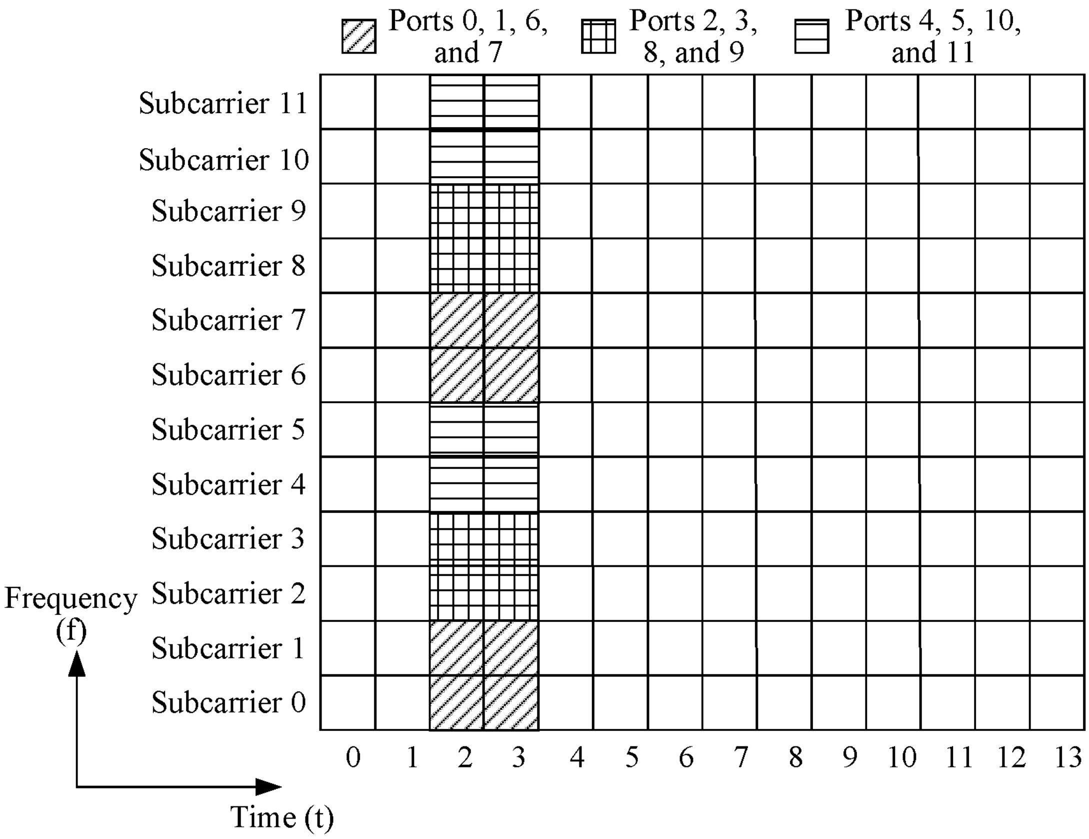
Ports 0, 1, 6, and 7
Ports 2, 3, 8, and 9
Ports 4, 5, 10, and 11
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
0 1 2 3 4 5 6 7 8 9 10 11 12 13
Time (t)

FIG. 5(b)

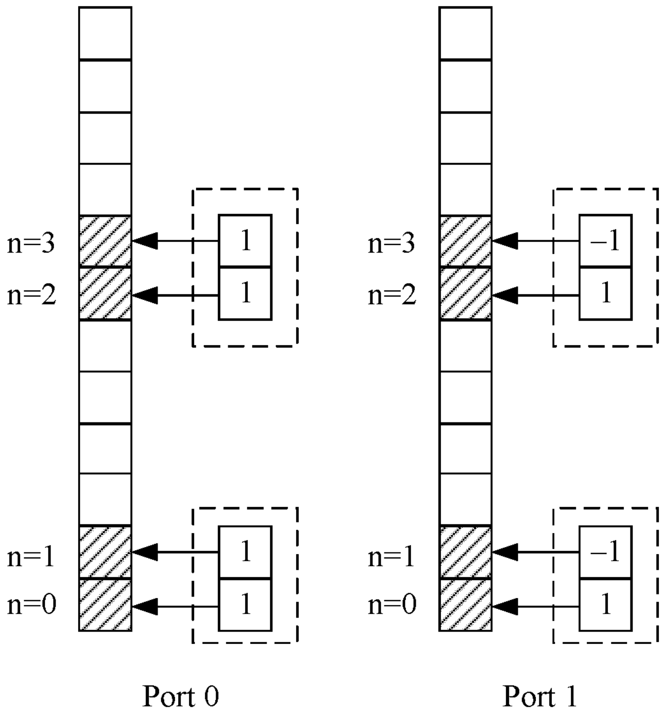
n=3
n=2
n=1
n=0
1
1
1
1
Port 0
n=3
n=2
n=1
n=0
−1
1
−1
1
Port 1

FIG. 6(a)

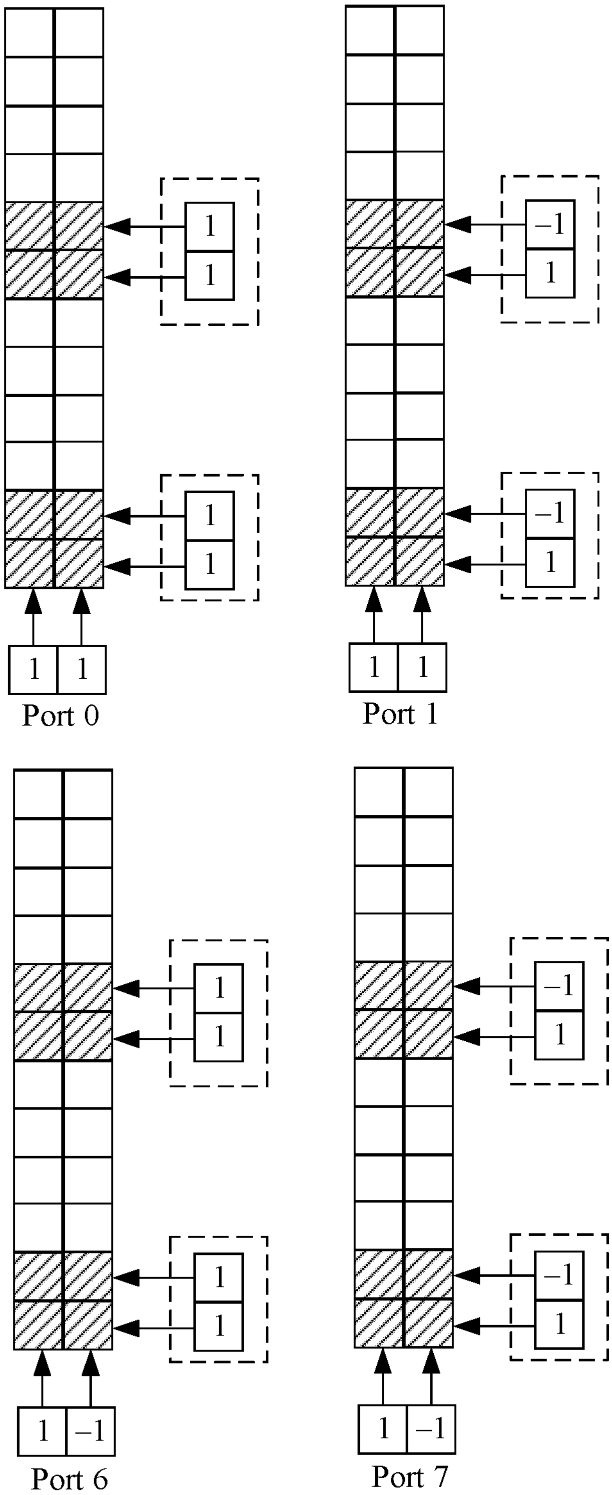


FIG. 6(b)

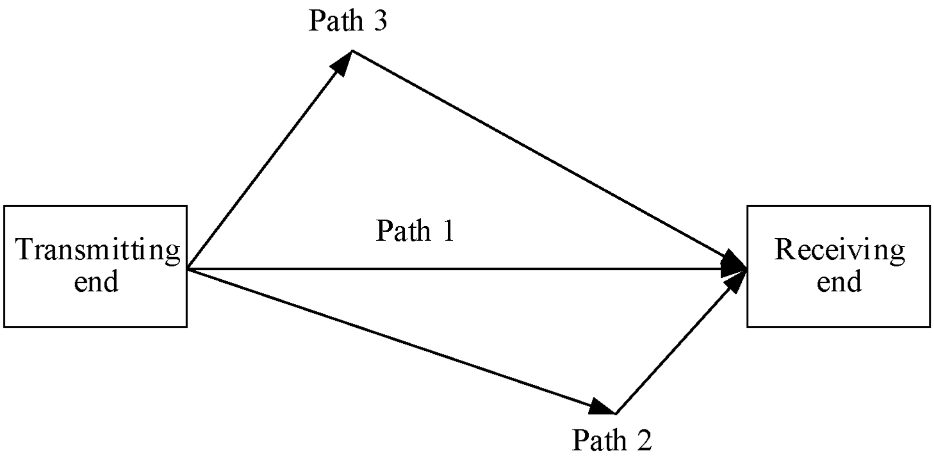


FIG. 7

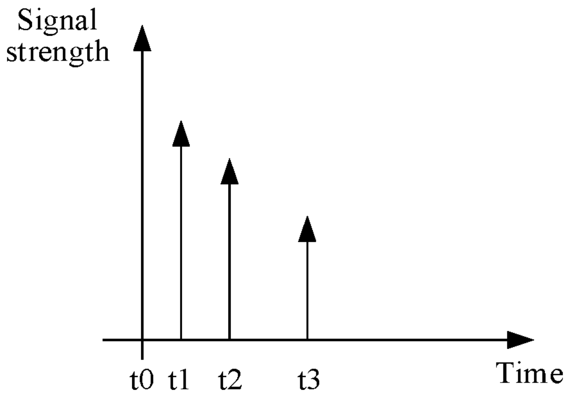


FIG. 8

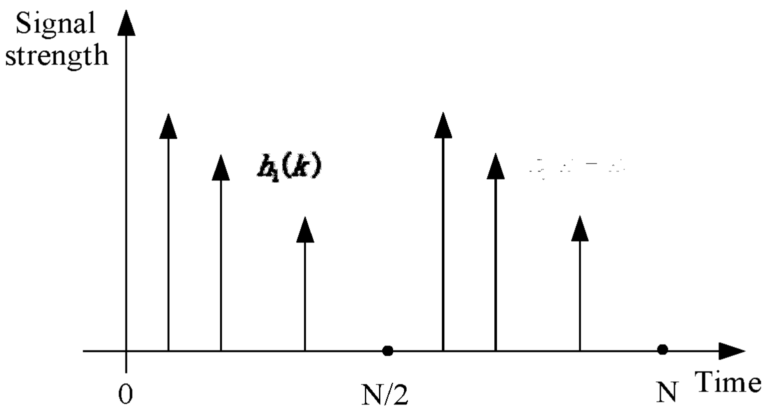


FIG. 9

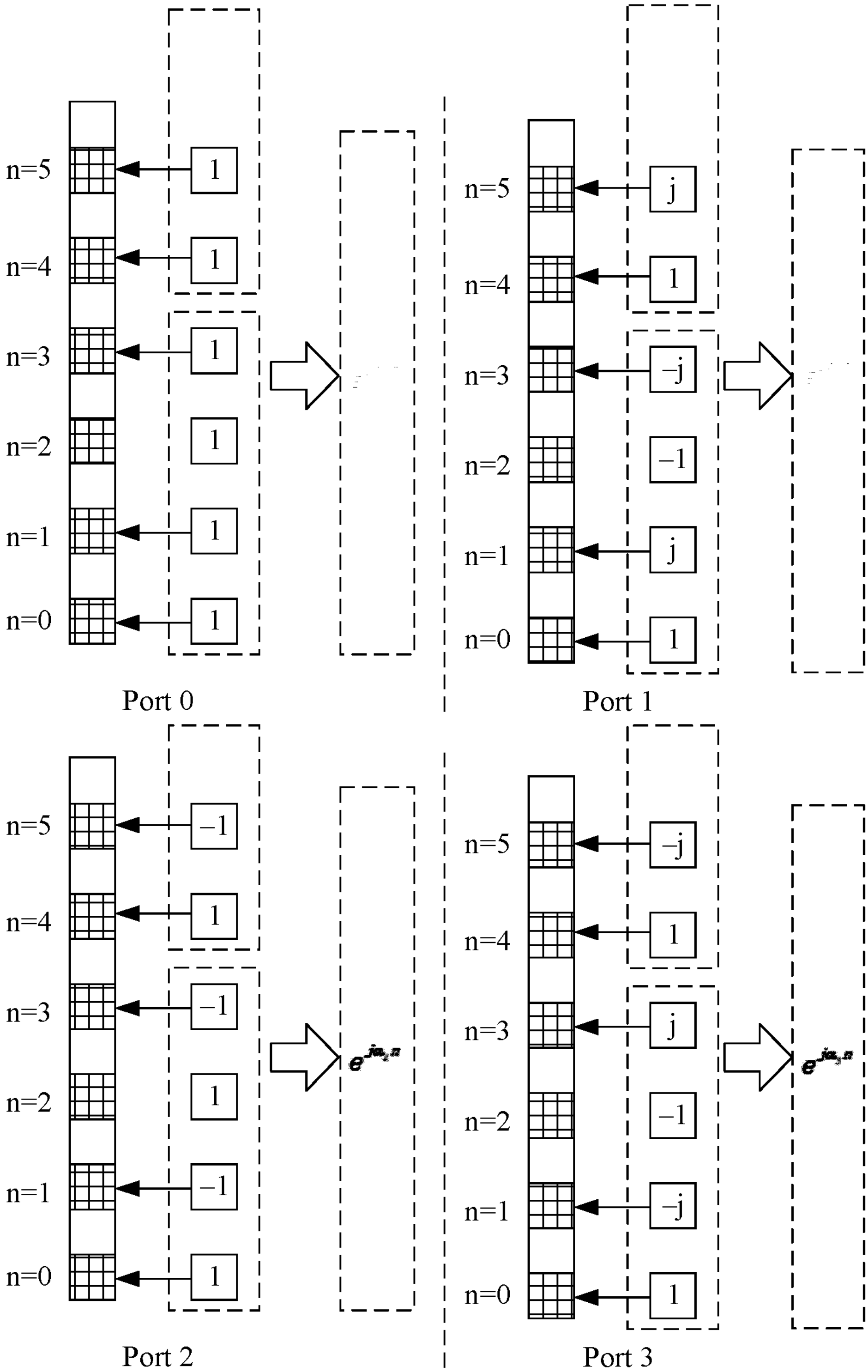
n=5
n=4
n=3
n=2
n=1
n=0
1
1
1
1
1
1
Port 0
n=5
n=4
n=3
n=2
n=1
n=0
j
1
−j
−1
j
1
Port 1
n=5
n=4
n=3
n=2
n=1
n=0
−1
1
−1
1
−1
1
Port 2
n=5
n=4
n=3
n=2
n=1
n=0
−j
1
j
−1
−j
1
Port 3

FIG. 10

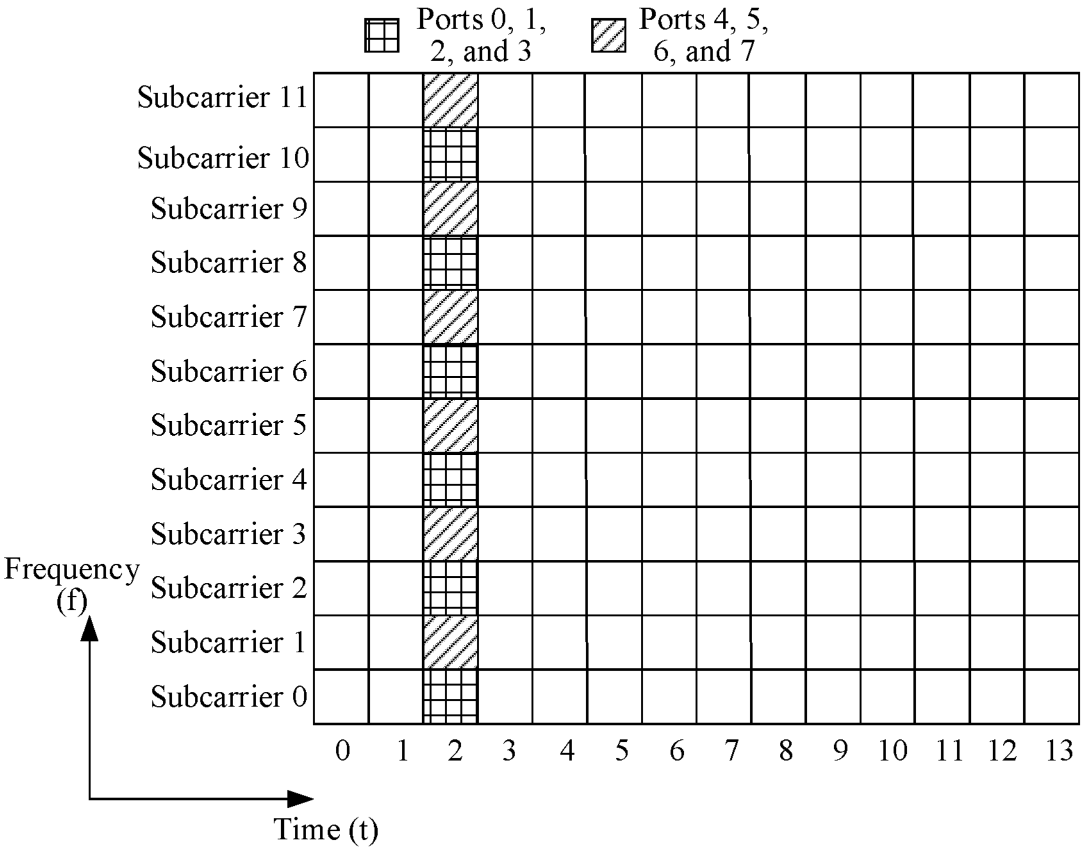
Ports 0, 1, 2, and 3
Ports 4, 5, 6, and 7
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
0 1 2 3 4 5 6 7 8 9 10 11 12 13
Time (t)

FIG. 11(a)

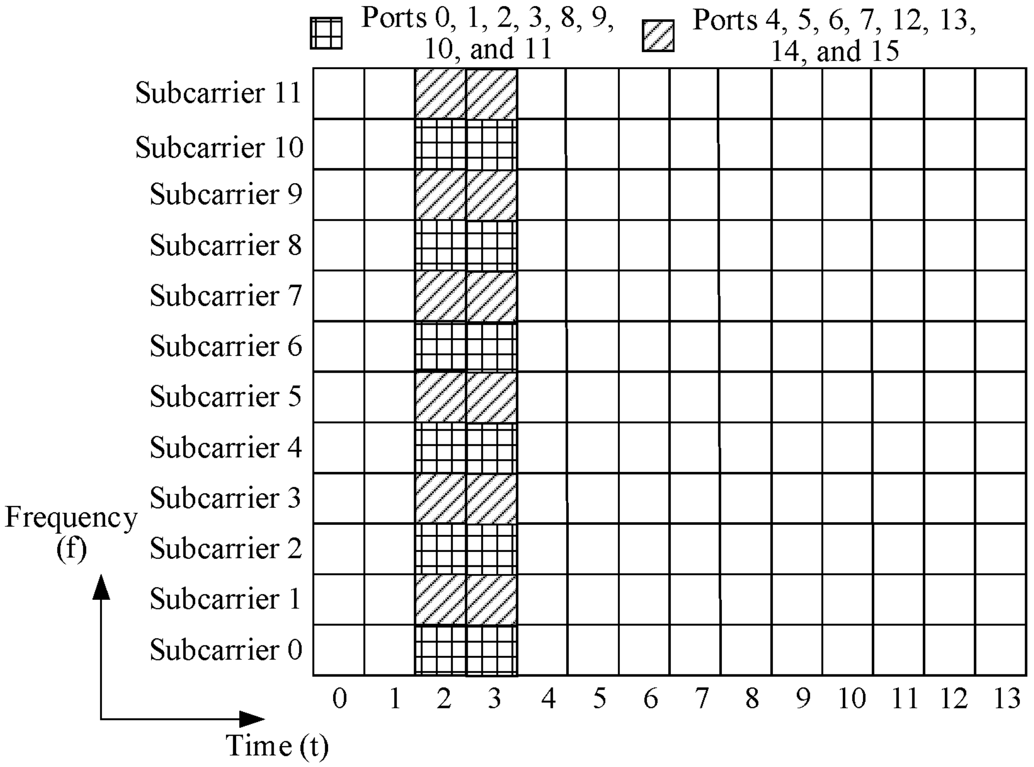


FIG. 11(b)

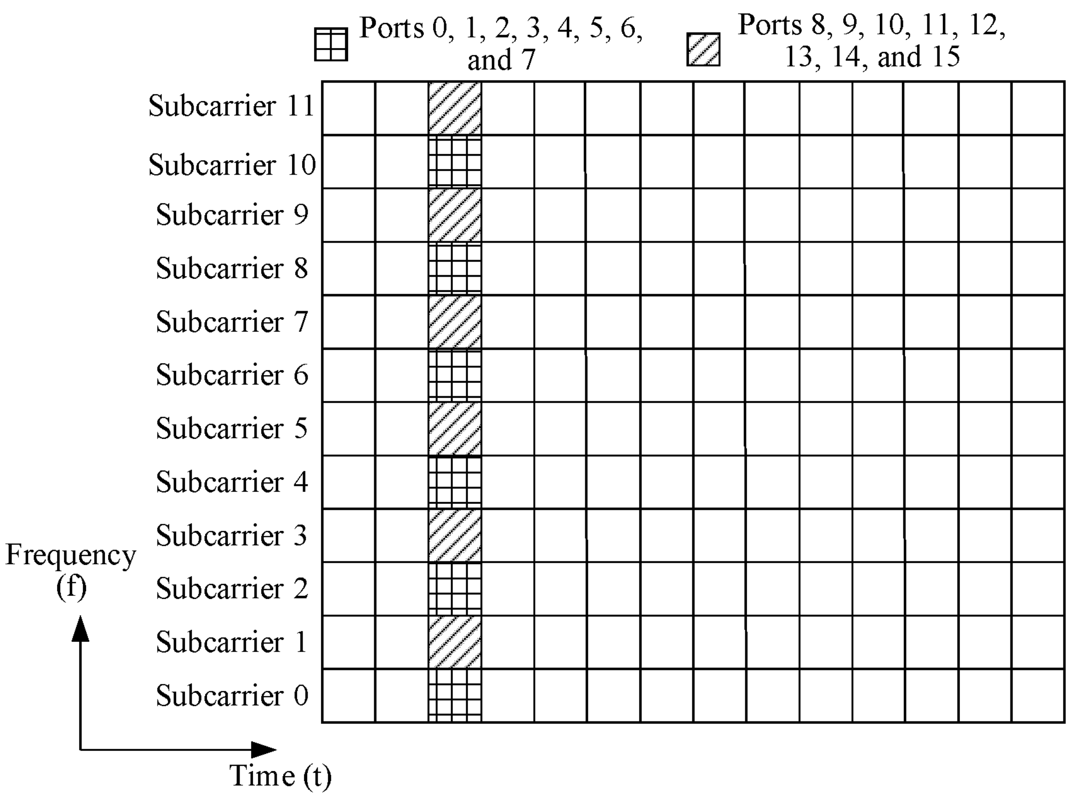


FIG. 11(c)

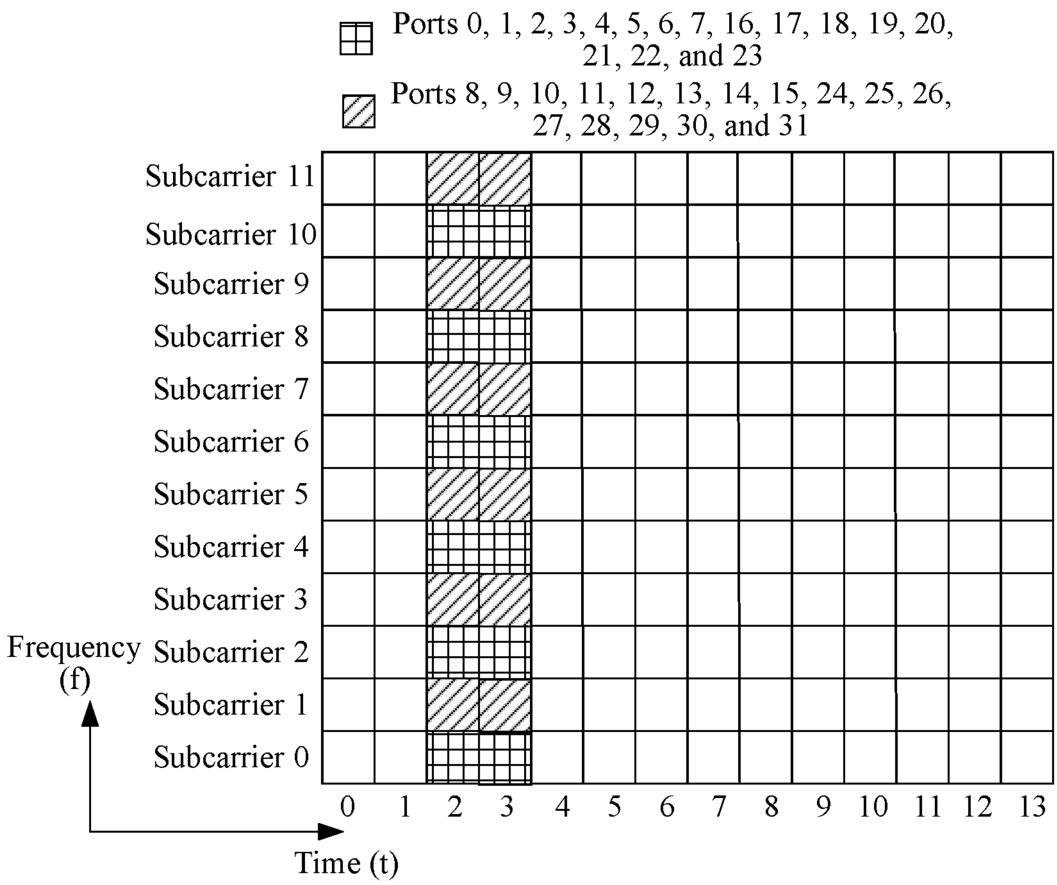
Ports 0, 1, 2, 3, 4, 5, 6, 7, 16, 17, 18, 19, 20, 21, 22, and 23
Ports 8, 9, 10, 11, 12, 13, 14, 15, 24, 25, 26, 27, 28, 29, 30, and 31
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
0 1 2 3 4 5 6 7 8 9 10 11 12 13
Time (t)

FIG. 11(d)

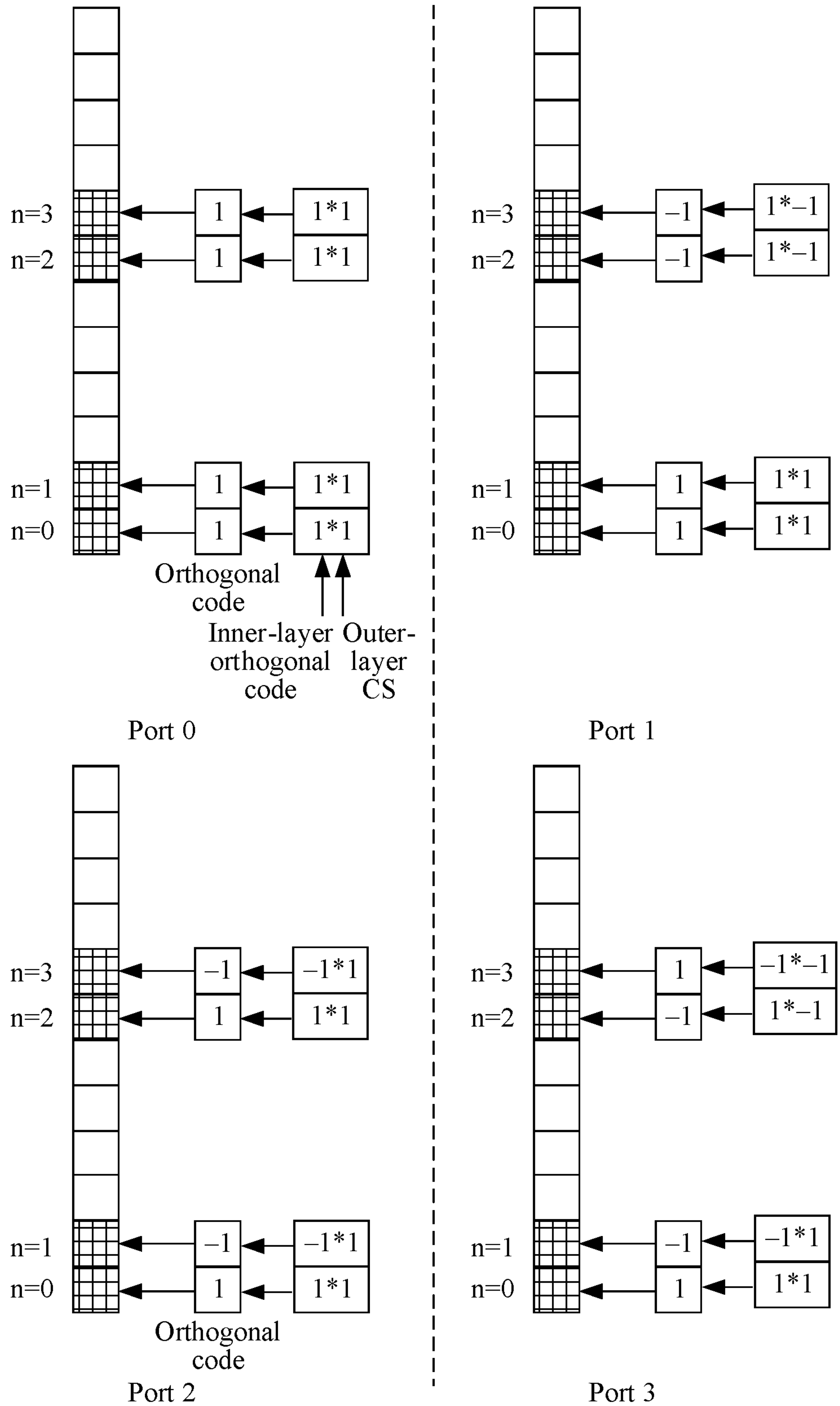
n=3
n=2
n=1
n=0
1
1
1
1
1*1
1*1
1*1
1*1
Orthogonal code
Inner-layer orthogonal code
Outer-layer CS
Port 0
–1
–1
1
1
1*–1
1*–1
1*1
1*1
Port 1
–1
1
–1
1
–1*1
1*1
–1*1
1*1
Orthogonal code
Port 2
1
–1
–1
1
–1*–1
1*–1
–1*1
1*1
Port 3

FIG. 12

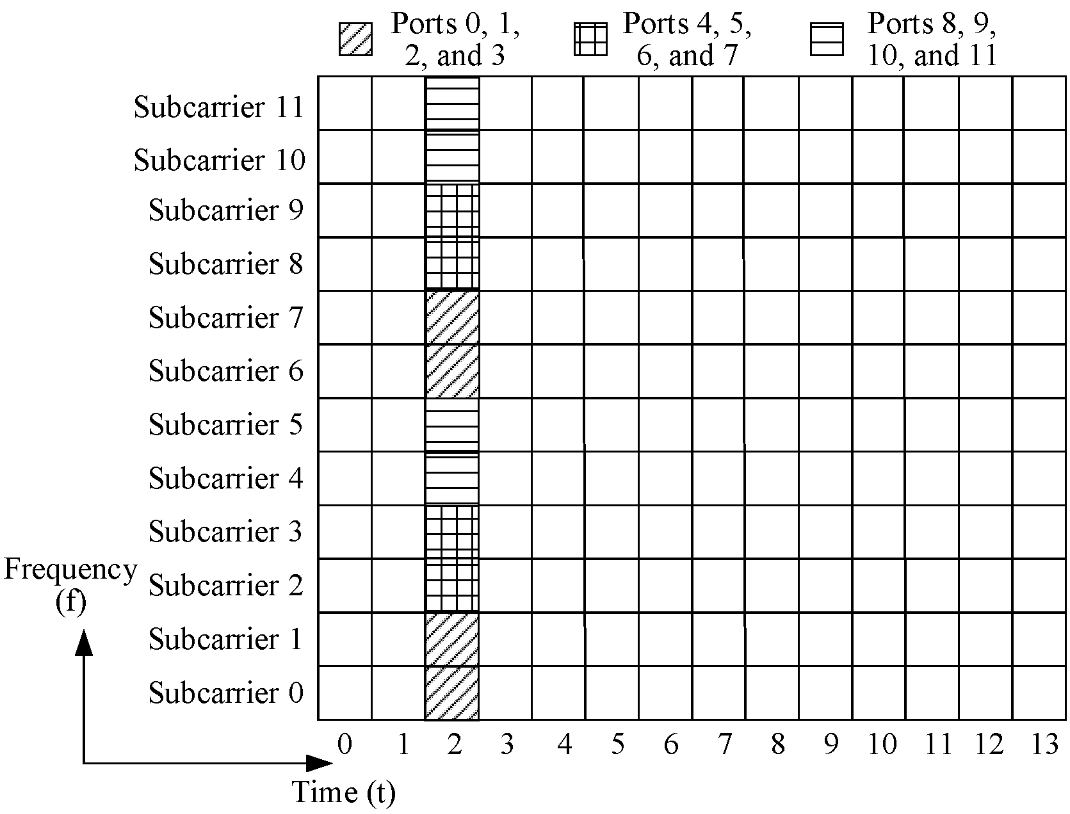
Ports 0, 1, 2, and 3
Ports 4, 5, 6, and 7
Ports 8, 9, 10, and 11
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
0 1 2 3 4 5 6 7 8 9 10 11 12 13
Time (t)

FIG. 13(a)

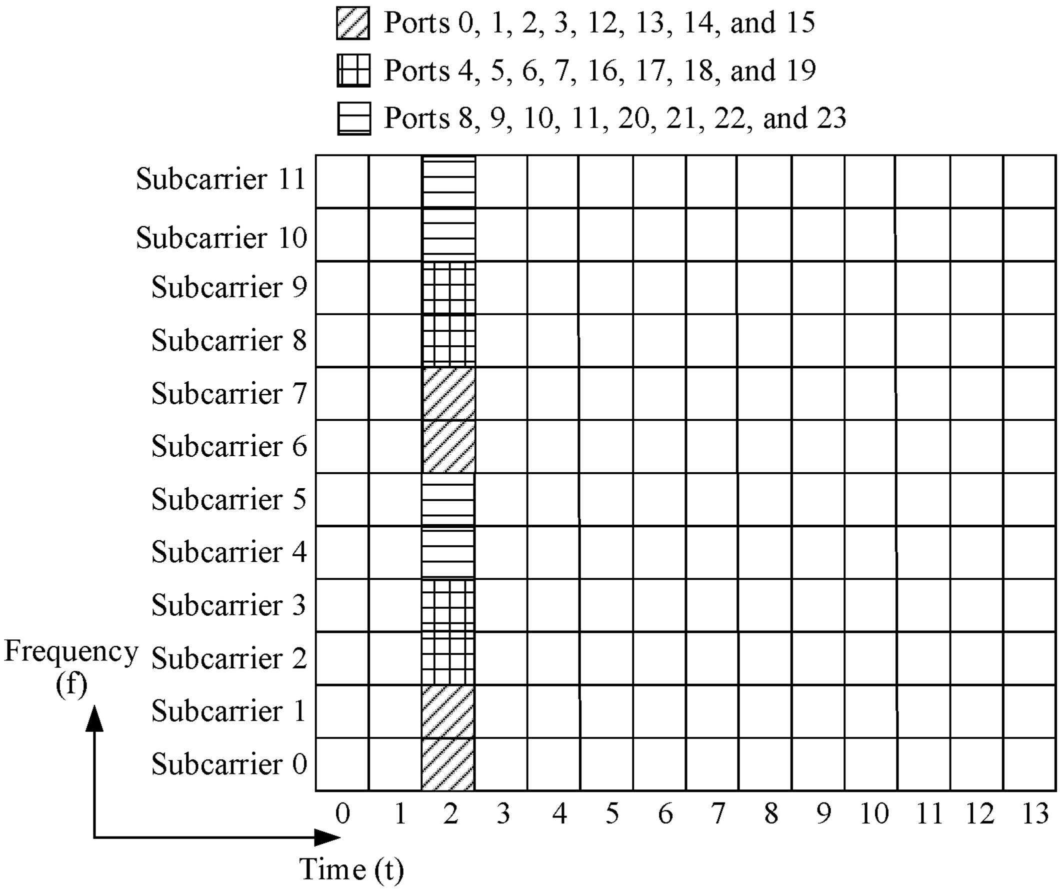
Ports 0, 1, 2, 3, 12, 13, 14, and 15
Ports 4, 5, 6, 7, 16, 17, 18, and 19
Ports 8, 9, 10, 11, 20, 21, 22, and 23
Subcarrier 11
Subcarrier 10
Subcarrier 9
Subcarrier 8
Subcarrier 7
Subcarrier 6
Subcarrier 5
Subcarrier 4
Subcarrier 3
Subcarrier 2
Subcarrier 1
Subcarrier 0
Frequency (f)
0 1 2 3 4 5 6 7 8 9 10 11 12 13
Time (t)

FIG. 13(b)

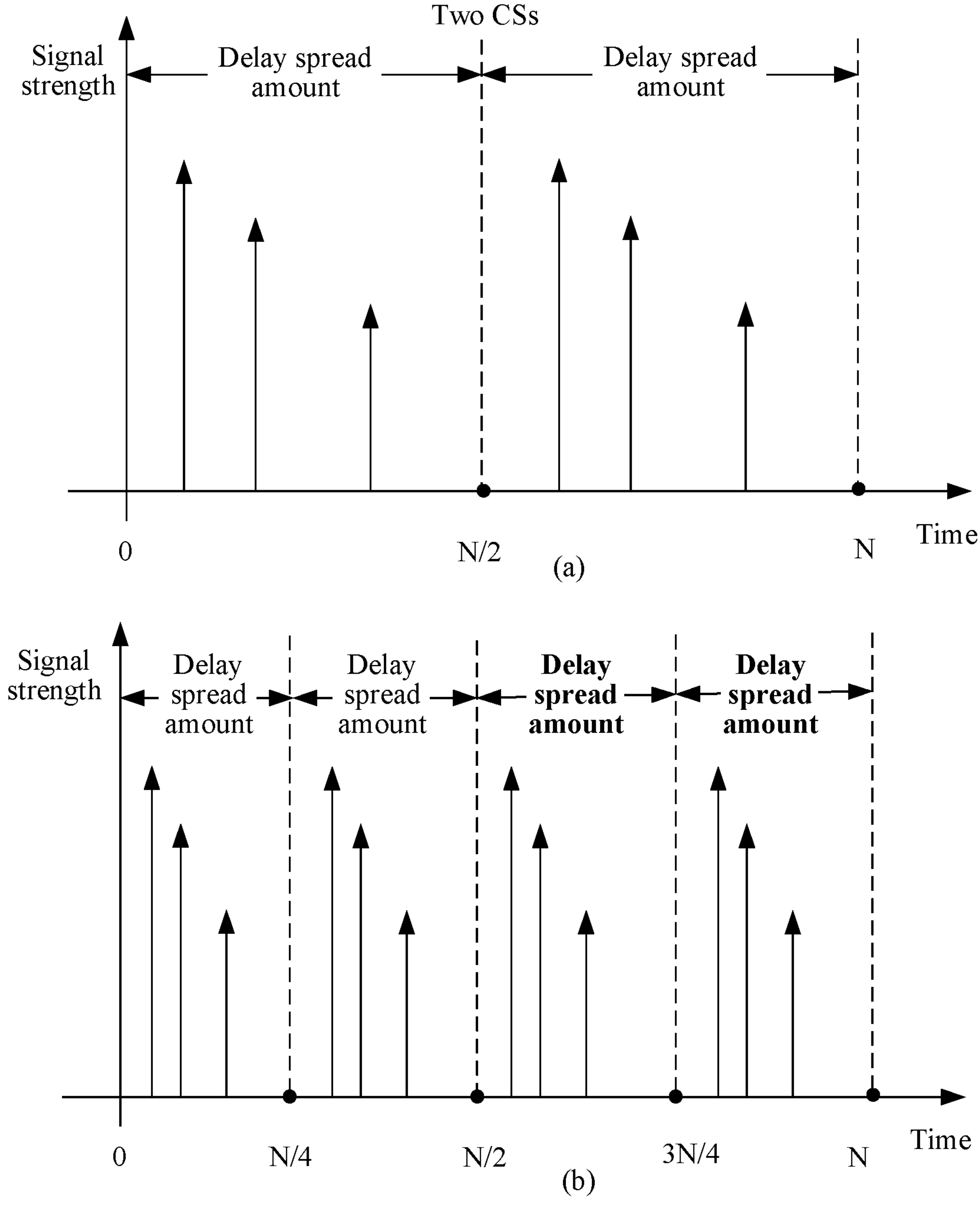
Two CSs
Signal strength
Delay spread amount
Delay spread amount
0
N/2
N
Time
(a)
Signal strength
Delay spread amount
Delay spread amount
Delay spread amount
Delay spread amount
0
N/4
N/2
3N/4
N
Time
(b)

FIG. 14

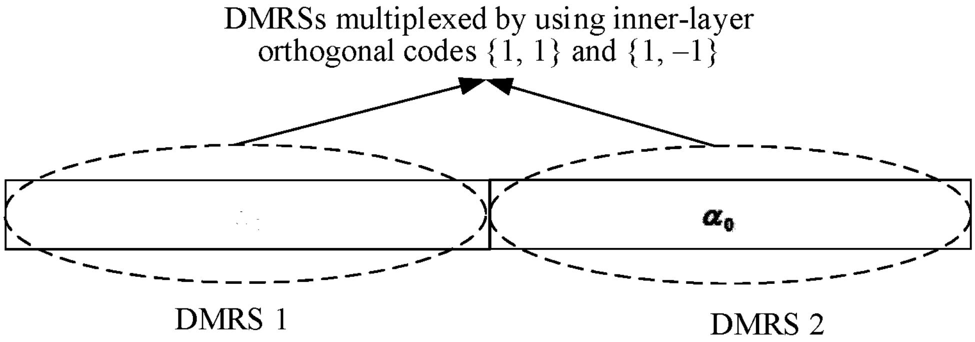


FIG. 15(a)

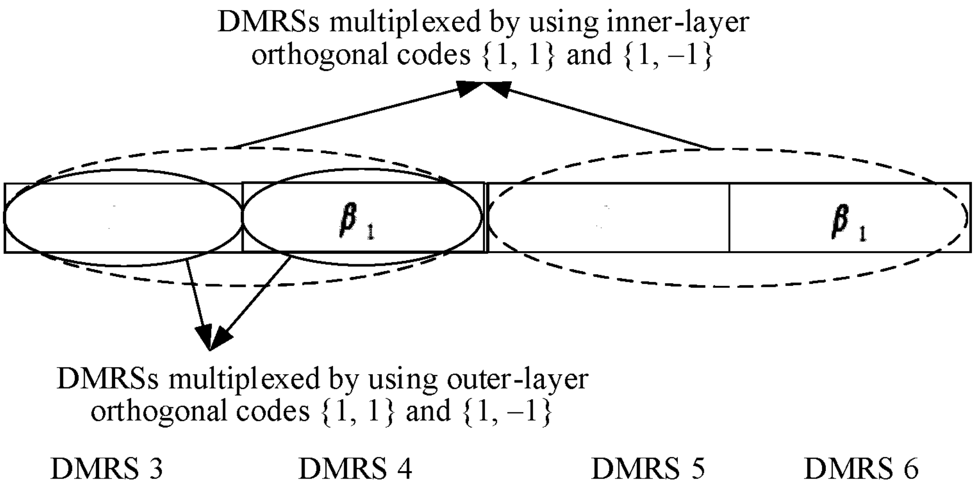


FIG. 15(b)

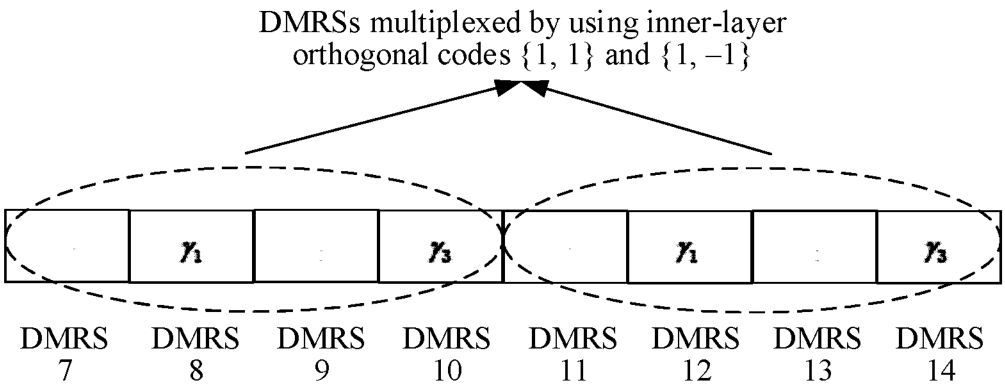


FIG. 15(c)

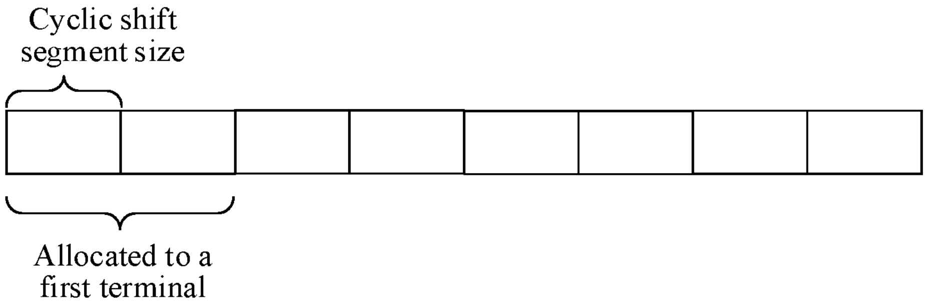


FIG. 16(a)

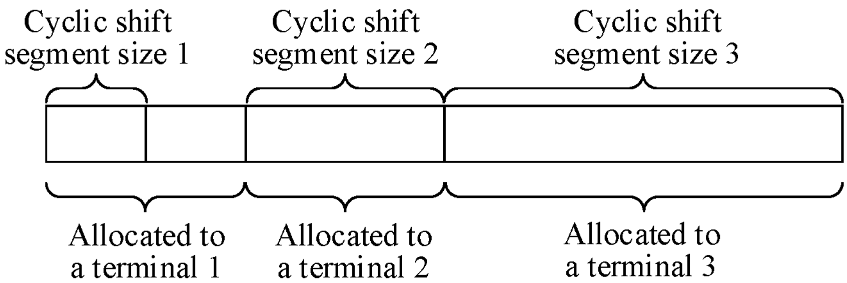


FIG. 16(b)

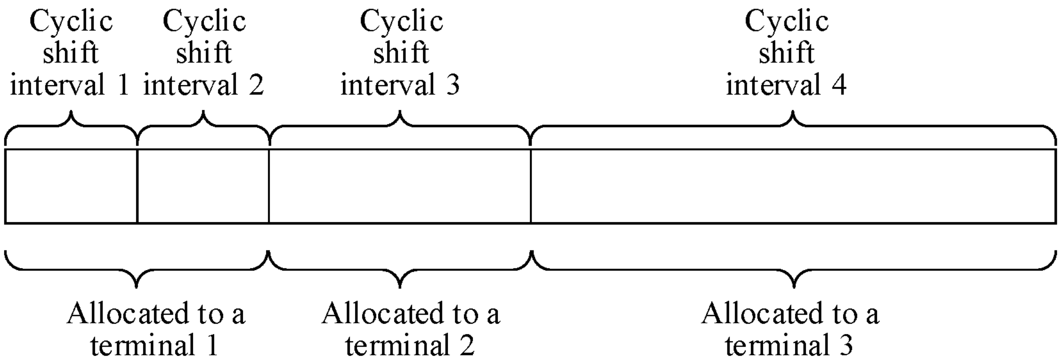


FIG. 16(c)

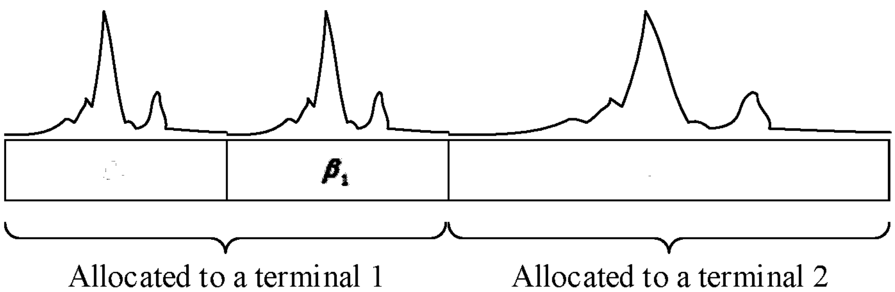


FIG. 17(a)

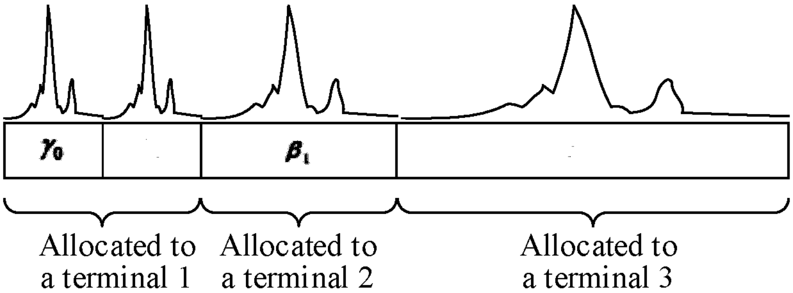


FIG. 17(b)

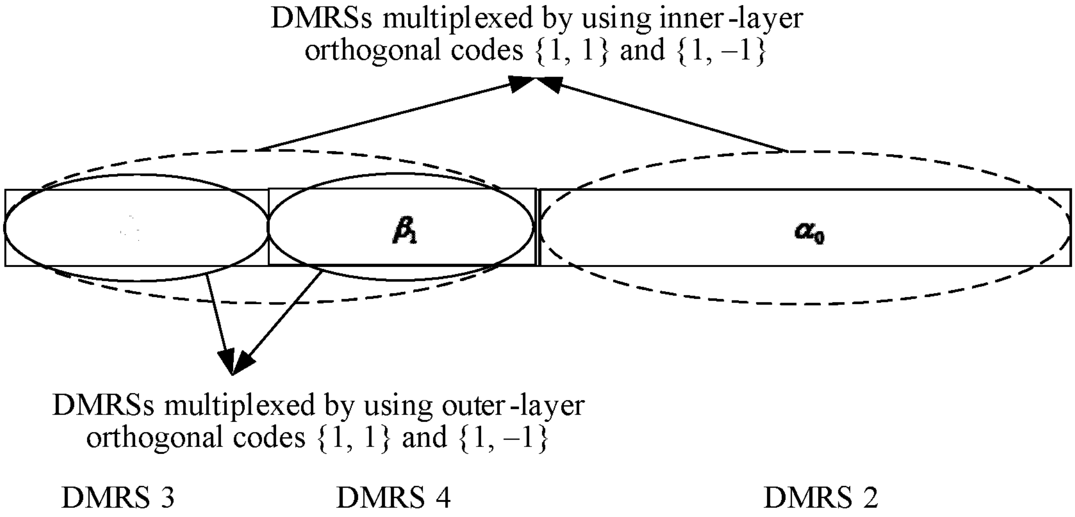


FIG. 18(a)

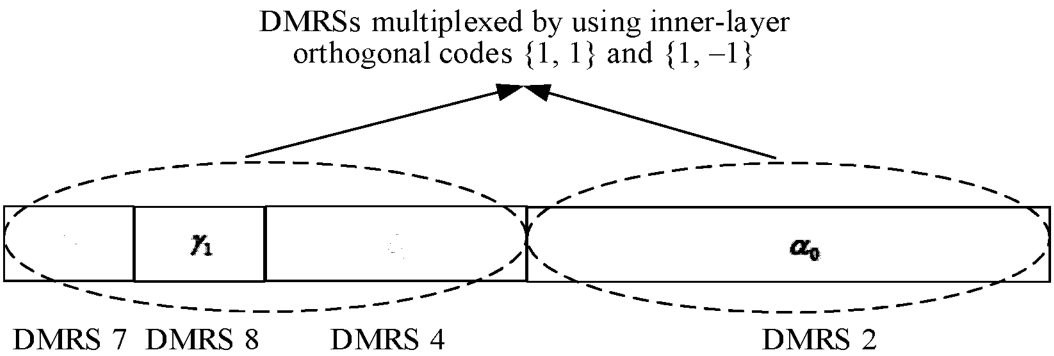


FIG. 18(b)

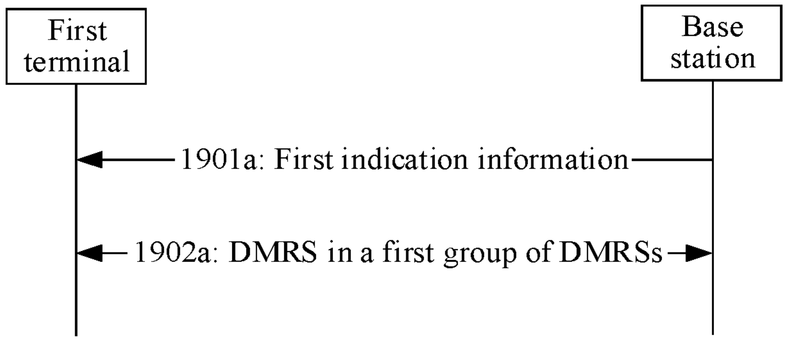


FIG. 19(a)

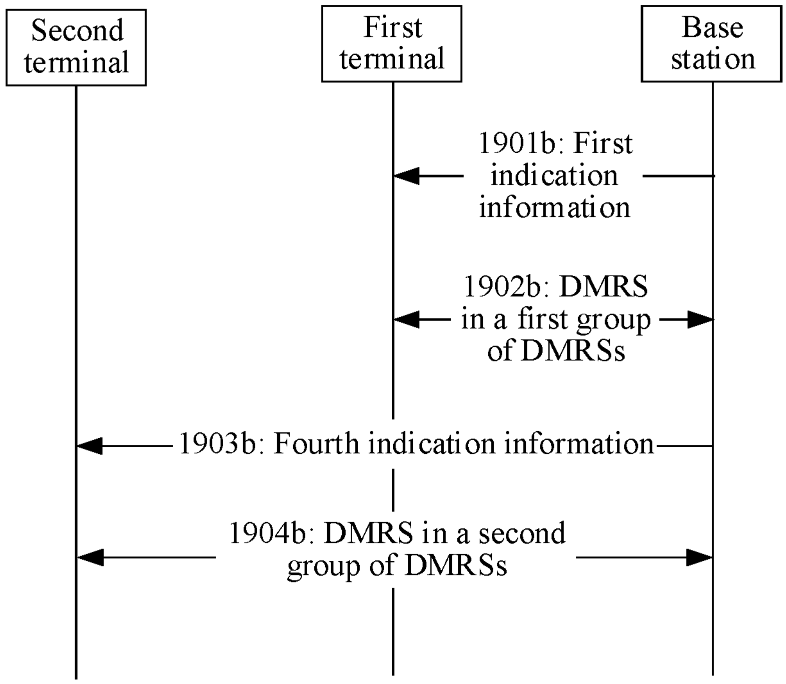


FIG. 19(b)

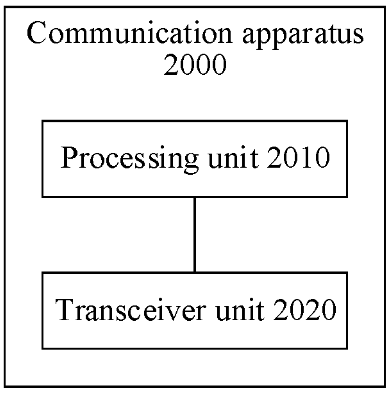


FIG. 20

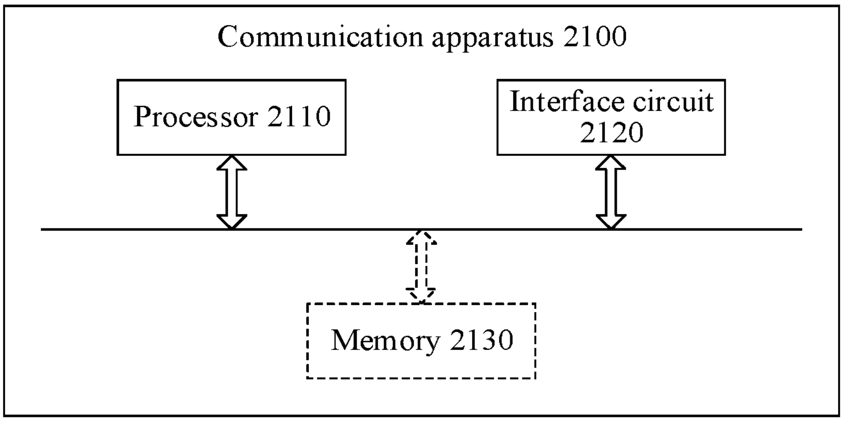
Communication apparatus 2100
Processor 2110
Interface circuit 2120
Memory 2130

FIG. 21

**INTERNATIONAL SEARCH REPORT**

International application No.
**PCT/CN2022/104676**

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04L,H04W

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 最小, 循环移位, 循环位移, 差值, 间隔, 参考信号, 时延, 定时, DMRS, minimum, cyclic, shift, gap, distance, reference, signal, delay

**C. DOCUMENTS CONSIDERED TO BE RELEVANT**

| Category* | Citation of document, with indication, where appropriate, of the relevant passages | Relevant to claim No. |
|---|---|---|
| X | CN 111866909 A (HUAWEI TECHNOLOGIES CO., LTD.) 30 October 2020 (2020-10-30)<br>description, paragraphs [0236]-[0279] | 1-32 |
| A | CN 110324896 A (TELECOMMUNICATIONS TECHNOLOGY RESEARCH INSTITUTE CO., LTD.) 11 October 2019 (2019-10-11)<br>entire document | 1-32 |
| A | CN 110677226 A (RESEARCH INSTITUTE OF CHINA MOBILE COMMUNICATIONS CORPORATION et al.) 10 January 2020 (2020-01-10)<br>entire document | 1-32 |
| A | ERICSSON. "UL DMRS Design for sTTI"<br>*3GPP TSG-RAN WG1 Meeting #88, R1-1703268,* 17 February 2017 (2017-02-17),<br>entire document | 1-32 |
| A | US 2020266908 A1 (SAMSUNG ELECTRONICS CO., LTD.) 20 August 2020 (2020-08-20)<br>entire document | 1-32 |

☐ Further documents are listed in the continuation of Box C.

☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **14 September 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2022/104676**

| Patent document cited in search report | | | Publication date (day/month/year) | Patent family member(s) | | | Publication date (day/month/year) |
|---|---|---|---|---|---|---|---|
| CN | 111866909 | A | 30 October 2020 | WO | 2020221214 | A1 | 05 November 2020 |
| | | | | EP | 3952401 | A1 | 09 February 2022 |
| | | | | US | 2022053500 | A1 | 17 February 2022 |
| CN | 110324896 | A | 11 October 2019 | WO | 2019184484 | A1 | 03 October 2019 |
| CN | 110677226 | A | 10 January 2020 | | None | | |
| US | 2020266908 | A1 | 20 August 2020 | KR | 20210116557 | A | 27 September 2021 |
| | | | | EP | 3915218 | A1 | 01 December 2021 |
| | | | | WO | 2020167019 | A1 | 20 August 2020 |
| | | | | CN | 111565401 | A | 21 August 2020 |
| | | | | CN | 112087805 | A | 15 December 2020 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202110896815